# EUROPEAN PATENT APPLICATION

(11) **EP 4 681 522 A1**
(43) Date of publication of application: **21.01.2026**
(21) Application number: 25182868.7
(22) Date of filing: 16.06.2025
(51) Int. Cl.: A01D 34/00, A01D 34/68, A01D 69/10

(54) **OUTDOOR TRAVELING DEVICE**

(30) Priority: 18.07.2024 CN 202421720806 U; 18.07.2024 CN 202410971309; 18.07.2024 CN 202410971978; 18.07.2024 CN 202410968829; 18.07.2024 CN 202410971465; 18.07.2024 CN 202410971966; 18.07.2024 CN 202410973206; 18.07.2024 CN 202410968652
(71) Applicant: Nanjing Chervon Industry Co., Ltd., Nanjing, Jiangsu 211106 (CN)
(72) Inventor: LI, Tonghao, Nanjing, Jiangsu 211106 (CN); WANG, Zhen, Nanjing, Jiangsu 211106 (CN); WANG, Shoubin, Nanjing, Jiangsu 211106 (CN); SUN, Jiawei, Nanjing, Jiangsu 211106 (CN); LI, Chenfei, Nanjing, Jiangsu 211106 (CN); WANG, Lei, Nanjing, Jiangsu 211106 (CN); PAN, Li, Nanjing, Jiangsu 211106 (CN); MENG, Chao, Nanjing, Jiangsu 211106 (CN); TANG, Zichun, Nanjing, Jiangsu 211106 (CN)
(74) Representative: Sun, Yiming

(57) **Abstract**

An outdoor traveling device includes a controller configured to control a parking brake mechanism to switch between a braking state for braking a walking mechanism and an unlocking state for releasing the walking mechanism from braking. The controller is further configured to, when receiving a braking instruction, control the parking brake mechanism to enter the braking state and in the braking state, acquire a current-related parameter of a walking motor and output a control signal for reversely rotating the walking motor to a driver circuit based on the current-related parameter to control the walking motor.

## Description

### TECHNICAL FIELD

The present application relates to an outdoor garden power tool and, for example, to an outdoor traveling device.

### BACKGROUND

Outdoor traveling devices are used for outdoor operation, such as a utility vehicle, an agricultural machinery vehicle, a utility terrain vehicle, a dune buggy, a golf cart, and a mower. In the related art, parking is usually implemented in a mechanical braking manner in which a brake is driven through an operation of a user so that a vehicle comes to a complete stop. On a ramp, the user needs to drive the brake all the time to prevent the vehicle from rolling.

This part provides background information related to the present application, and the background information is not necessarily the existing art.

### SUMMARY

An object of the present application is to solve or at least alleviate part or all of the preceding problems. Therefore, an object of the present application is to provide an outdoor traveling device.

To achieve the preceding object, the present application adopts the technical solutions below.

An outdoor traveling device includes a walking mechanism including walking wheels and a walking motor for driving a walking wheel of the walking wheels to rotate, where the walking motor includes an output shaft; a reduction mechanism configured to convert and transmit torque of the walking motor to the walking wheel; a parking brake mechanism configured to brake rotation of the walking mechanism, where at least part of the parking brake mechanism is located between the walking motor and the reduction mechanism in an extension direction of the output shaft; a controller configured to control the parking brake mechanism to switch between a braking state for braking the walking mechanism and an unlocking state for releasing the walking mechanism from braking; and a power supply mechanism for supplying power to at least the walking mechanism and the parking brake mechanism. The controller is further configured to, when receiving a braking instruction, control the parking brake mechanism to enter the braking state and in the braking state, acquire a current-related parameter of the walking motor and output a control signal for reversely rotating the walking motor to a driver circuit based on the current-related parameter to control the walking motor.

In some examples, the current-related parameter includes a phase current of the walking motor, and the control signal for reversely rotating the walking motor is output when the phase current is greater than a set current threshold.

In some examples, the current threshold is greater than or equal to 50 A.

In some examples, the control signal for reversely rotating the walking motor is a fixed signal or a signal dynamically set based on the phase current.

In some examples, the parking brake mechanism includes an electromagnetic brake which enters the braking state when de-energized.

In some examples, the electromagnetic brake is disposed at an end of the output shaft facing the walking wheel.

In some examples, the motor includes a first end cover disposed on a side of a stator, and the reduction mechanism and the first end cover enclose a substantially sealed accommodation space for accommodating the electromagnetic brake.

In some examples, the controller is configured to, when receiving the braking instruction, control the driver circuit to short-circuit three phases of the walking motor.

In some examples, the braking instruction is output from an operation unit operated by a user.

In some examples, the braking instruction is output from the controller when the controller determines that the outdoor traveling device is faulty.

In some examples, a detection assembly is further included, which is configured to detect a phase current of the walking motor and includes a current sensing resistor.

In some examples, the walking mechanism includes a first walking mechanism and a second walking mechanism, the parking brake mechanism includes a first parking brake mechanism and a second parking brake mechanism, the first parking brake mechanism is configured to brake rotation of the first walking mechanism, and the second parking brake mechanism is configured to brake rotation of the second walking mechanism.

In some examples, in the braking state, current-related parameters of walking motors in the first walking mechanism and the second walking mechanism are acquired, and control signals for reversely rotating both the walking motors are output to driver circuits based on any one of the current-related parameters to control the walking motors.

In some examples, a human-machine interaction mechanism is further included, which includes a display device configured to provide feedback, that is, information prompts, for a user. When the current-related parameter of the motor is abnormal in the braking state, the display device displays an anomaly alarm prompt that a braking function of the parking brake mechanism is abnormal.

In some examples, the outdoor traveling device includes an electric mower or a utility terrain vehicle.

An outdoor traveling device includes a walking mechanism including walking wheels and a walking motor for driving a walking wheel of the walking wheels to rotate; a parking brake mechanism configured to brake rotation of the walking mechanism; a controller configured to control the parking brake mechanism to switch between a braking state for braking the walking mechanism and an unlocking state for releasing the walking mechanism from braking; and a power supply mechanism for supplying power to at least the walking mechanism and the parking brake mechanism. The controller is further configured to, when receiving a braking instruction, control the parking brake mechanism to enter the braking state and in the braking state, acquire a current-related parameter of the walking motor and output a control signal for reversely rotating the walking motor to a driver circuit based on the current-related parameter to control the walking motor.

An outdoor traveling device includes a walking mechanism including walking wheels and a walking motor for driving a walking wheel of the walking wheels to rotate, where the walking motor includes an output shaft; a reduction mechanism configured to convert and transmit torque of the walking motor to the walking wheel; and a parking brake mechanism configured to brake rotation of the walking mechanism, where at least part of the parking brake mechanism is located between the walking motor and the reduction mechanism in an extension direction of the output shaft.

In some examples, the parking brake mechanism includes an electromagnetic brake.

In some examples, the electromagnetic brake is disposed at an end of the output shaft facing the walking wheel.

In some examples, the reduction mechanism includes gears and a gearbox for accommodating the gears, and the electromagnetic brake is at least partially mounted on the gearbox.

In some examples, a manual release assembly is further included, which is operated by a user to release the output shaft from braking of the electromagnetic brake or to drive the electromagnetic brake to brake the output shaft.

In some examples, the reduction mechanism includes gears and a gearbox for accommodating the gears, and the manual release assembly is at least partially mounted on the gearbox.

In some examples, the manual release assembly includes a handle for the user to operate, and at least part of the handle extends out of the gearbox and is exposed to the outside of a vehicle body.

In some examples, the electromagnetic brake includes an electromagnet that generates an electromagnetic force after energized; a pressure plate configured with a first position away from the electromagnet and a second position to which the pressure plate is driven by the electromagnet towards the electromagnet; and a brake pad that brakes the output shaft when the pressure plate is at the first position. The manual release assembly is connected to the pressure plate and drives the pressure plate to move between the first position and the second position.

In some examples, a controller is further included, where the controller controls the electromagnetic brake to switch between a first state for braking the output shaft and a second state for releasing the output shaft; and the electromagnetic brake is in the first state when de-energized.

In some examples, a detection assembly is further included, where the detection assembly detects a position state of the handle operated by the user to switch whether to brake the output shaft, and the detection assembly is connected to the controller.

An electric mower includes a vehicle body provided with walking wheels; a power unit including a motor with an output shaft and a power transmission unit for transmitting a drive force of the motor to a walking wheel of the walking wheels; a mowing assembly including a mowing blade; and a power supply mechanism for supplying electrical energy to the power unit. The power transmission unit includes an electromagnetic brake and a transmission mechanism, the electromagnetic brake generates a braking force to brake rotation of the output shaft, and the transmission mechanism is configured to transfer torque output from the motor to the walking wheel, where the electromagnetic brake is disposed on a side of the motor facing the transmission mechanism.

A power unit applicable to an outdoor traveling device includes a stator with a stator core, multiple stator teeth extending radially from the stator core, and multiple windings wound around the multiple stator teeth; a rotor rotatable relative to the stator and having a rotor core and multiple permanent magnets fixed to the rotor core; a first end cover disposed on a first side of the stator; a second end cover disposed on a second side of the stator; a transmission mechanism configured to convert or transmit torque output from the rotor to the outdoor traveling device; and a parking brake mechanism that generates a braking force to brake rotation of the rotor. The transmission mechanism includes a gearbox body, and the gearbox body and the first end cover enclose a substantially sealed space for accommodating the parking brake mechanism.

An outdoor traveling device includes a walking mechanism including walking wheels and a walking motor for driving a walking wheel of the walking wheels to rotate; a parking brake mechanism configured to brake rotation of the walking mechanism; a controller configured to control the parking brake mechanism to switch between a braking state for braking the walking mechanism and an unlocking state for releasing the walking mechanism from braking; a power supply mechanism for supplying power to at least the walking mechanism and the parking brake mechanism; and an anomaly detection circuit connected to the parking brake mechanism and the controller and configured to detect a power supply input signal of the parking brake mechanism. The controller is further configured to, in response to the power supply input signal exceeding a preset range, open a current loop flowing through a parking brake so that the parking brake mechanism enters the braking state.

In some examples, the anomaly detection circuit includes a current sampling circuit configured to detect a current value in the current loop.

In some examples, when the parking brake is in the unlocking state, the controller is configured to, in response to the current value being less than or equal to 0.2 A or greater than or equal to 2 A, open the current loop so that the parking brake enters the braking state.

In some examples, the anomaly detection circuit includes a voltage sampling circuit configured to detect an input voltage value of the parking brake.

In some examples, when the parking brake is in the unlocking state, the controller is configured to, in response to the input voltage value being less than or equal to 2 V or greater than or equal to 20 V, open the current loop so that the parking brake enters the braking state.

In some examples, a driver circuit is further included, where the driver circuit is connected to the controller, and the controller controls the current loop to be open or closed through the driver circuit.

In some examples, the walking mechanism includes a first walking mechanism including a first walking wheel and a first walking motor that drives the first walking wheel to rotate and a second walking mechanism including a second walking wheel and a second walking motor that drives the second walking wheel to rotate; the parking brake mechanism includes a first parking brake mechanism configured to brake rotation of the first walking mechanism and a second parking brake mechanism configured to brake rotation of the second walking mechanism; and the anomaly detection circuit includes a first anomaly detection circuit connected to the first parking brake mechanism and a second anomaly detection circuit connected to the second parking brake mechanism.

In some examples, the controller is configured to control, based on output of the first anomaly detection circuit, a first parking brake and a second parking brake to enter the braking state.

In some examples, the parking brake mechanism includes an electromagnetic brake.

In some examples, after the anomaly detection circuit detects an anomaly, an alarm prompt is issued through a human-machine interaction mechanism.

An outdoor traveling device includes a walking mechanism including a first walking mechanism including a first walking wheel and a first walking motor that drives the first walking wheel to rotate and a second walking mechanism including a second walking wheel and a second walking motor that drives the second walking wheel to rotate; a parking brake mechanism including a first parking brake mechanism configured to brake rotation of the first walking mechanism and a second parking brake mechanism configured to brake rotation of the second walking mechanism; a controller configured to control the parking brake mechanism to switch between a braking state for braking the walking mechanism and an unlocking state for releasing the walking mechanism; a power supply mechanism for supplying power to at least the walking mechanism and the parking brake mechanism; a first anomaly detection circuit connected to the first parking brake mechanism and the controller and configured to detect a first power supply input signal of the first parking brake mechanism; and a second anomaly detection circuit connected to the second parking brake mechanism and the controller and configured to detect a second power supply input signal of the second parking brake mechanism. The controller is configured to, when the first power supply input signal exceeds a preset range, control the first parking brake mechanism and the second parking brake mechanism to enter the braking state, separately.

An outdoor traveling device includes a walking mechanism including a first drive wheel and a second drive wheel and a first walking motor and a second walking motor that independently drive the first drive wheel and the second drive wheel, respectively; a power supply mechanism including at least one battery pack to supply power to the walking mechanism; a controller configured to control operation of the first walking motor and the second walking motor based on an input first target rotational speed and second target rotational speed, respectively; and a power limiting unit configured to limit input power of the first walking motor or the second walking motor. The controller is configured to, when an electrical parameter of the first walking motor satisfies a preset condition, control the first walking motor to enter a power limiting mode through the power limiting unit, output a corresponding rotational speed attenuation factor based on a rotational speed of the first walking motor in the power limiting mode, and correct the second target rotational speed based on the rotational speed attenuation factor to drive rotation of the second walking motor.

In some examples, the controller is configured to, when a bus current of the first walking motor is greater than or equal to a current threshold, control the first walking motor to enter the power limiting mode through the power limiting unit.

In some examples, the controller is configured to output the rotational speed attenuation factor based on the first target rotational speed and a first limited rotational speed in the power limiting mode.

In some examples, the controller is configured to, after the first walking motor exits the power limiting mode, reduce the rotational speed attenuation factor according to a defined program.

In some examples, the controller is configured to, after the first walking motor exits the power limiting mode, increase a rotational speed of the second walking motor according to a defined program.

In some examples, the controller is configured to, when the electrical parameter of the first walking motor satisfies the preset condition and an electrical parameter of the second walking motor satisfies the preset condition, control the first walking motor and the second walking motor to enter the power limiting mode separately through the power limiting unit.

In some examples, a corresponding first rotational speed attenuation factor is output based on the rotational speed of the first walking motor in the power limiting mode, a corresponding second rotational speed attenuation factor is output based on a rotational speed of the second walking motor in the power limiting mode, the first rotational speed attenuation factor is determined to be greater than the second rotational speed attenuation factor, and the second target rotational speed is corrected based on the first rotational speed attenuation factor to drive the rotation of the second walking motor.

In some examples, a detection unit is further included, which is connected to the controller and configured to detect the bus current of the first walking motor.

An outdoor traveling device includes a walking mechanism including a first drive wheel and a second drive wheel and a first walking motor and a second walking motor that independently drive the first drive wheel and the second drive wheel, respectively; a power supply mechanism including at least one battery pack to supply power to the walking mechanism; a controller configured to control operation of the first walking motor and the second walking motor based on an input first target rotational speed and second target rotational speed, respectively; and a power limiting unit configured to limit input power of the first walking motor or the second walking motor. The controller is configured to, when an electrical parameter of the first walking motor satisfies a preset condition, control the first walking motor to enter a power limiting mode through the power limiting unit and reduce a rotational speed of the second walking motor.

In some examples, a corresponding rotational speed attenuation factor is output based on a rotational speed of the first walking motor in the power limiting mode, and the controller reduces the rotational speed of the second walking motor based on the rotational speed attenuation factor.

An outdoor traveling device includes a walking mechanism including a drive wheel and a brushless electric motor for driving the drive wheel, where the brushless electric motor includes a rotor and a stator with multiple windings; a power supply mechanism including at least one battery pack to supply power to the brushless electric motor; a position sensor configured to detect a rotational position of the rotor based on a change of an electric field related to rotation of the rotor; a position estimation unit configured to estimate the rotational position of the rotor based on a current-related parameter of the brushless electric motor; and a controller configured to control operation of the electric motor. The controller is configured to detect a difference between a first rotational position obtained by the position sensor and a second rotational position obtained by the position estimation unit during rotation of the brushless electric motor and calculate a correction value based on the difference to correct the first rotational position obtained by the position sensor.

In some examples, the controller is further configured to acquire the first rotational position based on the position sensor and control the operation of the brushless electric motor based on a first corrected position updated according to the correction value.

In some examples, the position estimation unit includes a flux observer and a sliding mode observer.

In some examples, a memory is further included, which is connected to the controller and stores the correction value calculated based on the difference between the first rotational position obtained by the position sensor and the second rotational position obtained by the position estimation unit.

In some examples, the controller is configured to recalculate the correction value when a rotational speed of the brushless electric motor is lower than a first threshold or higher than a second threshold.

In some examples, an update determiner is further included, which is configured to compare the correction value in the memory with a correction value newly calculated by the controller and determine whether the correction value in the memory is to be updated. A processor of the memory is configured to update the correction value in the memory to the newly calculated correction value if the update determiner determines that the correction value in the memory is to be updated.

In some examples, an anomaly detector is further included, which is configured to determine whether the correction value calculated by the controller is normal based on whether the correction value is within a specified range and when determining the calculated correction value to be abnormal, issue an alarm prompt through a human-machine interaction mechanism.

In some examples, the position sensor includes a signal transceiving element and an induction assembly, where the signal transceiving element emits an alternating excitation signal and generates an alternating electromagnetic signal field, the induction assembly responds to the alternating electromagnetic signal field and generates a secondary electromagnetic signal field, and the signal transceiving element outputs a signal corresponding to a current position of the rotor in response to the secondary electromagnetic signal field.

In some examples, the position sensor includes an induction assembly and a signal transceiving element that are spaced apart.

In some examples, the outdoor traveling device includes an electric mower, a utility terrain vehicle, a snow thrower, or a sweeper-scrubber.

An outdoor traveling device includes a walking mechanism including a drive wheel and a brushless electric motor for driving the drive wheel, where the brushless electric motor includes a rotor and a stator with multiple windings; a power supply mechanism including at least one battery pack to supply power to the brushless electric motor; an eddy current sensor configured to detect a rotational position of the rotor; a position estimation unit configured to estimate the rotational position of the rotor based on a related parameter of the brushless electric motor during operation; and a controller configured to control operation of the brushless electric motor. The controller is configured to detect a difference between a first rotational position obtained by the eddy current sensor and a second rotational position obtained by the position estimation unit during rotation of the brushless electric motor and calculate a correction value based on the difference to correct the first rotational position obtained by the eddy current sensor.

A power tool includes an electric motor configured to drive an attachment to work and including a rotor and a stator with multiple windings; a power supply mechanism including at least one battery pack to supply power to the electric motor; an eddy current sensor configured to detect a rotational position of the rotor based on a change of an electric field related to rotation of the rotor; a position estimation unit configured to estimate the rotational position of the rotor based on a current-related parameter of the electric motor during operation; and a controller configured to control operation of the electric motor. The controller is configured to detect a difference between a first rotational position obtained by the eddy current sensor and a second rotational position obtained by the position estimation unit during rotation of the electric motor and calculate a correction value based on the difference to correct the first rotational position obtained by the eddy current sensor.

In some examples, the power tool includes a handheld tool, a table tool, or an outdoor traveling device.

A manned mower includes a vehicle body; a walking mechanism mounted to the vehicle body and including walking wheels and a walking motor for driving a walking wheel of the walking wheels; a mowing assembly including a mowing blade and a mowing motor for driving the mowing blade; a power supply mechanism including at least one battery pack and configured to supply power to the walking motor and the mowing motor; an operating member operable by a user; a position detection unit including a first sensor configured to detect a position of the operating member and output a first output signal; a controller configured to control operation of the walking motor based on the first output signal to change at least a speed and a direction of the manned mower; and a detection calibration unit including a second sensor configured to detect the position of the operating member and output a second output signal. The controller is further configured to, when a proportional relationship between the first output signal and the second output signal exceeds a preset range, control the walking motor to stop or enter a speed limiting mode.

In some examples, a human-machine interaction mechanism is further included, which is configured to output an alarm signal to the user when the proportional relationship between the first output signal and the second output signal exceeds the preset range.

In some examples, in the speed limiting mode, the controller is configured to, when a target rotational speed indicated by the operating member is greater than a first rotational speed, restrict a rotational speed of the walking motor to being less than or equal to the first rotational speed.

In some examples, an operating circuit board is further included, where the operating circuit board includes a printed circuit board.

In some examples, the first sensor and the second sensor are separately mounted on the front and back sides of the operating circuit board and are opposite to each other.

In some examples, the first sensor and the second sensor are each a Hall sensor.

In some examples, the controller includes a first regulated voltage source that supplies power to the first sensor and a second regulated voltage source that supplies power to the second sensor. The first regulated voltage source and the second regulated voltage source are isolated from each other and from the remaining circuits of the controller.

An outdoor traveling device includes a vehicle body; a walking mechanism mounted to the vehicle body and including walking wheels and a walking motor for driving a walking wheel of the walking wheels; a work attachment for implementing a work function of the outdoor traveling device; a power supply mechanism including at least one battery pack and configured to supply power to the walking motor; an operating member operable by a user; a position detection unit including a first sensor configured to detect a position of the operating member and output a first output signal; a controller configured to control operation of the walking motor based on the first output signal to change a speed or a direction of the outdoor traveling device; and a detection calibration unit including a second sensor configured to detect the position of the operating member and output a second output signal. The controller is further configured to output an alarm signal to the user in response to at least one of an anomaly of the first output signal, an anomaly of the second output signal, or an anomaly of a proportional relationship between the first output signal and the second output signal.

In some examples, the work attachment includes a mowing assembly including a mowing blade and a mowing motor for driving the mowing blade.

In some examples, the work attachment includes a snow shoveling mechanism.

An electric mower includes a brushless electric motor configured to drive a mowing blade or a walking wheel and including a stator with multiple windings and a rotor; a driver circuit configured to supply power from a power supply mechanism to the brushless electric motor; and a controller configured to receive at least one signal related to a phase current of the brushless electric motor, detect an angular position of the rotor based on the phase current of the brushless electric motor, and output, based on the angular position of the rotor, drive signals applied to the driver circuit to control operation of the brushless electric motor. In a startup stage of the brushless electric motor, the controller is configured to acquire an initial sector where the rotor is located among multiple sector positions by a pulse injection method and acquire a position of the rotor in the initial sector by a high-frequency signal injection method to control the brushless electric motor to start, where a high-frequency signal includes a periodic signal with different amplitudes in a positive half-cycle of the periodic signal and a negative half-cycle of the signal.

In some examples, in the startup stage of the brushless electric motor, the controller calculates the position and a rotational speed of the rotor of the brushless electric motor using a flux observer and when the rotational speed is greater than or equal to a rotational speed threshold and a startup time is greater than or equal to a time threshold, controls, according to the position of the rotor estimated using the flux observer, commutation of the brushless electric motor to enter an acceleration stage.

In some examples, the rotational speed threshold is greater than or equal to 9% of the rated rotational speed.

In some examples, the time threshold is greater than or equal to 500 ms.

In some examples, in the startup stage, the controller is further configured to calculate a rotational speed of the brushless electric motor using a flux observer and when the rotational speed of the brushless electric motor is less than or equal to 0.5% of the rated rotational speed and the startup time is greater than or equal to 2.5s, control the brushless electric motor to enter a locked-rotor protection mode.

In some examples, in the startup stage, the controller is further configured to calculate a rotational speed of the brushless electric motor using a flux observer and when the rotational speed of the brushless electric motor is less than or equal to 3% of the rated rotational speed and the startup time is greater than or equal to 5s, control the brushless electric motor to enter a locked-rotor protection mode.

In some examples, an amplitude in the positive half-cycle is set to a sum of an amplitude in the negative half-cycle and a preset direct current bias.

In some examples, the electric mower includes a push mower, a robotic mower, or a manned mower.

An electric mower includes a brushless electric motor configured to drive a mowing blade or a drive wheel and including a stator with multiple windings and a rotor; a driver circuit configured to supply power from a power supply mechanism to the brushless electric motor; and a controller configured to receive at least one signal related to a phase current of the brushless electric motor, detect an angular position of the rotor based on the phase current of the brushless electric motor, and output, based on the angular position of the rotor, drive signals applied to the driver circuit to control operation of the electric motor. In a startup stage of the brushless electric motor, the controller is configured to acquire an initial sector where the rotor is located among multiple sector positions by a pulse injection method and acquire a position of the rotor in the initial sector by a high-frequency signal injection method to control the brushless electric motor to start, where a high-frequency signal includes a periodic signal. During high-frequency signal injection, a direct current bias is injected in a positive half-cycle of the periodic signal of the phase current or a negative half-cycle of the signal so that the amplitude of the signal in the positive half-cycle or the negative half-cycle in which the direct current bias is injected is greater than or equal to 10% of a bus voltage and less than or equal to 20% of the bus voltage.

In some examples, the amplitude of the periodic signal in the positive half-cycle is set to a sum of the amplitude in the negative half-cycle and a preset direct current bias.

### BRIEF DESCRIPTION OF DRAWINGS

FIG. 1 is a structural view of an outdoor traveling device as an example of the present application.
FIG. 2 is a structural view of an outdoor traveling device as an example of the present application from another angle.
FIG. 3 is a schematic view illustrating that a power supply mechanism is adapted to different vehicles as an example of the present application.
FIG. 4 is a structural view of a walking mechanism and a control mechanism as an example of the present application.
FIG. 5 is a schematic diagram of a power unit as an example of the present application.
FIG. 6 is a schematic view of a walking mechanism as an example of the present application from another angle.
FIG. 7 is a schematic view of a walking electric motor as an example of the present application from another angle.
FIG. 8 is a schematic view of FIG. 7 along A-A.
FIG. 9 is a schematic view of FIG. 7 along B-B, where a pressure plate is at a first position and an electromagnetic brake is in a first state.
FIG. 10 is a partial sectional view of a walking electric motor as an example of the present application, where a pressure plate is at a second position, an electromagnetic brake is in a second state, and a handle is at an unlocking position.
FIG. 11 is a partial view of a walking electric motor as an example of the present application, which mainly shows a manual release assembly with a handle at a braking position.
FIG. 12 is a partial half-sectional view of a walking electric motor and a transmission mechanism as an example of the present application.
FIG. 13 is a partial sectional view of a transmission mechanism as an example of the present application.
FIG. 14 is a sectional view of part of the structures of a transmission mechanism and a walking wheel as an example of the present application.
FIG. 15 is a schematic diagram of a reduction gear assembly as an example of the present application.
FIG. 16 is a schematic diagram of another reduction gear assembly as an example of the present application.
FIG. 17 is a partial structural view of a walking mechanism and a frame as an example of the present application.
FIG. 18 is a control block diagram of a parking brake mechanism as an example of the present application.
FIG. 19 is another control block diagram of a parking brake mechanism as an example of the present application.
FIG. 20 is a control block diagram of a first parking brake mechanism and a second parking brake mechanism as an example of the present application.
FIG. 21 is a control circuit schematic of a walking motor as an example of the present application.
FIG. 22 is a control circuit schematic of a first walking motor and a second walking motor as an example of the present application.
FIG. 23 is a flowchart of a control method of an outdoor traveling device as an example of the present application.
FIG. 24 is a flowchart of another control method of an outdoor traveling device as an example of the present application.
FIG. 25 is a structural view of a human-machine interaction mechanism as an example of the present application.
FIG. 26 is a system block diagram of a human-machine interaction mechanism as an example of the present application.
FIG. 27 is a partial structural view of a first walking mechanism, a second walking mechanism, and a control mechanism as an example of the present application.
FIG. 28 is a control block diagram of a first walking mechanism and a second walking mechanism as an example of the present application.
FIG. 29 is a flowchart of a control method of an outdoor traveling device as an example of the present application.
FIG. 30 is a flowchart of another control method of an outdoor traveling device as an example of the present application.
FIG. 31 is a flowchart of a third control method of an outdoor traveling device as an example of the present application.
FIG. 32 is an exploded view of a walking electric motor and a position sensor as an example of the present application.
FIG. 33 is a control block diagram of rotor position detection of a walking electric motor as an example of the present application.
FIG. 34 is another control block diagram of rotor position detection of a walking electric motor as an example of the present application.
FIG. 35 is a flowchart of a method for detecting a rotational position of a rotor of a brushless electric motor in an outdoor traveling device as an example of the present application.
FIG. 36 is a flowchart of another method for detecting a rotational position of a rotor of a brushless electric motor in an outdoor traveling device as an example of the present application.
FIG. 37 is a control block diagram of a first circuit board and a control circuit board as an example of the present application.
FIG. 38 is a structural diagram of a power tool as an example of the present application.
FIG. 39 is an exploded view of an electric motor in FIG. 38.
FIG. 40 is a sectional view of a walking electric motor as an example of the present application.
FIG. 41 is a sectional view of a walking electric motor as an example of the present application from another angle.
FIG. 42 is a view of FIG. 41 along C-C.
FIG. 43 is a sectional view of a walking electric motor as an example of the present application from another angle.
FIG. 44 is an internal view of a walking electric motor as an example of the present application, with a cover plate of a second end cover removed.
FIG. 45 is a half-sectional view of a waterproof vent valve.
FIG. 46 is a partial structural view of a brake mechanism and a walking mechanism as an example of the present application.
FIG. 47 is a control block diagram of a brake mechanism and a brake motor as an example of the present application.
FIG. 48 is another control block diagram of a brake mechanism and a brake motor as an example of the present application.
FIG. 49 is a third control block diagram of a brake mechanism and a brake motor as an example of the present application.
FIG. 50 is a control block diagram of a sensing unit, a brake mechanism, and a brake motor as an example of the present application.
FIG. 51 is a flowchart of a control method of a manned mower as an example of the present application.
FIG. 52 is a control schematic of an operating member as an example of the present application.
FIG. 53 is a structural diagram of an operating circuit board as an example of the present application.
FIG. 54 is a control block diagram of an operating member and a walking electric motor as an example of the present application.
FIG. 55 is another control schematic of an operating member as an example of the present application.
FIG. 56 is a schematic view of a handle device of a push mower from one perspective;
FIG. 57 is a schematic view of the handle device of the push mower from another perspective;
FIG. 58 is a partially enlarged schematic view of the handle device of the push mower, wherein a first sensor is shown;
FIG. 59 is a partially enlarged schematic view of the handle device of the push mower, wherein the second sensor is shown;
FIG. 60 is a schematic view of a mowing assembly as an example of the present application.
FIG. 61 is a schematic view of a mowing motor as an example of the present application, which shows a stator and a rotor of an electric motor.
FIG. 62 is a circuit schematic of a mowing motor as an example of the present application.
FIG. 63 is a schematic diagram of sectors of a rotor of a mowing motor as an example of the present application.
FIG. 64 is a control circuit schematic of a mowing motor as an example of the present application.
FIG. 65 is a flowchart of a control method of an electric mower as an example of the present application.
FIG. 66 is a flowchart of another control method of an electric mower as an example of the present application.
FIG. 67 is a circuit schematic of a power supply loop of a power supply of an electric mower as an example of the present application.
FIG. 68 is a structural view of a mowing motor as an example of the present application, which shows a motor housing and a cable of an electric motor.
FIG. 69 is a schematic view of a seal between a motor housing and a cable of a mowing motor as an example of the present application.
FIG. 70 is a schematic view of another seal between a motor housing and a cable of a mowing motor as an example of the present application.
FIG. 71 is a schematic view of a third seal between a motor housing and a cable of a mowing motor as an example of the present application.
FIG. 72 is an internal schematic view of a third seal between a motor housing and a cable of a mowing motor as an example of the present application.
FIG. 73 is a schematic view of a mowing motor as an example of the present application from another angle.
FIG. 74A is a perspective view of a first connector and a battery pack of the power supply mechanism in FIG. 3.
FIG. 74B is a perspective view of a second connector and battery packs of the power supply mechanism in FIG. 3.
FIG. 75 is a schematic view of a second connector and third battery packs as an example of the present application.
FIG. 76 is a perspective view of a power supply mechanism of the outdoor traveling device in FIG. 1.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

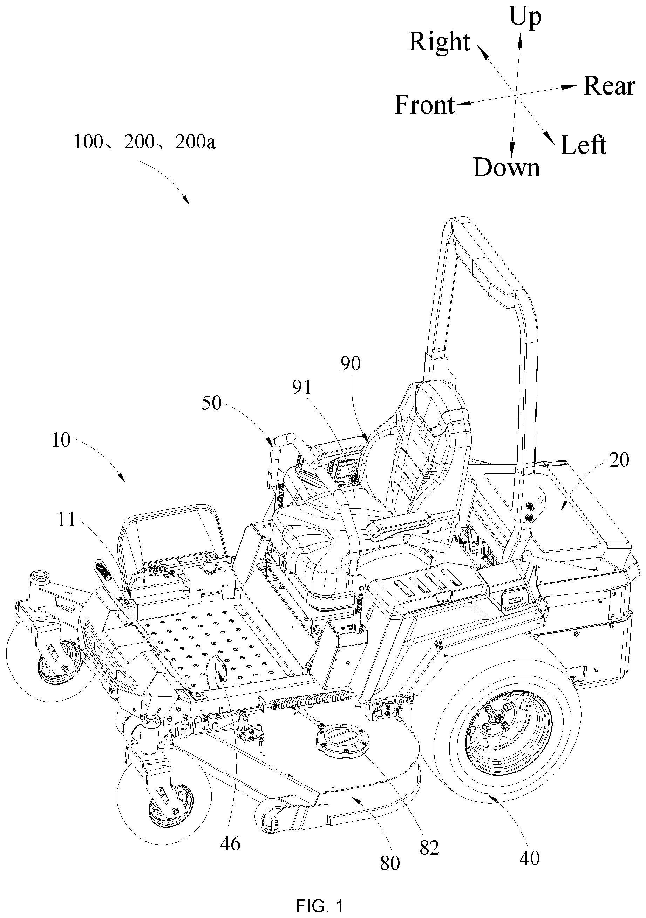

As shown in FIGS. 1, 2, and 3, the present application discloses an outdoor traveling device 100. For example, the outdoor traveling device 100 is a wheeled work vehicle or an outdoor work vehicle. In this example, the wheeled work vehicle or the outdoor work vehicle is, for example, an electric mower 200 or an electric lawn machine, which may be operated by a user to trim a lawn or other vegetation. Optionally, a manned mower 200a may be used for the user to sit or stand on and operate to trim the lawn or other vegetation. Of course, the outdoor traveling device 100 disclosed in the present application further includes a utility terrain vehicle (UTV) 100c. In the related art, the UTV 100c includes a four-wheeled all-terrain vehicle (ATV), a multi-purpose ATV, and a recreational go-kart. Additionally, the outdoor traveling device 100 disclosed in the present application further includes a manned snow thrower, a push mower, a push snow thrower 100d, and an electric motorcycle.

In this example, front, rear, left, right, up, and down are defined as the directions shown in FIG. 1. When the user sits on the outdoor traveling device 100 on the ground, it is defined that the direction which the user faces is the front, the direction which the user faces away from is the rear, the direction on the left-hand side of the user is left, the direction on the right-hand side of the user is right, the direction towards the ground is down, and the direction away from the ground is up.

In some examples, as shown in FIGS. 1 to 5, the outdoor traveling device 100 is disclosed. The outdoor traveling device 100 includes a vehicle body 10, a power supply mechanism 20, a power unit 30, and a walking mechanism 40. The vehicle body 10 includes a frame 11, the frame 11 extends substantially along a front and rear direction, and the frame 11 is used for mounting the power supply mechanism 20, the power unit 30, and the walking mechanism 40. The power supply mechanism 20 is configured to supply electrical energy to the power unit 30. The power unit 30 is a set composed of components that provide a drive force in the outdoor traveling device 100. In some examples, the power unit 30 includes a walking motor 42 that drives the outdoor traveling device 100 to walk. In some examples, the power unit 30 includes a second motor that drives a functional accessory for implementing a work function of the outdoor traveling device 100. With the electric mower 200 as an example, the functional accessory is a mowing element 81, and the second motor is a mowing motor 82. It is to be understood that in some examples, the walking motor 42 also belongs to the walking mechanism 40. In some examples, the mowing motor 82 also belongs to a mowing assembly 80. In some examples, the outdoor traveling device 100 further includes other motors or prime movers that output drive forces, where these motors or prime movers not only belong to the set of the power unit 30 but also belong to an assembly of components driven by the drive forces of these motors or prime movers, for example, a seat assembly including electric seat adjustment. In some examples of the present disclosure, the power unit 30 shares a motor or prime mover structure with some functional assemblies and therefore, the power unit 30 is not intended to be disposed completely independently in the present disclosure.

The walking mechanism 40 includes at least a walking wheel group 41. The walking wheel group 41 includes walking wheels 411 and 412, where the walking wheels 411 and 412 are connected to the vehicle body 10 to support the vehicle body 10 and drive the vehicle body 10 to move.

In this example, the power supply mechanism 20 includes a battery pack 21 and a connector 22 for mounting the battery pack 21 to connect the battery pack 21 to the outdoor traveling device 100. The battery pack 21 supplies power to at least the power unit 30 in collaboration with a corresponding power supply circuit. The power unit 30 outputs power to drive the walking mechanism 40 so that the outdoor traveling device 100 walks as operated.

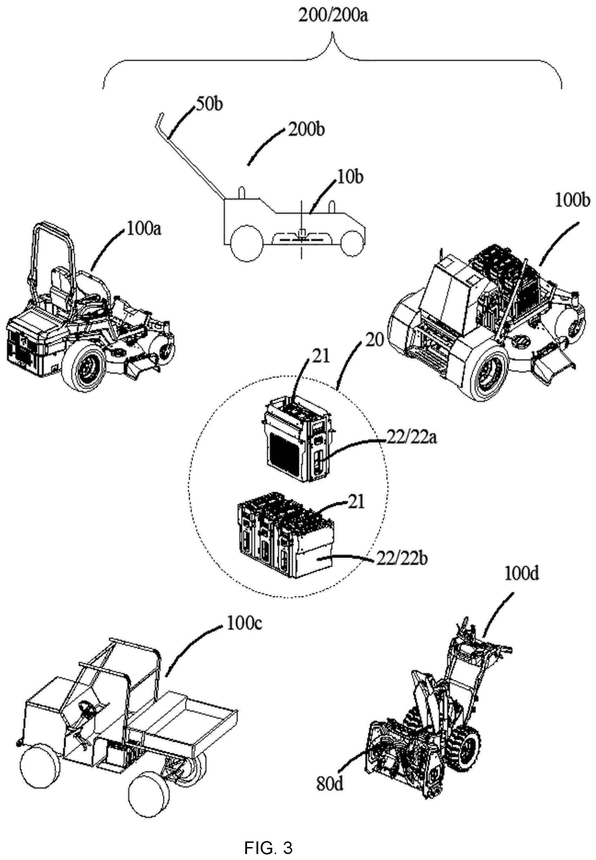

The battery pack 21 is detachably connected to the connector 22, and the connector 22 is detachably mounted to the outdoor traveling device 100 so that the battery pack 21 can be removed to be adapted to another powered device. Another powered device includes, but is not limited to, the UTV 100c, the push mower, the push snow thrower 100d, and the manned mower 200a. Specifically, as shown in FIG. 3, the power supply mechanism 20 of the outdoor traveling device 100 is detachably removed from the outdoor traveling device 100 and then mounted to the UTV 100c, the push mower, the push snow thrower 100d, a riding mower 100a, and a stand-on mower 100b to supply power to the preceding powered devices, so as to implement the functions of the powered devices.

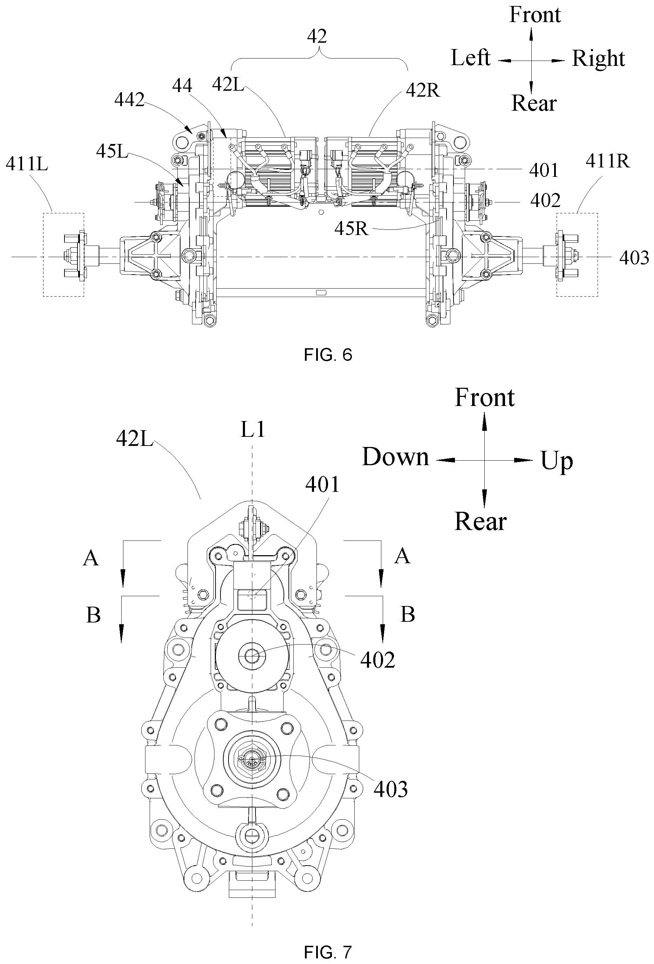

In this example, the power unit 30 further includes a power transmission unit 31 that transmits the drive force from the walking motor 42 to a walking wheel. The power transmission unit 31 is connected to an output shaft 423 of the walking motor 42 and the walking wheel 411/412. The power transmission unit 31 includes a parking brake mechanism 44 and a transmission mechanism 45, the parking brake mechanism 44 can brake the rotation of the output shaft 423, and the transmission mechanism 45 is configured to convert or transmit torque output from the motor and transfer the torque to the walking wheel 411/412. As shown in FIGS. 6, 8, and 9, in this example, the walking motor 42 includes the output shaft 423 extending along a first axis 401. In an extension direction of the output shaft 423, that is, in an extension direction of the first axis 401, the parking brake mechanism 44 is at least partially located between the walking motor 42 and the transmission mechanism 45. For example, the parking brake mechanism 44 is disposed on a side of the walking motor 42 facing the transmission mechanism 45.

In this example, the walking motor 42 is configured to be an electric motor, such as a brushless electric motor. For example, the electric motor may be any one of an inrunner, an outrunner, a hub motor, or a wheel-side motor. In this example, with a brushless inrunner as an example, the electric motor is used hereinafter instead of the motor, which is not intended to limit the present application.

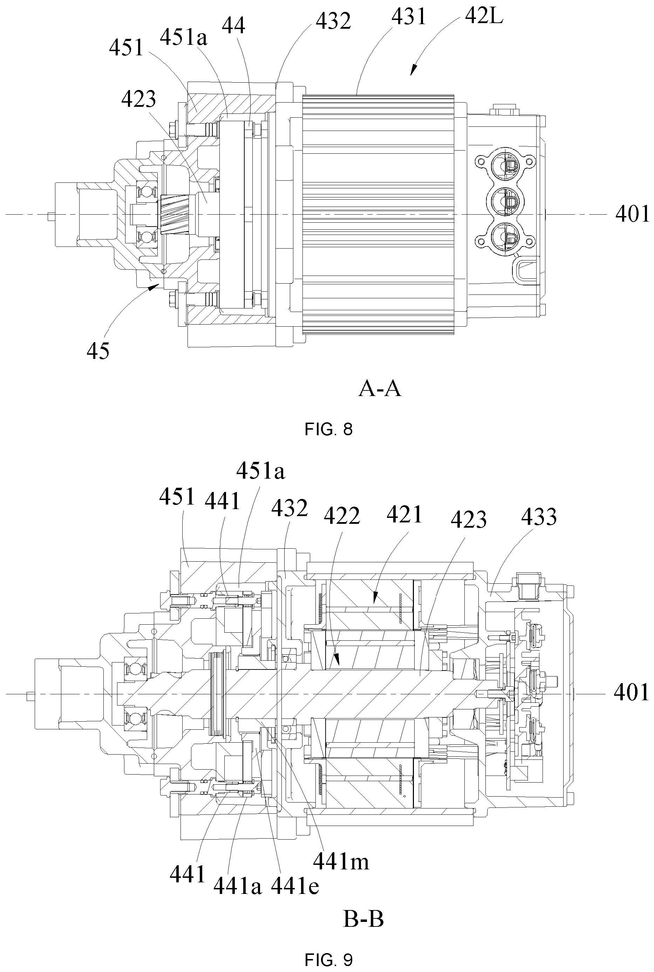

As shown in FIG. 9, the walking electric motor 42 includes a stator 421 and a rotor 422, the rotor 422 is rotatable relative to the stator 421, and the output shaft 423 is formed on or connected to the rotor 422.

As shown in FIGS. 8 and 9, to protect the walking electric motor 42 and stably mount the walking electric motor 42, the walking electric motor 42 further includes a first end cover 432 on a first side of the stator 421 and a second end cover 433 on a second side of the stator 421. In this example, the parking brake mechanism 44 brakes the rotation of the output shaft 423, that is, the parking brake mechanism 44 brakes the rotation of the rotor 422.

The transmission mechanism 45 is configured to be a reduction mechanism, for example, a gear transmission assembly for speed reduction and torque increase. The transmission mechanism 45 further includes a gearbox 451 for at least partially accommodating the gear transmission assembly to prevent dust and the like from entering between gears and affecting a transmission lifetime. The gearbox 451 and the first end cover 432 enclose a substantially sealed space, for example, a first accommodation space 451a for accommodating the parking brake mechanism 44. The sealed accommodation space is formed between the transmission mechanism 45 and the electric motor so that an additional sealing dustproof structure does not need to be provided, which is safer and more reliable.

For example, the parking brake mechanism 44 is configured to be an electromagnetic brake mechanism. Optionally, the electromagnetic brake mechanism is an electromagnetic brake 441. The electromagnetic brake 441 is used hereinafter instead of the electromagnetic brake mechanism, which is not intended to limit the present application. The electromagnetic brake 441 is configured to brake the rotation of the output shaft 423. For example, the electromagnetic brake 441, when de-energized, automatically brakes the rotation of the output shaft 423. For example, when the outdoor traveling device 100 is powered off, the electromagnetic brake 441 automatically brakes the rotation of the output shaft 423 so that the walking wheel 411/412 driven by the electric motor cannot rotate. The electromagnetic brake 441 is disposed so that a timelier and safer parking brake solution is implemented in an emergency. The electromagnetic brake 441 does not rely on a manual operation and actively brakes the output shaft 423 of the motor when de-energized, achieving timelier and more reliable braking.

At least part of the electromagnetic brake 441 is located between the motor and the transmission mechanism 45 so that the overall structure of the power unit is more compact, and a braking force of the electromagnetic brake is more directly applied to the output shaft. For example, the electromagnetic brake 441 is disposed on a side of the motor facing the transmission mechanism 45. As shown in FIG. 8, the output shaft 423 penetrates through the stator 421 of the electric motor, and between two ends of the output shaft 423 extending out of the stator 421, one end faces the walking wheel 411/412, that is, one end is connected to the transmission mechanism 45 and the walking wheel 411/412, and the other end faces away from the walking wheel 411/412. The electromagnetic brake 441 is disposed on the side of the motor facing the transmission mechanism 45, that is, the electromagnetic brake 441 is disposed at an end of the output shaft 423 facing the walking wheel 411/412. In some examples, a braking force applying point 441m of the electromagnetic brake 441 is located at a position of the output shaft 423 close to the stator 421. In some examples, the braking force applying point 441m of the electromagnetic brake 441 is located at a position of the output shaft 423 close to the walking wheel 411/412. In some examples, the braking force applying point 441m of the electromagnetic brake 441 is located between the gearbox 451 and the walking wheel 411/412. It is to be understood that any braking force applying point 441m of the electromagnetic brake 441 located on a side of the output shaft 423 connected to the walking wheel 411/412 falls within the disclosed scope of the present application. The mounting position of the electromagnetic brake 441 is set as above so that a space between the motor and the transmission mechanism 45 is fully utilized. Meanwhile, the electromagnetic brake 441 is located on a transmission path of the output shaft 423 and close to the output shaft 423 so that the braking force of the electromagnetic brake 441 can be more directly applied to the output shaft 423. Moreover, the electromagnetic brake 441 is disposed in the substantially sealed space enclosed by the gearbox 451 and the first end cover 432 so that the sealed accommodation space formed between the transmission mechanism 45 and the electric motor is fully utilized, and an additional sealing dustproof structure does not need to be provided, which is safer and more reliable and has a prolonged service life. In some examples, the electromagnetic brake 441 is at least partially mounted on the gearbox 451.

As shown in FIGS. 6, 10, and 11, the parking brake mechanism 44 includes a manual release assembly 442. The manual release assembly 442 is operated by the user to manually release the braking of the electromagnetic brake 441 or to drive the electromagnetic brake 441 to brake the output shaft 423. Thus, when the electromagnetic brake 441 cannot be activated or closed for some reasons, the user can manually perform the braking and release the braking. For example, the outdoor traveling device 100 is powered off, and the electromagnetic brake 441 is de-energized to brake the output shaft 423. After the outdoor traveling device 100 is started and powered on, the electromagnetic brake 441 is energized and activated to stop braking the output shaft 423 so that after the walking electric motor 42 receives a drive signal in an operation instruction, the output shaft 423 rotates and the outdoor traveling device 100 walks normally. However, after the outdoor traveling device 100 is powered on, if the electromagnetic brake 441 fails to be energized and activated for some reasons, the user may manually activate the electromagnetic brake 441 through the manual release assembly 442 so that the electromagnetic brake 441 releases the braking of the output shaft 423 and the outdoor traveling device 100 can walk normally.

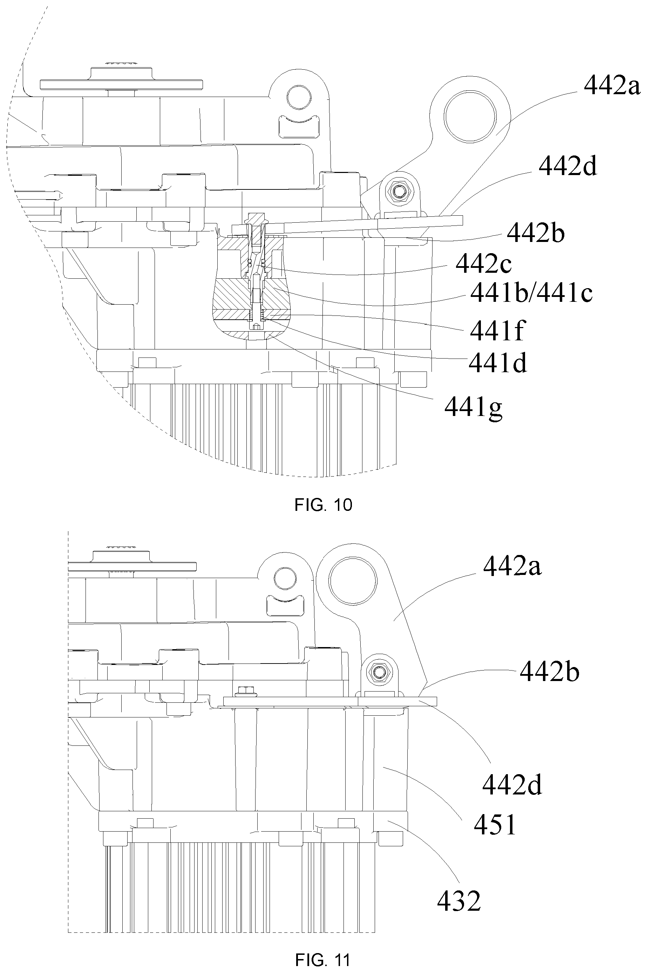

As shown in FIGS. 9 and 10, the electromagnetic brake 441 includes an electromagnet 441a, a pressure plate 441f, a brake pad 441e, and a fixing plate 441g. The electromagnet 441a includes a housing 441b, a coil 441c, and at least one spring 441d, and the fixing plate 441g is connected to the housing 441b. Optionally, the fixing plate 441g and the housing 441b are fixedly connected at a certain interval. The fixing plate 441g is fixedly connected to the gearbox 451. The housing 441b is provided with an accommodation cavity for accommodating the coil 441c and the spring 441d. The pressure plate 441f and the brake pad 441e are disposed in a region between the fixing plate 441g and the housing 441b. The brake pad 441e is connected to the output shaft 423 of the walking electric motor 42. Optionally, the brake pad 441e is slidably connected to the output shaft 423, and the brake pad 441e applies a frictional force to the output shaft 423 along a circumferential direction of the output shaft 423 to brake the output shaft 423. The pressure plate 441f can be magnetically attracted. After the coil 441c in the electromagnet 441a is energized to generate electromagnetism, the pressure plate 441f is attracted by the electromagnet 441a. The electromagnet 441a and the brake pad 441e are separately located on two sides of the pressure plate 441f. When the pressure plate 441f is attracted by the electromagnet 441a, the pressure plate 441f approaches the electromagnet 441a and moves away from the brake pad 441e. As shown in FIG. 10, the pressure plate 441f is at a second position, and the brake pad 441e substantially no longer applies a frictional force to the output shaft 423 or applies a frictional force that does not brake the output shaft 423. At this time, it is defined that the electromagnetic brake 441 is in a second state. When the electromagnetic brake 441 is in the second state, the output shaft 423 rotates according to an operation instruction signal received by the electric motor. When the pressure plate 441f is attracted into contact with the electromagnet 441a, the pressure plate 441f compresses the spring 441d in the electromagnet 441a, and the spring 441d is pressurized to store energy. When the electromagnetic brake 441 is de-energized, the coil 441c is de-energized and loses electromagnetism, and the pressure plate 441f loses a magnetic attraction force of the electromagnet 441a and is pushed towards the brake pad 441e by the energy released by the spring 441d. Since the spring 441d applies a sufficiently large force, the pressure plate 441f moves away from the electromagnet 441a and presses against the brake pad 441e. As shown in FIG. 9, the pressure plate 441f is at a first position. When the pressure plate 441f is at the first position, the frictional force applied by the brake pad 441e to the output shaft 423 is increased to brake the output shaft 423. At this time, it is defined that the electromagnetic brake 441 is in a first state.

The manual release assembly 442 is operated to control the distance between the pressure plate 441f and the brake pad 441e. The manual release assembly 442 includes a handle 442a and a connecting rod 442c. The handle 442a is operated by the user, and the user moves the pressure plate 441f from the first position to the second position by rotating, pushing and pulling, or toggling the handle 442a. As shown in FIG. 11, the handle is at a braking position and the pressure plate 441f is at the first position. As shown in FIG. 10, the handle is at an unlocking position and the pressure plate 441f is at the second position. The handle 442a is fixedly connected to the pressure plate 441f through the connecting rod 442c, and a linkage rod 442d is disposed between the handle 442a and the connecting rod 442c. According to the lever principle, the handle 442a drives the connecting rod 442c to move up and down. To be operated by the user, at least part of the handle 442a extends out of the gearbox 451 and is exposed to the outside of the vehicle body 10. In some examples, the handle 442a is disposed close to the walking wheel 411/412. In this example, when the electromagnetic brake 441 is de-energized, the pressure plate 441f is at the first position, and the frictional force applied by the brake pad 441e to the output shaft 423 is increased to brake the output shaft 423. However, after the outdoor traveling device 100 is powered on, if the electromagnet 441a does not generate an electromagnetic force to attract the pressure plate 441f to the second position, the user operates the handle 442a to the unlocking position (as shown in FIG. 10) to move the pressure plate 441f so that the pressure plate 441f is moved from the first position to the second position. A stop portion 442b is provided on the handle 442a so that when the operation force of the user is released, the handle 442a can remain at the unlocking position and keep the pressure plate 441f at the second position. The pressure plate 441f is manually moved away from the brake pad 441e, and the brake pad 441e releases the braking of the output shaft 423.

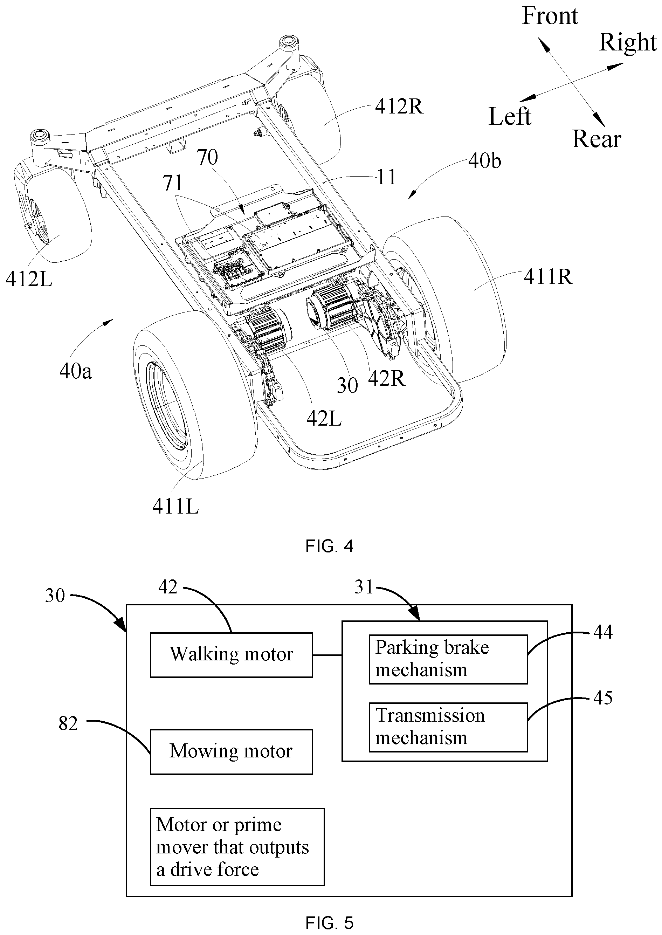

As shown in FIG. 4, the outdoor traveling device 100 further includes a control mechanism 70 configured to control the operation of the outdoor traveling device 100. The control mechanism 70 includes a controller 72 and a detection assembly (not shown).

For example, the control mechanism 70 is configured to control the state switching of the electromagnetic brake 441. The controller 72 is configured to control, according to an output signal of the detection assembly, the electromagnetic brake 441 to switch between the first state and the second state. In this example, the detection assembly is configured to detect a state of the handle 442a. Optionally, the detection assembly detects a position state of the handle 442a. In this example, when the handle 442a is detected to be at the unlocking position, the controller 72 reminds the user through a human-machine interaction mechanism 60 to prompt the user to reset the handle 442a to the braking position (as shown in FIG. 11). In some examples, when it is detected that the handle 442a is reset to the braking position, the controller 72 controls, according to a preset operating algorithm, the electromagnetic brake 441 to switch between the first state and the second state so that the electromagnetic brake 441 is controlled more automatically, and the automatic parking of the electromagnetic brake 441 is used in more working conditions.

With continued reference to FIGS. 1 to 5, when the outdoor traveling device 100 is specifically the electric mower 200, the electric mower 200 includes the vehicle body 10, the power supply mechanism 20, the power unit 30, the walking mechanism 40, and the mowing assembly 80. The mowing assembly 80 includes a mowing blade 81. The power unit 30 further includes the power transmission unit 31 that transmits the drive force from the walking motor 42 to the walking wheel 411/412. The power transmission unit 31 is connected to the output shaft 423 of the walking motor and the walking wheel. The power transmission unit 31 includes the parking brake mechanism 44 and the transmission mechanism 45, the parking brake mechanism 44 can brake the rotation of the output shaft 423, and the transmission mechanism 45 is configured to convert or transmit the torque output from the walking motor 42 and transfer the torque to the walking wheel. As shown in FIGS. 6 and 8, in this example, the walking motor 42 includes the output shaft 423 extending along the first axis 401. In the extension direction of the output shaft 423, that is, in the direction of the first axis 401, the parking brake mechanism 44 is at least partially located between the motor and the transmission mechanism 45. For example, the parking brake mechanism 44 is disposed on the side of the motor facing the transmission mechanism 45.

In this example, the walking motor 42 is configured to be the electric motor, such as the brushless electric motor. For example, the electric motor may be any one of the inrunner, the outrunner, the hub motor, or the wheel-side motor. In this example, with the brushless inrunner as an example, the electric motor is used hereinafter instead of the motor, which is not intended to limit the present application.

The transmission mechanism 45 is configured to be the reduction mechanism, for example, the gear transmission assembly for speed reduction and torque increase. The transmission mechanism 45 further includes the gearbox 451 for at least partially accommodating the gear transmission assembly to prevent dust and the like from entering between gears and affecting the transmission lifetime.

The parking brake mechanism 44 is configured to be the electromagnetic brake 441 configured to brake the rotation of the output shaft 423. For example, the electromagnetic brake 441, when de-energized, automatically brakes the rotation of the output shaft 423. For example, when the electric mower 200 is powered off, the electromagnetic brake 441 automatically brakes the rotation of the output shaft 423 so that the walking wheel driven by the electric motor cannot rotate. The electromagnetic brake 441 is disposed so that the timelier and safer parking brake solution is implemented in an emergency. The electromagnetic brake 441 does not rely on the manual operation and actively brakes the output shaft 423 of the motor when de-energized, achieving the timelier and more reliable braking.

As shown in FIGS. 4 and 6, the walking mechanism 40 of the electric mower 200 includes rear walking wheels 411 and front walking wheels 412. The rear walking wheels 411 include a left rear walking wheel 411 L and a right rear walking wheel 411 R. The front walking wheels 412 include a left front walking wheel 412L and a right front walking wheel 412R. The walking electric motor 42 drives the rear walking wheels 411 or the front walking wheels 412 to rotate, so as to implement a walking function of the electric mower 200. Optionally, one, two, three, or four walking electric motors 42 may be provided. In this example, two walking electric motors 42 are provided, and the two walking electric motors 42 drive the left rear walking wheel 411L and the right rear walking wheel 411R, respectively so that the electric mower 200 can turn in other directions deviating from the front and rear direction. For ease of reference, the walking electric motor 42 for driving the left rear walking wheel 411L is set as a first walking electric motor 42L, and the walking electric motor 42 for driving the right rear walking wheel 411R is set as a second walking electric motor 42R.

The walking mechanism 40 further includes the power transmission unit 31 connected to the walking electric motor 42 and the walking wheel. For example, the power transmission unit 31 further includes the transmission mechanism 45. In this example, the power unit 30 is a set composed of components that provide the drive force in the electric mower 200. In some examples, the power unit 30 shares the structures of the motor or prime mover and the power transmission unit 31 with the walking mechanism 40 and therefore, the power unit 30 and the walking mechanism 40 are not intended to be disposed completely independently in the present disclosure.

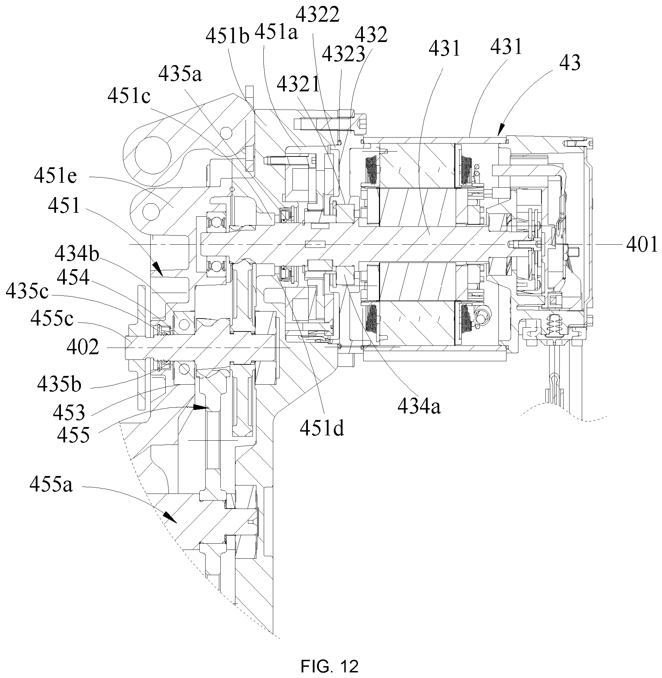

As shown in FIGS. 12 to 14, in this example, with the left rear walking wheel 411L as an example, the transmission mechanism 45 includes the gearbox 451, a reduction gear assembly 455, and an intermediate shaft 455a. The first walking electric motor 42L is the brushless inrunner for example, and the first walking electric motor 42L includes a motor housing 43, the stator 421, and the rotor 422. The motor housing 43 includes a motor housing body 431 with an opening at one end and a motor housing cover for sealing the motor housing body 431. The motor housing body 431 is sealingly connected to the motor housing cover. In this example, the motor housing cover is the first end cover 432. The output shaft 423 extends out of the motor housing 43 through the first end cover 432 and into the gearbox 451 to be drivingly connected to the reduction gear assembly 455. The gearbox 451 forms a substantially sealed accommodation cavity to prevent components within the gearbox 451 from dust and water. The intermediate shaft 455a is configured to be a power output end of the reduction gear assembly 455, an end of the intermediate shaft 455a is disposed within the gearbox 451 to be connected to a last-stage gear of the reduction gear assembly 455, and the other end of the intermediate shaft 455a extends out of the gearbox 451 to be connected to a hub 413 of the walking wheel. Of course, it is to be understood that the motor housing 43 and the gearbox 451 may be formed by connecting two or more independent components or may be formed as an integral component. In some examples, the motor housing body 431 and the first end cover 432 of the motor housing 43 and the gearbox 451 may share some structures. For example, the first end cover 432 of the motor housing 43 is part of the structure of the gearbox 451.

In this example, to facilitate mold manufacturing and ensure structural strength, the gearbox 451 includes a first box body 451b and a second box body 451e, and the first box body 451b is sealingly connected to the second box body 451e to form the accommodation cavity inside. In this example, the first box body 451b and the second box body 451e are sealed by a sealant. Opposite contact surfaces of the first box body 451b and the second box body 451e are sealed through gluing. Due to the strong fluidity, ductility, and deformability of the sealant, the sealing through gluing can better fill the unevenness and small gaps between the opposite contact surfaces of the first box body 451b and the second box body 451e, achieving a better sealing effect.

The first end cover 432 is connected to the first box body 451b, and a rotor shaft, that is, the output shaft 423, penetrates through the first end cover 432 and the first box body 451b separately and is drivingly connected to a first-stage gear of the reduction gear assembly 455. The first end cover 432 is provided with a first bearing mount 4321, and the first bearing mount 4321 fixes a first bearing 434a for supporting the rotation of the output shaft 423. The first box body 451b is provided with a through hole 451c at a position corresponding to the output shaft 423, and the first accommodation space 451a is formed between the first end cover 432 and the first box body 451b. To prevent lubricating oil in the reduction gear assembly 455 from flowing into the motor housing 43, the first bearing mount 4321 and the first box body 451b are provided with sealing structures to ensure the sealing effect. A first flange 4322 is formed by extending along a circumferential direction of the first end cover 432, and the first flange 4322 extends into the first accommodation space 451a formed by the first box body 451b. A first sealing ring 4323 for sealing is provided between the first flange 4322 and a sidewall of the first box body 451b. In this example, the first sealing ring 4323 is an O-ring. In other examples, the first sealing ring 4323 may be another sealing ring structure such as a V-ring or a U-ring. In this example, the O-ring is disposed between a surface of the first end cover 432 extending perpendicular to the first axis 401 and a surface of the first box body 451b extending perpendicular to the first axis 401. In some examples, the O-ring is between a side surface of the first end cover 432 extending parallel to the first axis 401 and a side surface of the first box body 451b extending parallel to the first axis 401. A first framework oil seal 435a is sleeved on the output shaft 423, and the periphery of the first framework oil seal 435a is disposed in the through hole 451c. A stop wall 451d extends along a radial direction of the through hole 451c, and the stop wall 451d prevents the movement of the first framework oil seal 435a along the direction of the first axis 401. In this example, the O-ring and the first framework oil seal 435a have structures similar to those disclosed in the related art, which are not described in detail here.

In this example, the reduction gear assembly 455 is an externally meshing gear reduction mechanism, and the reduction gear assembly 455 includes a transmission shaft 455c that supports the rotation of gears. The transmission shaft 455c is centered on the second axis 402 and extends along a direction of the second axis 402. In this example, the second axis 402 is parallel to the first axis 401. In some examples, the second axis 402 intersects the first axis 401. Two ends of the transmission shaft 455c are supported by the first box body 451b and the second box body 451e, respectively. A second bearing mount 453 is provided in the second box body 451e, and the second bearing mount 453 fixes a second bearing 434b for supporting the rotation of the transmission shaft 455c. A second flange 454 that prevents the axial movement of the second bearing 434b is provided in the second bearing mount 453, and the transmission shaft 455c extends through the second flange 454 and extends towards the outside of the second box body 451e. A second framework oil seal 435b is sleeved on the transmission shaft 455c extending through the second flange 454, and a circlip structure 435c is sleeved on the transmission shaft 455c on a side of the second framework oil seal 435b facing away from the second flange 454 to prevent the second framework oil seal 435b from falling off the transmission shaft 455c and affecting the sealing effect and prevent the lubricating oil in the gearbox 451 from flowing out from the second bearing mount 453.

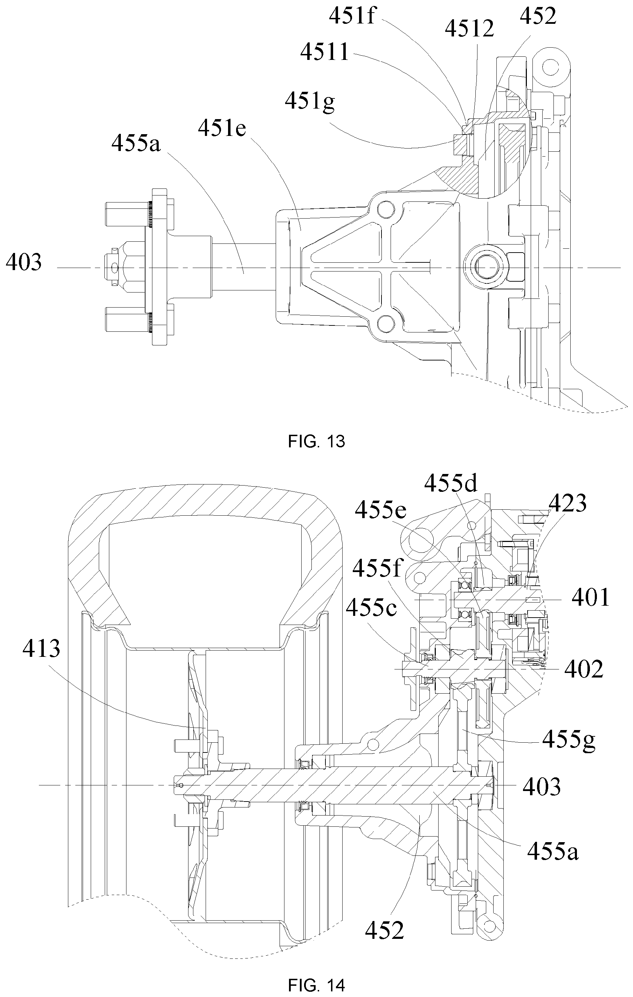

As shown in FIG. 13, with the side of the left rear walking wheel 411L as an example, the second box body 451e supports the intermediate shaft 455a, and the intermediate shaft 455a extends out of the second box body 451e and is connected to the hub 413 of the left rear walking wheel 411L. The intermediate shaft 455a is centered on a third axis 403 and extends along a direction of the third axis 403. The second box body 451e is formed with a second accommodation space 452 for storing the lubricating oil. An outer wall forming the second accommodation space 452 is provided with a first hole 451f, and the second accommodation space 452 communicates with the external environment through the first hole 451f. To ensure the sealability of the second accommodation space 452, a detachable blocking portion 451g is provided in the first hole 451f. An opening direction of the first hole 451f is parallel to the third axis 403. In some examples, the opening direction of the first hole 451f intersects the third axis 403. In this example, the first hole 451f is configured to be a stepped hole, where a first portion 4511 of the first hole 451f connected to the external environment has a smaller diameter than a second portion 4512 of the first hole 451f disposed on the inner side. For example, the first portion 4511 is a portion for accommodating the blocking portion 451g, the second portion 4512 is a portion closer to the reduction gear assembly 455, and the second portion 4512 has a larger diameter than the first portion 4511. In this example, the first hole 451f is used for injecting the lubricating oil into an oil injection hole of the second accommodation space 452. The stepped hole is disposed and has the larger diameter along an oil injection direction, preventing the accumulation of the lubricating oil during injection and increasing a temporary storage and buffer space to enable the lubricating oil to enter quickly. In this example, along a direction perpendicular to the third axis 403, the first hole 451f partially overlaps the reduction gear assembly 455. In this example, the first hole 451f is configured to be an observation window for the user to confirm the remaining amount of lubricating oil. When the user needs to confirm the remaining amount of lubricating oil, the blocking portion 451g is removed, and the remaining amount of lubricating oil in the second accommodation space 452 can be observed through the first hole 451f.

As shown in FIGS. 12 and 14, the reduction gear assembly 455 includes a first driving gear 455d, a first driven gear 455e, a second driving gear 455f, and a second driven gear 455g. The first driving gear 455d is formed on or connected to the output shaft 423 of the electric motor, and the first driving gear 455d is coaxial with the output shaft 423. The first driven gear 455e externally meshes with the first driving gear 455d. Optionally, the first driving gear 455d and the first driven gear 455e are each a cylindrical gear. In this example, the first driving gear 455d and the first driven gear 455e form a first-stage reduction drive. The first driven gear 455e moves substantially synchronously with the second driving gear 455f. In this example, the first driven gear 455e and the second driving gear 455f are disposed coaxially on the transmission shaft 455c. The second driven gear 455g externally meshes with the second driving gear 455f. Optionally, the first driving gear 455d and the first driven gear 455e are each the cylindrical gear. In this example, the second driving gear 455f and the second driven gear 455g form a second-stage reduction drive. The second driven gear 455g is disposed on the intermediate shaft 455a. In this example, the reduction gear assembly 455 includes two stages of reduction drives. Therefore, the second driven gear 455g is the last-stage reduction drive, and the intermediate shaft 455a and the second driven gear 455g rotate substantially synchronously. In other alternative examples, when more than two stages of reduction drives are provided, a second transmission shaft 455c is provided to support the rotation of the second driven gear 455g, and the last-stage gear is disposed on the intermediate shaft 455a.

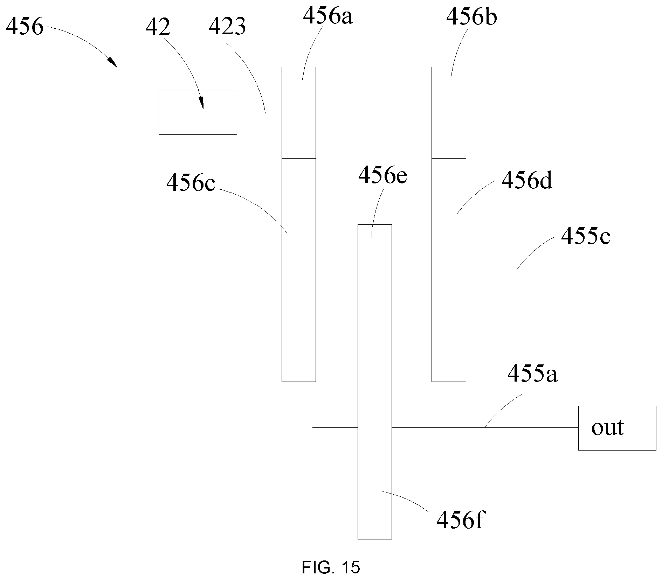

The reduction gear assembly includes a split-flow gear reduction structure. For example, the reduction gear assembly includes a split-flow two-stage cylindrical gear reduction structure. With the split-flow gear reduction structure, loads are evenly distributed along the face width, and axial forces counteract each other. As shown in FIG. 15, the split-flow gear reduction structure is used at an input end. A reduction gear assembly 456 includes a first high-speed gear 456a and a second high-speed gear 456b that are symmetrically disposed, where the first high-speed gear 456a and the second high-speed gear 456b are formed on or connected to the output shaft 423 of the electric motor. For example, the first high-speed gear 456a and the second high-speed gear 456b are coaxial with the output shaft 423 of the electric motor. A first high-speed driven gear 456c externally meshes with the first high-speed gear 456a to form a reduction drive. A second high-speed driven gear 456d externally meshes with the second high-speed gear 456b to form a reduction drive. The first high-speed driven gear 456c and the second high-speed driven gear 456d are disposed on the transmission shaft 455c. For example, the first high-speed driven gear 456c and the second high-speed driven gear 456d are coaxially sleeved on the transmission shaft 455c. An intermediate gear 456e is disposed between the first high-speed driven gear 456c and the second high-speed driven gear 456d. For example, the intermediate gear 456e is disposed on an axis of symmetry between the first high-speed driven gear 456c and the second high-speed driven gear 456d. The intermediate gear 456e is disposed coaxially with the first high-speed driven gear 456c and the second high-speed driven gear 456d. A low-speed gear 456f externally meshes with the intermediate gear 456e to form a reduction drive. The low-speed gear 456f is disposed on the intermediate shaft 455a. The intermediate shaft 455a outputs the torque converted by the reduction gear assembly 456.

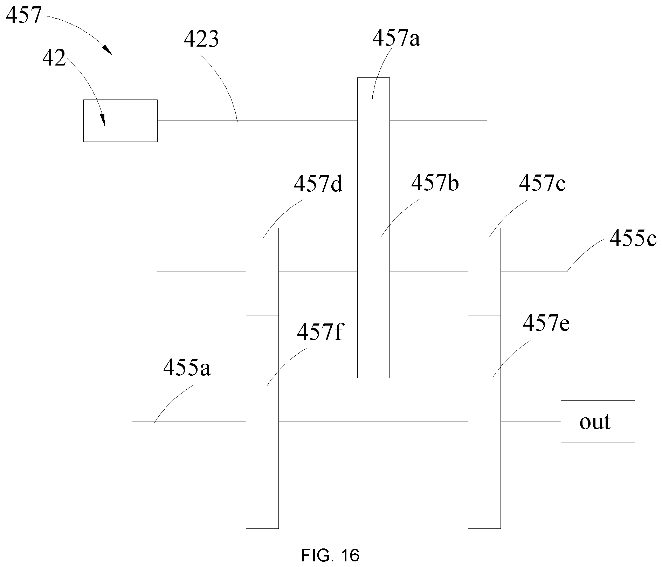

As shown in FIG. 16, the split-flow gear reduction structure is used at the input end. A reduction gear assembly 457 includes a high-speed gear 457a formed on or connected to the output shaft 423 of the electric motor. The high-speed gear 457a rotates substantially synchronously with the output shaft 423. A high-speed driven gear 457b externally meshes with the high-speed gear 457a to form a reduction drive. The high-speed driven gear 457b is disposed on the transmission shaft 455c. A first intermediate gear 457c and a second intermediate gear 457d are symmetrical about a central axis of the high-speed driven gear 457b. The first intermediate gear 457c and the second intermediate gear 457d are symmetrically arranged on two sides of the high-speed driven gear 457b. For example, the first intermediate gear 457c and the second intermediate gear 457d are coaxially sleeved on the transmission shaft 455c. A first low-speed gear 457e externally meshes with the first intermediate gear 457c to form a reduction drive. A second low-speed gear 457f externally meshes with the second intermediate gear 457d to form a reduction drive. The first low-speed gear 457e and the second low-speed gear 457f are disposed on the intermediate shaft 455a. For example, the first low-speed gear 457e and the second low-speed gear 457f are coaxially sleeved on the intermediate shaft 455a. The intermediate shaft 455a outputs the torque converted by the reduction gear assembly 457.

As shown in FIGS. 6 and 7, the first axis 401, the second axis 402, and the third axis 403 are parallel to each other. Along the direction of the first axis 401, projections are formed on a plane perpendicular to the first axis 401, and projections of the first axis 401, the second axis 402, and the third axis 403 are located on the same straight line, which is defined as a first straight line L1. For example, the first straight line L1 extends along a front and rear direction. A plane passing through the first straight line L1 and extending along the direction of the first axis 401 is defined as a first plane (not shown), and the first plane is substantially a horizontal plane.

The right rear walking wheel 411R is driven by the second walking electric motor 42R, and the second walking electric motor 42R is connected to the right rear walking wheel 411R through a transmission mechanism 45 substantially the same as the transmission mechanism 45 connected to the left rear walking wheel 411L. For ease of reference, the transmission mechanism 45 connected to the left rear walking wheel 411L is defined as a left transmission mechanism 45L, and the transmission mechanism 45 connected to the right rear walking wheel 411R is defined as a right transmission mechanism 45R. To ensure the modularity and standardization of components, the right transmission mechanism 45R and the left transmission mechanism 45L are symmetrically arranged in the left and right direction. An axis of symmetry between the right transmission mechanism 45R and the left transmission mechanism 45L is a centerline between the right rear walking wheel 411R and the left rear walking wheel 411L in the left and right direction, where the centerline extends along the front and rear direction. In this example, the output shaft 423 of the second walking electric motor 42R is centered on the first axis 401 and extends along the first axis 401. The transmission shaft 455c of the right transmission mechanism 45R is centered on the second axis 402 and extends along the second axis 402. The intermediate shaft 455a of the right transmission mechanism 45R is centered on the third axis 403 and extends along the third axis 403.

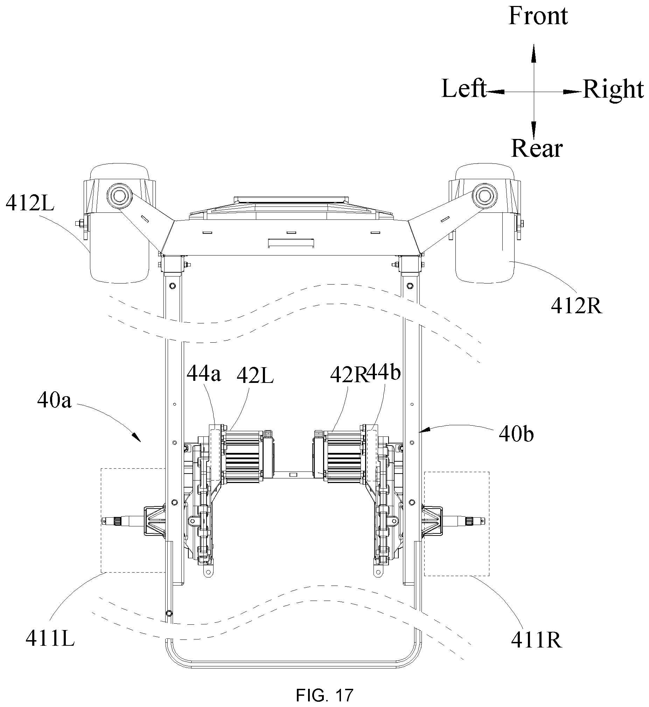

As shown in FIGS. 1 to 4 and 17, the present application provides an outdoor traveling device 100, and the outdoor traveling device 100 includes a power supply mechanism 20, a walking mechanism 40, a parking brake mechanism 44, and a control mechanism 70. The walking mechanism 40 includes walking wheels and a walking motor 42 that drives a walking wheel to rotate. The walking mechanism 40 includes a first walking mechanism 40a including a first walking wheel and a walking motor that drives the first walking wheel to rotate and a second walking mechanism 40b including a second walking wheel and a walking motor that drives the second walking wheel to rotate.

In this example, the walking mechanism 40 includes rear walking wheels 411 and front walking wheels 412. The rear walking wheels 411 include a left rear walking wheel 411L and a right rear walking wheel 411R. The front walking wheels 412 include a left front walking wheel 412L and a right front walking wheel 412R. A walking electric motor 42 drives the rear walking wheels 411 or the front walking wheels 412 to rotate, so as to implement a walking function of the outdoor traveling device 100. Optionally, one, two, three, or four walking electric motors 42 may be provided. In this example, two walking electric motors 42 are provided, and the two walking electric motors 42 drive the left rear walking wheel 411L and the right rear walking wheel 411R, respectively so that the outdoor traveling device 100 can turn in other directions deviating from the front and rear direction. For ease of reference, the walking electric motor 42 for driving the left rear walking wheel 411L is set as a first walking electric motor 42L, and the walking electric motor 42 for driving the right rear walking wheel 411R is set as a second walking electric motor 42R. In this example, the first walking mechanism 40a includes the left rear walking wheel 411L and the first walking electric motor 42L. The second walking mechanism 40b includes the right rear walking wheel 411R and the second walking electric motor 42R.

The parking brake mechanism 44 is configured to brake the rotation of the walking mechanism 40. In this example, the parking brake mechanism 44 includes a first parking brake mechanism 44a for braking the rotation of the first walking mechanism 40a and a second parking brake mechanism 44b for braking the rotation of the second walking mechanism 40b. The power supply mechanism 20 is configured to supply power to at least the walking mechanism 40 and the parking brake mechanism 44.

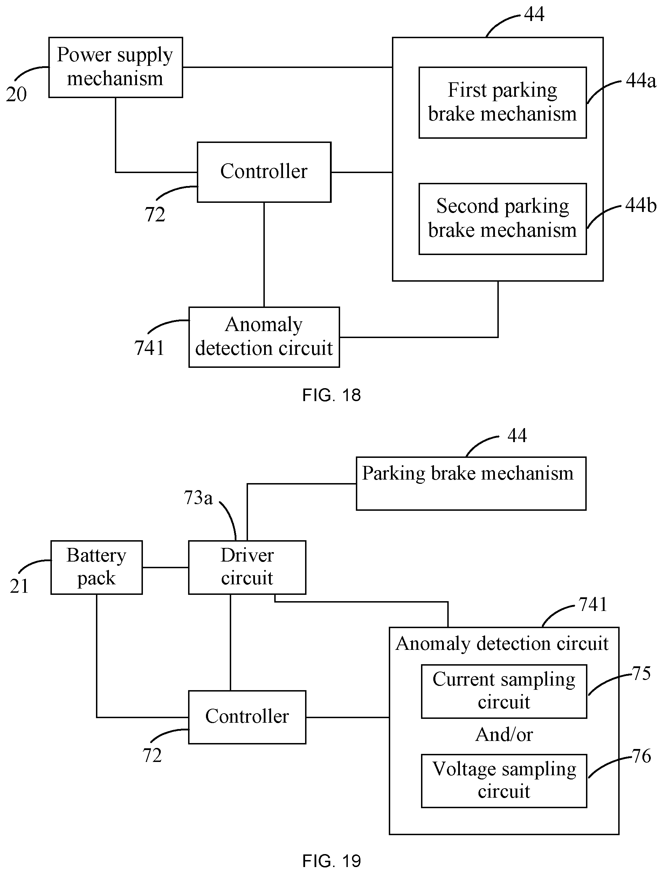

As shown in FIG. 18, the control mechanism 70 includes a controller 72 configured to control the parking brake mechanism 44 to switch between a braking state for braking the walking mechanism 40 and an unlocking state for releasing the walking mechanism 40. The control mechanism 70 further includes an anomaly detection circuit 741 connected to the parking brake mechanism 44 and the controller 72, where "connected" includes "electrically connected" and "communicatively connected". The anomaly detection circuit 741 is configured to detect a power supply input signal of the parking brake mechanism 44. The power supply input signal includes a power supply signal output from the power supply mechanism 20 and transmitted to the parking brake mechanism 44. The controller 72 is further configured to, in response to the power supply input signal exceeding a preset range, open a current loop flowing through the parking brake mechanism 44 to control the parking brake mechanism 44 to enter the braking state. The parking brake mechanism 44 includes an electromagnetic brake 441. The controller 72 controls the parking brake mechanism 44 to switch between the braking state and the unlocking state, improving the intelligence of a parking brake and increasing working conditions where the parking brake is used. The anomaly detection circuit 741 detects the power supply input signal, and when the power supply input signal exceeds the preset range, it indicates that a power supply state of the parking brake mechanism 44 is abnormal, and the controller 72 opens the current loop flowing through the parking brake mechanism 44 so that the parking brake mechanism 44 is de-energized to enter the braking state, thereby protecting the power supply safety and operation safety of the parking brake mechanism 44.

In this example, as shown in FIG. 19, the anomaly detection circuit 741 includes a current sampling circuit 75 configured to detect a current value in the current loop of the parking brake mechanism 44. In some examples, when the electromagnetic brake 441 is in the unlocking state, the controller 72 is configured to, in response to the current being less than or equal to 0.2 A or greater than or equal to 2 A, open the current loop to control the electromagnetic brake 441 to enter the braking state. For example, when the current value in the current loop is less than or equal to 0.2 A or greater than or equal to 2 A, it indicates a signal anomaly in the current loop, and different from the case where the electromagnetic brake 441 is de-energized since the outdoor traveling device 100 is powered off, the current value in the current loop shows an abnormal change: the current value is not within a current range in the de-energized state, and the current is less than or equal to 0.2 A. In some examples, the current value is not within the current range in the de-energized state, and the current is less than or equal to 0.3 A, 0.4 A, 0.5 A, 0.6 A, 0.7 A, 0.8 A, 0.9 A, or 1.0 A. In some examples, the signal anomaly in the current loop includes not only a small current anomaly but also an anomaly that the current in the current loop is greater than a preset range. For example, when the current value in the current loop is greater than or equal to 2 A, it indicates the anomaly that the current in the current loop is greater than the preset range. For example, when the current value in the current loop is greater than or equal to 2 A, 5 A, or 10 A, it indicates the anomaly that the current in the current loop is greater than the preset range.

In some examples, the current sampling circuit 75 includes one or more of a current sensing resistor, a Hall current sensor, a metal-oxide-semiconductor field-effect transistor (MOSFET), and an on-resistor so that one or more current parameters of a bus current and a phase current of the parking brake mechanism 44 can be detected and the current parameters are sent to the controller 72 in the form of signals.

In some examples, the anomaly detection circuit 741 includes a voltage sampling circuit 76 configured to detect an input voltage of the parking brake mechanism 44. In some examples, when the electromagnetic brake 441 is in the unlocking state, the controller 72 is configured to, in response to the input voltage being less than or equal to 2 V or greater than or equal to 20 V, open the current loop to control the electromagnetic brake 441 to enter the braking state. For example, when a voltage value of the input voltage is less than or equal to 2 V or greater than or equal to 20 V, it indicates the signal anomaly in the current loop, and different from the case where the electromagnetic brake 441 is de-energized since the outdoor traveling device 100 is powered off, the voltage value of the input voltage shows an abnormal change: the voltage value is not within a voltage range in the de-energized state, and the voltage value is less than or equal to 2 V. In some examples, the voltage value is not within the voltage range in the de-energized state, and the voltage value is less than or equal to 5 V. The voltage value is not within the voltage range in the de-energized state, and the voltage value is less than or equal to 7 V. In some examples, the signal anomaly in the input voltage includes not only a small voltage anomaly but also an anomaly that the voltage value of the input voltage is greater than a preset range. For example, when the voltage value of the input voltage is greater than or equal to 20 V, it indicates the anomaly that the voltage value of the input voltage is greater than the preset range. For example, when the voltage value of the input voltage is greater than or equal to 25 V, it indicates the anomaly that the voltage value of the input voltage is greater than the preset range.

In some examples, the voltage sampling circuit 76 includes one or more of an electromagnetic voltage transformer, a Hall voltage sensor, a voltage-dividing voltage sensor, a fiber-optic voltage sensor, and a resistor divider so that the input voltage of the parking brake mechanism 44 can be detected and the input voltage parameter is sent to the controller 72 in the form of a signal.

The control mechanism 70 further includes a driver circuit 73a connected to the controller 72, and the controller 72 controls the current loop of the electromagnetic brake 441 to be open or closed through the driver circuit 73a. For example, the controller 72 adopts a dedicated control chip, for example, a single-chip microcomputer or a microcontroller unit (MCU). Specifically, the controller 72 controls an on or off state of a switching element in the driver circuit 73a through the control chip to control the current loop of the electromagnetic brake 441 to be open or closed. For example, the driver circuit 73a includes a power tube (such as a MOSFET), and the power tube changes the on state according to a control signal output from the controller 72 to change states of a voltage and/or a current applied to the electromagnetic brake 441 by a battery pack 21, so as to switch the electromagnetic brake 441 between the braking state and the unlocking state. For example, the controller 72 is disposed on a control circuit board 71. The control circuit board 71 includes a printed circuit board (PCB) or a flexible printed circuit (FPC).

In this example, for the outdoor traveling device 100 having the first walking mechanism 40a and the second walking mechanism 40b, the parking brake mechanism 44 correspondingly includes a first parking brake mechanism 44a and a second parking brake mechanism 44b. The first parking brake mechanism 44a is configured to brake the rotation of the first walking mechanism 40a, and the second parking brake mechanism 44b is configured to brake the rotation of the second walking mechanism 40b. The parking brake mechanisms 44 and the walking mechanisms 40 are correspondingly arranged so that the user can more reliably control the walking, and when different walking mechanisms 40 have different situations, the parking brake mechanisms 44 can provide corresponding braking forces according to different rotational speeds and the like. The brake is more reliable.

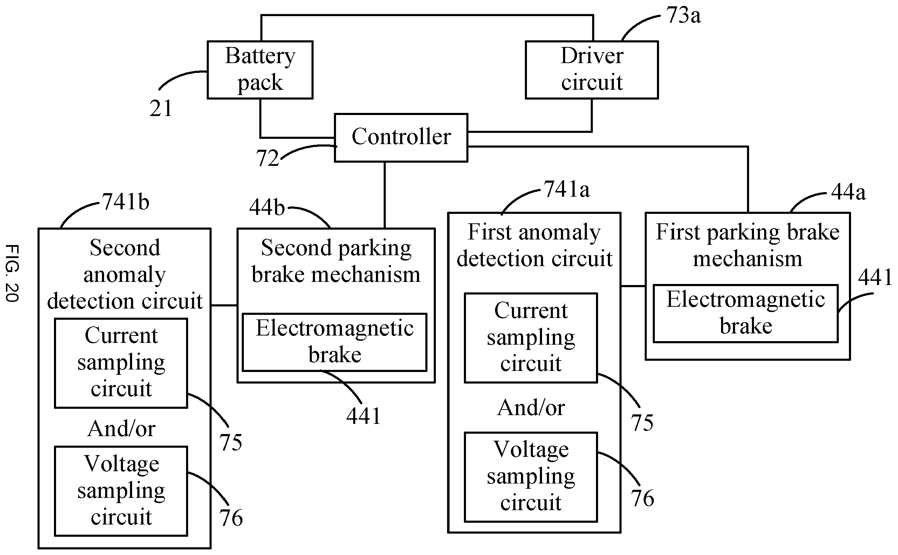

As shown in FIG. 20, the control mechanism 70 is configured to control the parking brake mechanism 44 to switch between the braking state for braking the walking mechanism 40 and the unlocking state for releasing the walking mechanism 40. The control mechanism 70 is correspondingly provided with a first anomaly detection circuit 741a and a second anomaly detection circuit 741b. The first anomaly detection circuit 741a is connected to the first parking brake mechanism 44a and the controller 72, where "connected" includes "electrically connected" and "communicatively connected". The first anomaly detection circuit 741a is configured to detect a first power supply input signal of the first parking brake mechanism 44a. The second anomaly detection circuit 741b is configured to detect a second power supply input signal of the second parking brake mechanism 44b. The controller 72 is configured to, when the first power supply input signal exceeds a preset range, control the first parking brake mechanism 44a and the second parking brake mechanism 44b to enter the braking state, separately. Optionally, the controller 72 is configured to, when the second power supply input signal exceeds a preset range, control the first parking brake mechanism 44a and the second parking brake mechanism 44b to enter the braking state, separately. In this example, when any power supply input signal exceeds the preset range, the controller 72 controls the first parking brake mechanism 44a and the second parking brake mechanism 44b to enter the braking state, separately.

In this example, when multiple parking brake mechanisms 44 are provided and a power supply anomaly of any one of the parking brake mechanisms 44 is detected, the multiple parking brake mechanisms 44 enter the braking state separately, thereby ensuring the parking stability of the outdoor traveling device 100 and the walking safety of the outdoor traveling device 100.

The first parking brake mechanism 44a includes the electromagnetic brake. The second parking brake mechanism 44b includes the electromagnetic brake. For ease of reference, the first parking brake mechanism 44a includes the electromagnetic brake 441. The second parking brake mechanism 44b includes the electromagnetic brake 441.

In this example, the first anomaly detection circuit 741a includes the current sampling circuit 75 configured to detect a current value in a current loop of the first parking brake mechanism 44a. In some examples, when the electromagnetic brake 441 is in the unlocking state, the controller 72 is configured to, in response to the current being less than or equal to 0.2 A or greater than or equal to 2 A, open the current loop to control the electromagnetic brake 441 to enter the braking state. For example, when the current value in the current loop is less than or equal to 0.2 A or greater than or equal to 2 A, it indicates the signal anomaly in the current loop, and different from the case where the electromagnetic brake 441 is de-energized since the outdoor traveling device 100 is powered off, the current value in the current loop shows an abnormal change: the current value is not within the current range in the de-energized state, and the current is less than or equal to 0.2 A. In some examples, the current value is not within the current range in the de-energized state, and the current is less than or equal to 0.3 A, 0.4 A, 0.5 A, 0.6 A, 0.7 A, 0.8 A, 0.9 A, or 1.0 A. In some examples, the signal anomaly in the current loop includes not only the small current anomaly but also the anomaly that the current in the current loop is greater than the preset range. For example, when the current value in the current loop is greater than or equal to 2 A, it indicates the anomaly that the current in the current loop is greater than the preset range. For example, when the current value in the current loop is greater than or equal to 2 A, 5 A, or 10 A, it indicates the anomaly that the current in the current loop is greater than the preset range.

In some examples, the current sampling circuit 75 includes one or more of the current sensing resistor, the Hall current sensor, the MOSFET, and the on-resistor so that one or more current parameters of the bus current and the phase current of the parking brake mechanism 44 can be detected and the current parameters are sent to the controller 72 in the form of signals.

In some examples, the first anomaly detection circuit 741a includes the voltage sampling circuit 76 configured to detect an input voltage of the first parking brake mechanism 44a. In some examples, when the electromagnetic brake 441 is in the unlocking state, the controller 72 is configured to, in response to the input voltage being less than or equal to 2 V or greater than or equal to 20 V, open the current loop to control the electromagnetic brake 441 to enter the braking state. For example, when the voltage value of the input voltage is less than or equal to 2 V or greater than or equal to 20 V, it indicates the signal anomaly in the current loop, and different from the case where the electromagnetic brake 441 is de-energized since the outdoor traveling device 100 is powered off, the voltage value of the input voltage shows an abnormal change: the voltage value is not within the voltage range in the de-energized state, and the voltage value is less than or equal to 2 V. In some examples, the voltage value is not within the voltage range in the de-energized state, and the voltage value is less than or equal to 5 V. The voltage value is not within the voltage range in the de-energized state, and the voltage value is less than or equal to 7 V. In some examples, the signal anomaly in the input voltage includes not only the small voltage anomaly but also the anomaly that the voltage value of the input voltage is greater than the preset range. For example, when the voltage value of the input voltage is greater than or equal to 20 V, it indicates the anomaly that the voltage value of the input voltage is greater than the preset range. For example, when the voltage value of the input voltage is greater than or equal to 25 V, it indicates the anomaly that the voltage value of the input voltage is greater than the preset range.

In some examples, the voltage sampling circuit 76 includes one or more of the electromagnetic voltage transformer, the Hall voltage sensor, the voltage-dividing voltage sensor, the fiber-optic voltage sensor, and the resistor divider so that the input voltage of the parking brake mechanism 44 can be detected and the input voltage parameter is sent to the controller 72 in the form of a signal.

In some examples, the second anomaly detection circuit 741b and the first anomaly detection circuit 741a are the same sampling circuits. For example, the first anomaly detection circuit 741a is the current sampling circuit 75, and the second anomaly detection circuit 741b is the current sampling circuit 75. For example, the first anomaly detection circuit 741a is the voltage sampling circuit 76, and the second anomaly detection circuit 741b is the voltage sampling circuit 76. In some examples, the second anomaly detection circuit 741b and the first anomaly detection circuit 741a are different sampling circuits. For example, the first anomaly detection circuit 741a is the current sampling circuit 75, and the second anomaly detection circuit 741b is the voltage sampling circuit 76. For example, the first anomaly detection circuit 741a is the voltage sampling circuit 76, and the second anomaly detection circuit 741b is the current sampling circuit 75.

In some examples, after the current loop flowing through the parking brake mechanism 44 is opened to control the parking brake mechanism 44 to enter the braking state when the power supply input signal exceeds the preset range, the user needs to use a manual release assembly 442 to release the parking brake mechanism 44 from the braking state and restart the outdoor traveling device 100. In some examples, the restarted outdoor traveling device 100 automatically enters a low-speed traveling state, and when the controller 72 no longer receives a signal instruction that the power supply input signal exceeds the preset range, the controller 72 controls the walking mechanism 40 to enter a normal traveling state.

In some examples, the outdoor traveling device 100 further includes a human-machine interaction mechanism 60 configured to issue an anomaly alarm prompt. The details of the human-machine interaction mechanism 60 are described below. The human-machine interaction mechanism 60 is connected to the controller 72. When the anomaly detection circuit 741 detects that the power supply input signal of the parking brake mechanism 44 exceeds the preset range, the controller 72 controls the human-machine interaction mechanism 60 to issue the anomaly alarm prompt, including, but not limited to, static or dynamic display and an acoustic or optical prompt.

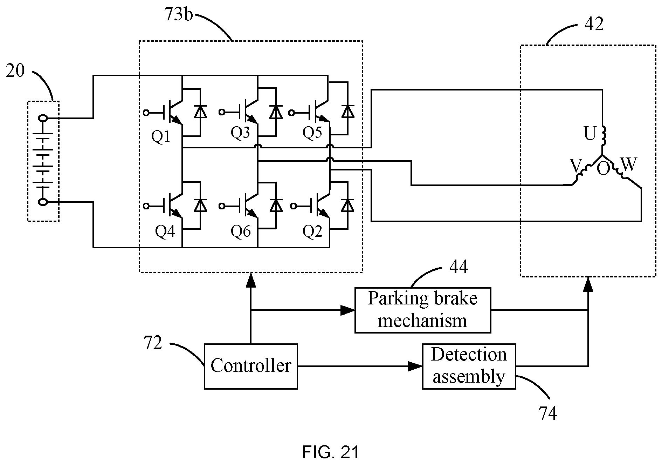

In the outdoor traveling device 100 of the present application, the controller 72 is further configured to control an operating state of the walking motor 42. As shown in FIG. 21, a driver circuit 73b is connected to the controller 72, and the controller 72 controls a current loop of the walking motor 42 to be open or closed through the driver circuit 73b. For example, the controller 72 adopts the dedicated control chip, for example, the single-chip microcomputer or the MCU. Specifically, the controller 72 controls on or off states of switching elements in the driver circuit 73b through the control chip to control a current applied to the walking motor 42. For example, the driver circuit 73b includes multiple power tubes (such as Q1, Q2, Q3, Q4, Q5, and Q6), and the power tubes change their on states according to control signals output from the controller 72 to change states of a voltage and/or a current applied to the walking motor 42 by the battery pack 21, so as to control the operation of the walking motor 42. The driver circuit 73b may be a three-phase bridge driver circuit including six controllable semiconductor power devices (such as field-effect transistors (FETs), bipolar junction transistors (BJTs), or insulated-gate bipolar transistors (IGBTs)). It is to be understood that the above switching elements may be any other types of solid-state switches, such as IGBTs or BJTs.

The controller 72 is further configured to, when receiving a braking instruction, control the parking brake mechanism 44 to enter the braking state and in the braking state, acquire a current-related parameter of the walking motor 42 and output a reverse rotation control signal to the driver circuit 73b based on the parameter to control the walking motor 42. The current-related parameter of the walking motor 42 is detected, and when it is determined that a current of the walking motor 42 is abnormal in the braking state, the walking motor 42 is braked through the reverse rotation control of the controller 72, thereby preventing a failure to brake the outdoor traveling device 100 in response to a failure or an anomaly of the parking brake mechanism 44, which results in an abnormal speed of the vehicle, a safety problem, and damages to the outdoor traveling device 100 and people. Meanwhile, in terms of sensors or detection elements for detecting parameters, an additional sensor or detection element is not required by characterizing a braking anomaly by the current-related parameter of the walking motor 42. In this example, when the controller 72 outputs the reverse rotation control signal to the motor to brake the motor, the parking brake mechanism 44 is always in the braking state.

In this example, the parking brake mechanism 44 includes the electromagnetic brake 441, and the controller 72 controls the parking brake mechanism 44 to switch between the braking state and the unlocking state. When the electromagnetic brake 441 is de-energized to automatically brake the rotation of an output shaft 423, the electromagnetic brake 441 enters the braking state.

In this example, the control mechanism 70 includes a detection assembly 74 configured to detect the current-related parameter of the walking motor 42. For example, the detection assembly 74 is configured to detect a phase current of the walking motor 42, and when determining that a phase current-related parameter of the walking motor 42 is greater than or equal to a preset threshold, the controller 72 determines a braking anomaly of the parking brake mechanism 44, that is, the electromagnetic brake 441. Optionally, it is determined that the electromagnetic brake 441 fails to brake the output shaft 423. In some examples, the detection assembly 74 includes one or more of the current sensing resistor, the Hall current sensor, the MOSFET, and the on-resistor so that the phase current-related parameter of the walking motor 42 in the walking mechanism 40 can be detected and the phase current parameter is sent to the controller 72 in the form of a signal. It is to be understood that the phase current-related parameter is obtained by performing logical processing on the detected phase current, for example, calculating a rate of change, calculating an integral value, or calculating an integral value of the rate of change. In some examples, the phase current-related parameter is obtained by performing the logical processing on the detected phase current. For example, output power, output torque, and a commutation parameter of the electric motor are calculated according to known formulas.

In some examples, the detection assembly 74 is configured to detect a winding demagnetization time of the walking motor 42, and the controller 72 acquires the winding demagnetization time of the walking motor 42, estimates the phase current by using the demagnetization time and a stored algorithm, and acquires the phase current-related parameter of the walking motor 42 in the walking mechanism 40.

In some examples, the detection assembly 74 is configured to detect the winding demagnetization time of the walking motor 42, and when determining that a winding demagnetization time-related parameter of the walking motor 42 is greater than or equal to a preset threshold, the controller 72 determines the braking anomaly of the parking brake mechanism 44, that is, the electromagnetic brake 441. Optionally, it is determined that the electromagnetic brake 441 fails to brake the output shaft 423.

In this example, the walking motor 42 is specifically the first walking electric motor 42L and/or the second walking electric motor 42R. This is related to the number of walking electric motors 42 in the outdoor traveling device 100 and the number of walking electric motors 42 whose rotation is braked by the parking brake mechanism 44.

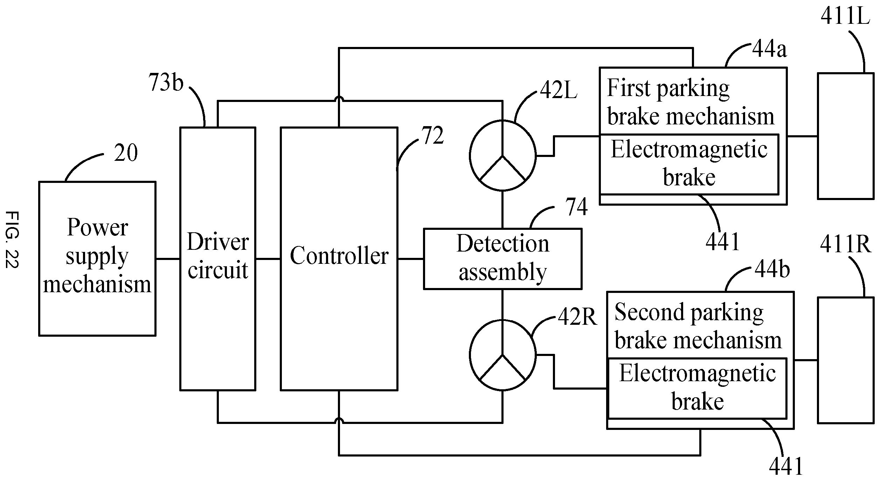

As shown in FIG. 22, the parking brake mechanism 44 includes the first parking brake mechanism 44a and the second parking brake mechanism 44b, the first parking brake mechanism 44a is configured to brake the rotation of the first walking mechanism 40a, and the second parking brake mechanism 44b is configured to brake the rotation of the second walking mechanism 40b. With the first parking brake mechanism 44a as an example, the first parking brake mechanism 44a includes the electromagnetic brake 441, and the first walking mechanism 40a includes the first walking electric motor 42L and the left rear walking wheel 411L. The detection assembly 74 detects a phase current of the first walking electric motor 42L and sends the phase current of the first walking electric motor 42L to the controller 72 in the form of a signal. When the controller 72 determines that the phase current is greater than or equal to a preset threshold, the controller 72 determines a braking anomaly of the first parking brake mechanism 44a, that is, the electromagnetic brake 441. The controller 72 outputs a control signal for reversely rotating the first walking electric motor 42L to brake the first walking electric motor 42L so that the left rear walking wheel 411L stops rotating, thereby preventing the failure to brake the outdoor traveling device 100 in response to the failure or the anomaly of the parking brake mechanism 44, which results in the abnormal speed of the vehicle, the safety problem, and the damages to the outdoor traveling device 100 and people. In this example, the preset threshold is greater than or equal to 50 A. In this example, the preset threshold is greater than or equal to 40 A. In this example, the preset threshold is greater than or equal to 55 A. In this example, the preset threshold is greater than or equal to 60 A.

In this example, the controller 72 outputs the control signal for reversely rotating the first walking electric motor 42L so that the first walking electric motor 42L rotates reversely at a certain speed, with a preset acceleration, or with preset torque to be braked. In some examples, the controller 72 outputs the control signal for reversely rotating the first walking electric motor 42L so that the first walking electric motor 42L rotates reversely at a fixed preset speed, with a fixed preset acceleration, or with fixed preset torque. In some examples, the controller 72 outputs the control signal for reversely rotating the first walking electric motor 42L so that the first walking electric motor 42L rotates reversely at a dynamically adjusted speed, with a dynamically adjusted acceleration, or with dynamically adjusted torque. The controller 72 dynamically adjusts the speed, acceleration, or torque of reverse rotation of the first walking electric motor 42 L based on phase current data of the first walking electric motor 42L so that a magnitude of a reverse rotation signal is dynamically adjusted according to an operating situation of the first walking electric motor 42L, the adjustment is more intelligent, and the first walking electric motor 42L can be better controlled to be braked according to the operating state. For example, the controller 72 is configured to, when receiving the braking instruction, control the driver circuit 73b to perform short-circuit braking on the first walking electric motor 42L, which is braked at a fast speed. In this example, the first walking electric motor 42L is a three-phase brushless electric motor, and the controller 72 is configured to, when receiving the braking instruction, control the driver circuit 73b to perform three-phase short-circuit braking on the first walking electric motor 42L.

In some examples, the second parking brake mechanism 44b includes the electromagnetic brake 441, and the second walking mechanism 40b includes the second walking electric motor 42R and the right rear walking wheel 411R. The controller 72 controls the second parking brake mechanism 44b by the same control method as the first parking brake mechanism 44a. In this example, the detection assembly 74 detects phase currents of the first walking electric motor 42L and the second walking electric motor 42R and sends the phase currents of the first walking electric motor 42L and the second walking electric motor 42R to the controller 72 in the form of signals. When the controller 72 determines that the phase current of any one of the first walking electric motor 42L and the second walking electric motor 42R is greater than or equal to the preset threshold, the controller 72 determines the braking anomaly. The controller 72 outputs control signals for reversely rotating the first walking electric motor 42L and the second walking electric motor 42R so that the left rear walking wheel 411L and the right rear walking wheel 411R stop rotating. To prevent the failure to brake the outdoor traveling device 100 in response to the failure or the anomaly of any parking brake mechanism 44, which results in the abnormal speed of the vehicle, the safety problem, and the damages to the outdoor traveling device 100 and people, as long as the controller 72 determines the failure or the anomaly of any parking brake mechanism 44, both the first walking electric motor 42L and the second walking electric motor 42R are braked.

In some examples, the braking instruction is output through a user operation. For example, the electromagnetic brake 441 of the parking brake mechanism 44 is de-energized through the user operation to enter the braking state. In some examples, the braking instruction is output from the control mechanism when the outdoor traveling device 100 is faulty. For example, the anomaly detection circuit 741 of the control unit detects that the power supply input signal exceeds the preset range and outputs the braking instruction to enter the braking state to the controller 72.

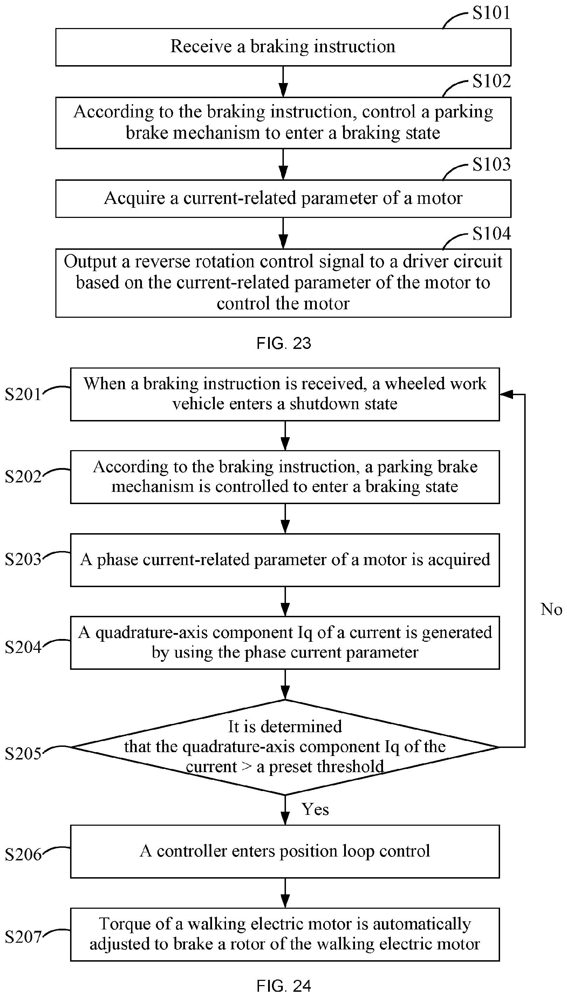

As shown in FIG. 23, the present application further provides a control method of the outdoor traveling device 100 in response to the braking failure or anomaly of the parking brake mechanism 44. The control method of the outdoor traveling device 100 includes the steps below.

In S101, the braking instruction is received.

In S102, according to the braking instruction, the parking brake mechanism is controlled to enter the braking state.

In S103, the current-related parameter of the motor is acquired.

In S104, the reverse rotation control signal is output to the driver circuit based on the current-related parameter of the motor to control the motor.

The current-related parameter of the motor is detected, and when it is determined that the current of the motor is abnormal in the braking state, the motor is braked through the reverse rotation control signal from the controller 72, thereby preventing the failure to brake the outdoor traveling device 100 in response to the failure or the anomaly of the parking brake mechanism 44, which results in the abnormal speed of the vehicle, the safety problem, and the damages to the outdoor traveling device 100 and people.

As shown in FIG. 24, another control method of the outdoor traveling device 100 in response to the braking failure or anomaly of the parking brake mechanism is disclosed. The control method includes the specific steps below.

In S201, when the braking instruction is received, the outdoor traveling device enters a shutdown state.

In some examples, the braking instruction is output through the user operation. For example, the electromagnetic brake 441 of the parking brake mechanism 44 is de-energized through the user operation to enter the braking state. In some examples, the braking instruction is output from the control unit when the outdoor traveling device 100 is faulty. For example, the anomaly detection circuit 741 of the control unit detects that the power supply input signal exceeds the preset range and outputs the braking instruction to enter the braking state to the controller 72.

In S202, according to the braking instruction, the parking brake mechanism is controlled to enter the braking state.

The parking brake mechanism 44 continues to brake the rotation of the walking mechanism 40. The parking brake mechanism 44 includes the electromagnetic brake 441. The controller 72 controls a power supply state of the electromagnetic brake 441 to control the braking state or the unlocking state of the parking brake mechanism 44. When the electromagnetic brake 441 enters the braking state, the controller 72 controls the electromagnetic brake 441 to be de-energized, and the electromagnetic brake 441 prevents the rotation of the rotor 422 of the walking electric motor 42.

In S203, the phase current-related parameter of the motor is acquired.

The phase current-related parameter is obtained by performing the logical processing on the detected phase current, for example, calculating the rate of change, calculating the integral value, or calculating the integral value of the rate of change.

In S204, a quadrature-axis component Iq of the current is generated by using the phase current parameter.

In this example, the controller controls the walking electric motor 42 through field-oriented control (FOC). It is known in the related art that in the FOC control of the electric motor, a three-phase current of the electric motor can be decomposed into two components: a direct-axis component Id of the current and the quadrature-axis component Iq of the current. The direct-axis component of the current, that is, a direct-axis current, is mainly used for controlling the flux of the electric motor. The quadrature-axis component of the current, that is, a quadrature-axis current, is mainly used for controlling the torque of the electric motor.

In S205, it is determined that the quadrature-axis component Iq of the current is greater than a preset threshold. If so, S206 is performed. If not, S201 is performed.

When it is determined that the quadrature-axis component Iq of the current is greater than the preset threshold, for example, the quadrature-axis component Iq of the current is greater than 100, the controller 72 determines the braking anomaly of the parking brake mechanism 44, that is, the electromagnetic brake 441. Optionally, it is determined that the electromagnetic brake 441 fails to brake the output shaft 423.

In S206, the controller enters position loop control.

A loop refers to closed-loop feedback. A position loop refers to that a difference between a target position and a current position is reflected by an electric motor encoder back to the controller 72. The function of the position loop is to generate a speed instruction of the electric motor and make the electric motor accurately positioned and tracked.

In S207, the torque of the walking electric motor is automatically adjusted to brake the rotor of the walking electric motor.

In this example, the controller 72 automatically adjusts the torque of the walking electric motor 42 based on a state of the phase current or the quadrature-axis current of the walking electric motor 42. For example, the controller 72 controls the walking electric motor 42 to output negative torque to brake the rotor 422 of the walking electric motor 42.

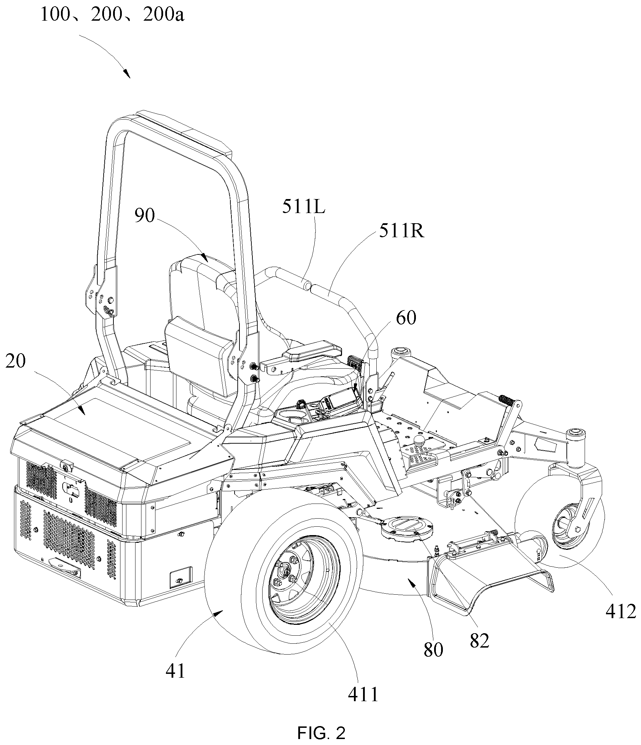

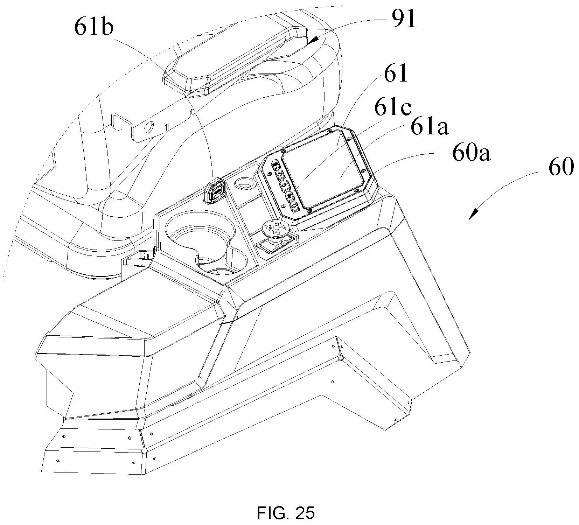

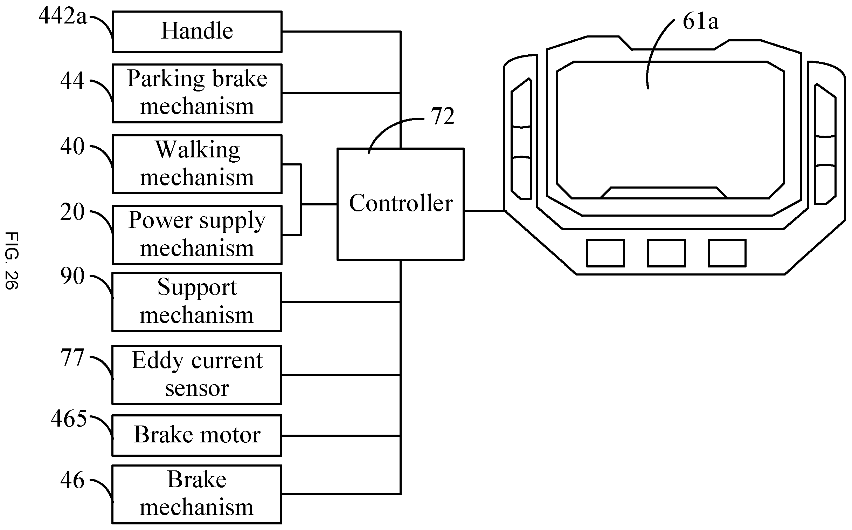

Referring to FIGS. 2, 25, and 26, the outdoor traveling device 100 of the present application further includes the human-machine interaction mechanism 60. In this example, the outdoor traveling device 100 includes a display device 60a configured to provide feedback, that is, information prompts, for the user. The display device 60a may be, for example, an audible indicator, a liquid crystal display (LCD), a light-emitting diode (LED) display, an organic light-emitting diode (OLED) display, or an organic electroluminescent (EL) display. The display device 60a includes a display screen 61, a switch assembly 61b, and multiple operating keys 61c. In some examples, the display device 60a includes a touchscreen so that the switch assembly 61b and the multiple operating keys 61c are integrated onto the screen. The touchscreen includes a resistive, capacitive, infrared, or surface acoustic wave touchscreen. In this example, the display screen 61 reflects a working state of the outdoor traveling device 100 on a display interface 61a. The display interface 61a is understood as a display region directly observed by the user.

The display interface 61a may display different state information as required. For example, as described above, the controller 72 displays a position state of a handle 442a of the manual release assembly 442 on the display interface 61a. For example, when the handle 442a of the manual release assembly 442 is detected to be at an unlocking position, the controller 72 displays an alarm reminder on the display interface 61a to prompt the user to reset the handle 442a, which may be presenting an icon representing the handle 442a on the display interface 61a, lighting the icon representing the handle 442a, making the icon representing the handle 442a flicker or displayed in a special color, or the like. For example, the display interface 61a has different display contents representing different position states of the handle 442a, and the user can clearly distinguish which position state the handle 442a is in according to the different display contents.

For another example, when the power supply input signal exceeds the preset range, an anomaly alarm prompt may be displayed, indicating that the power supply state of the parking brake mechanism 44 is abnormal. For another example, when the current of the motor is abnormal in the braking state, an anomaly alarm prompt is displayed, indicating that the braking function of the parking brake mechanism 44 is abnormal. Other warning information and fault information may be omitted here. The above anomaly alarm prompt includes making an icon on the display interface 61a lighted, flicker, or displayed in a special color. Of course, special codes, special symbols, and the like may be displayed, and known alarm contents are prompted according to the instructions.

For another example, the display interface 61a may display information such as a fast or slow walking speed of the walking mechanism 40, a fast or slow rotational speed of a working element, a magnitude of an energy efficiency state of the outdoor traveling device 100, the remaining power information of the battery pack 21, and the normal braking or release state. Moreover, the parking or stop or the parking release or activation of the outdoor traveling device 100 in accordance with operation instructions of the user is prompted.

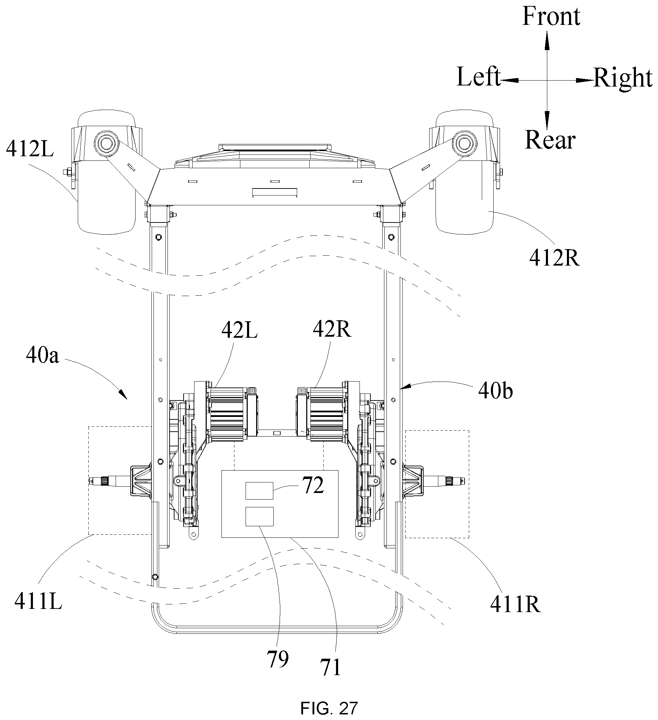

In the walking mechanism 40 of the outdoor traveling device 100 shown in FIGS. 1 to 4 and 27 to 28, the first walking mechanism 40a includes the left rear walking wheel 411L and the first walking electric motor 42L. The second walking mechanism 40b includes the right rear walking wheel 411R and the second walking electric motor 42R. The first walking electric motor 42L and the second walking electric motor 42R independently drive the left rear walking wheel 411L and the right rear walking wheel 411R, respectively.

The outdoor traveling device 100 has a heavy weight, for example, greater than 500 kg. The outdoor traveling device 100 of the present application has a high traveling speed, for example, greater than or equal to 19.5 km/h. When a heavy object is dragged at a high speed or sudden acceleration or deceleration occurs, the walking electric motor 42 has too large output power, easily damaging the battery pack 21 for the outdoor traveling device 100 powered by the direct current battery pack 21.

In this example, the controller 72 is configured to control the operation of the first walking electric motor 42L and the second walking electric motor 42R based on the input first target rotational speed and second target rotational speed, respectively. A power limiting unit 79 is further included, which is configured to limit input power of the first walking electric motor 42L or the second walking electric motor 42R.

Since the outdoor traveling device 100 is provided with the first walking electric motor 42L and the second walking electric motor 42R that are independently controlled, if the power limiting unit 79 is used to limit the power of the first walking electric motor 42L or the second walking electric motor 42R, the power limiting between the first walking electric motor 42L and the second walking electric motor 42R should be controlled in coordination to prevent the outdoor traveling device 100 from steering out of control.

In this example, the controller 72 is configured to, when an electrical parameter of the first walking electric motor 42L satisfies a preset condition, control the first walking electric motor 42L to enter a power limiting mode through the power limiting unit 79 and output a corresponding rotational speed attenuation factor based on a rotational speed of the first walking electric motor 42L in the power limiting mode. The second target rotational speed is corrected based on the rotational speed attenuation factor to drive the rotation of the second walking electric motor 42R. For example, the controller 72 adopts the dedicated control chip, for example, the single-chip microcomputer or the MCU.

It is known in the related art that P = aT × N, where a denotes a constant, T denotes output torque of the electric motor, and N denotes an output speed of the electric motor. As can be known from the above formula, the output torque T of the electric motor is directly proportional to power P of the electric motor, and the torque T is inversely proportional to the output speed N of the electric motor. Therefore, to ensure the output torque of the electric motor, the rotational speed is reduced when the power exceeds a threshold.

During actual use of the outdoor traveling device 100, when the power of one electric motor (for example, the first walking electric motor 42L) is limited, the controller 72 on the power limiting side (for example, the side of the first walking electric motor 42L) sends a current power change state and the rotational speed attenuation factor of a current speed relative to a pre-attenuation speed to the controller 72 of the opposite electric motor (for example, the second walking electric motor 42R) via a bus (at an increased transmission frequency). The controller 72 on the opposite side (for example, the second walking electric motor 42R) uses the received rotational speed attenuation factor as a rotational speed attenuation factor for target speed control and gradually changes a current speed to a speed given currently according to the rotational speed attenuation factor. To ensure the output torque of the walking electric motor 42, when it is determined that the power of the walking electric motor 42 exceeds the threshold according to the electrical parameter of the walking electric motor 42 satisfying the preset condition, the power of the walking electric motor 42 is limited through the power limiting unit 79, thereby ensuring that a difference between the rotational speeds of the first walking electric motor 42L and the second walking electric motor 42R is within a certain range and ensuring the traveling safety of the outdoor traveling device 100.

In some examples, the controller 72 is configured to, when a bus current of the first walking electric motor 42L is greater than or equal to a current threshold, control the first walking electric motor 42L to enter the power limiting mode through the power limiting unit 79. In this example, the control mechanism 70 includes the detection assembly 74 connected to the controller 72 and configured to detect the bus current of the first walking electric motor 42L. In some examples, the detection assembly 74 includes one or more of the current sensing resistor, the Hall current sensor, the MOSFET, and the on-resistor so that a bus current-related parameter of the first walking electric motor 42L can be detected and the bus current parameter is sent to the controller 72 in the form of a signal. It is to be understood that the bus current-related parameter is obtained by performing logical processing on the detected bus current, for example, calculating a rate of change, calculating an integral value, or calculating an integral value of the rate of change.

For example, the detection assembly 74 detects the bus current of the first walking electric motor 42L and sends detected data about the bus current to the controller 72 in the form of signals. After determining that the bus current of the first walking electric motor 42L is greater than or equal to the current threshold, the controller 72 controls the first walking electric motor 42L to enter the power limiting mode through the power limiting unit 79. Optionally, in the power limiting mode, the operating rotational speed of the first walking electric motor 42L is reduced. In the power limiting mode, the operating rotational speed of the first walking electric motor 42L is a first limited rotational speed. For example, the first limited rotational speed is dynamically adjusted according to a state of the bus current of the first walking electric motor 42L. For example, the first limited rotational speed includes multiple preset rotational speeds, and a preset rotational speed value corresponding to the first limited rotational speed is selected according to the state of the bus current of the first walking electric motor 42L.

In some examples, the power limiting unit 79 is an arithmetic unit of the controller 72. In some examples, the power limiting unit 79 is an independent control chip such as the single-chip microcomputer or the MCU. The above is not intended to limit the substantive content of the present application.

In this example, the controller 72 is further configured to output the rotational speed attenuation factor based on the first target rotational speed and the first limited rotational speed in the power limiting mode. Optionally, the rotational speed attenuation factor is output according to the ratio of the first target rotational speed to the first limited rotational speed. Optionally, an attenuation factor calculation model is established based on the first target rotational speed and the first limited rotational speed, the corresponding calculation model is stored in the controller 72, and the corresponding attenuation factor is retrieved according to different first target rotational speeds and first limited rotational speeds.

In this example, after the first walking electric motor 42L exits the power limiting mode, the controller 72 reduces the rotational speed attenuation factor of the second walking electric motor 42R according to a defined program so that the second walking electric motor 42R also exits the power limiting mode. Optionally, the rotational speed attenuation factor is reduced to reduce a difference between a second limited rotational speed of the second walking electric motor 42R in the power limiting mode and the second target rotational speed so that the rotational speed of the second walking electric motor 42R gradually returns to the second target rotational speed.

In some examples, the controller 72 may be further configured to, when an electrical parameter of the second walking electric motor 42R satisfies a preset condition, control the second walking electric motor 42R to enter the power limiting mode through the power limiting unit 79 and output a corresponding rotational speed attenuation factor based on a rotational speed of the second walking electric motor 42R in the power limiting mode. The first target rotational speed is corrected based on the rotational speed attenuation factor to drive the rotation of the first walking electric motor 42L.

In some examples, the controller 72 is configured to, when the electrical parameter of the first walking electric motor 42L satisfies the preset condition and the electrical parameter of the second walking electric motor 42R satisfies the preset condition, control the first walking electric motor 42L and the second walking electric motor 42R to enter the power limiting mode separately through the power limiting unit 79, output a corresponding first rotational speed attenuation factor based on the rotational speed of the first walking electric motor 42L in the power limiting mode, output a corresponding second rotational speed attenuation factor based on the rotational speed of the second walking electric motor 42R in the power limiting mode, determine that the first rotational speed attenuation factor is greater than the second rotational speed attenuation factor, and correct the second target rotational speed based on the first rotational speed attenuation factor to drive the rotation of the second walking electric motor 42R. Alternatively, the controller 72 determines that the second rotational speed attenuation factor is greater than the first rotational speed attenuation factor and corrects the first target rotational speed based on the second rotational speed attenuation factor to drive the rotation of the first walking electric motor 42L. Thus, it is ensured that the difference between the rotational speeds of the first walking electric motor 42L and the second walking electric motor 42R is within a certain range, and the traveling safety of the outdoor traveling device 100 is ensured.

Based on the same concept, the outdoor traveling device 100 includes the power limiting unit 79 configured to limit the input power of the first walking electric motor 42L or the second walking electric motor 42R. The controller 72 is configured to, when the electrical parameter of the first walking electric motor 42L satisfies the preset condition, control the first walking electric motor 42L to enter the power limiting mode through the power limiting unit 79 and reduce the rotational speed of the second walking electric motor 42R. Alternatively, the controller 72 is configured to, when the electrical parameter of the second walking electric motor 42R satisfies the preset condition, control the second walking electric motor 42R to enter the power limiting mode through the power limiting unit 79 and reduce the rotational speed of the first walking electric motor 42L. Alternatively, the controller 72 is configured to, when the electrical parameter of the first walking electric motor 42L satisfies the preset condition and the electrical parameter of the second walking electric motor 42R satisfies the preset condition, control the first walking electric motor 42L and the second walking electric motor 42R to enter the power limiting mode separately through the power limiting unit 79, determine that the first limited rotational speed of the first walking electric motor 42L is lower than the second limited rotational speed of the second walking electric motor 42R, and reduce the rotational speed of the second walking electric motor 42R.

In this example, the controller 72 controls the first walking electric motor 42L and the second walking electric motor 42R separately and independently. In some examples, dual controllers 72 are used. For example, the controller 72 adopts dual MCUs. The dual controllers 72 independently control the first walking electric motor 42L and the second walking electric motor 42R, respectively. It is to be understood that the dual controllers 72 may be disposed on the same control circuit board, or the dual controllers 72 may be separately disposed on two control circuit boards. Two controllers are communicatively connected and control the first walking electric motor 42L and the second walking electric motor 42R in coordination when the rotational speed or power changes.

In some examples, the controller 72 controls the first walking electric motor 42L and the second walking electric motor 42R independently by using an algorithm. The first walking electric motor 42L and the second walking electric motor 42R are controlled in coordination by using the algorithm when the rotational speed or power changes.

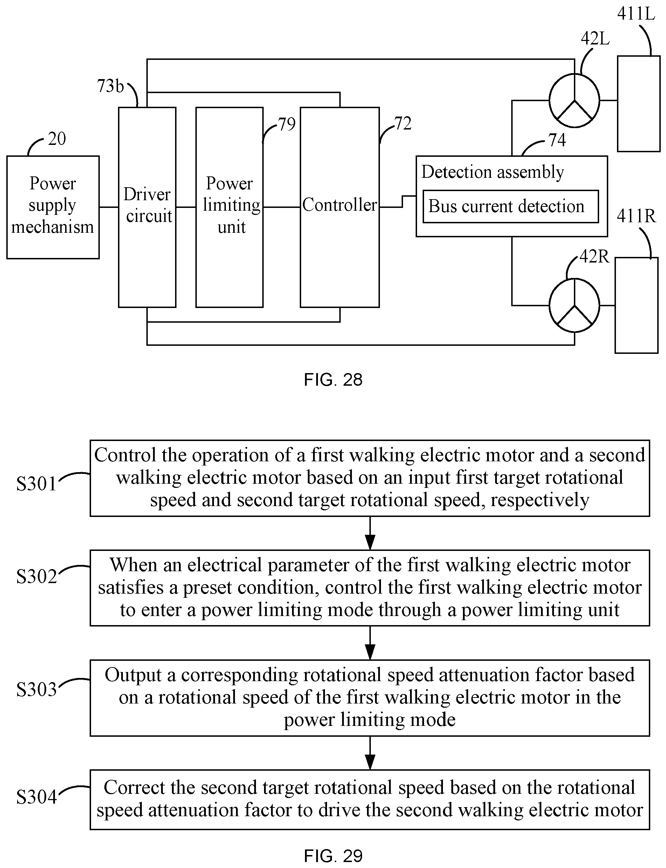

As shown in FIG. 29, the present application further provides a control method of the outdoor traveling device 100. The control method of the outdoor traveling device 100 includes the steps below.

In S301, the operation of the first walking electric motor and the second walking electric motor is controlled based on the input first target rotational speed and second target rotational speed, respectively.

In S302, when the electrical parameter of the first walking electric motor satisfies the preset condition, the first walking electric motor is controlled to enter the power limiting mode through the power limiting unit.

In S303, the corresponding rotational speed attenuation factor is output based on the rotational speed of the first walking electric motor in the power limiting mode.

In S304, the second target rotational speed is corrected based on the rotational speed attenuation factor to drive the second walking electric motor.

The following case is avoided: when the outdoor traveling device 100 drags a heavy object at a high speed or accelerates or decelerates suddenly, the walking electric motor 42 has too large output power, damaging the battery pack 21. To ensure the output torque of the walking electric motor 42, when it is determined that the power of the walking electric motor 42 exceeds the threshold according to the electrical parameter of the walking electric motor 42 satisfying the preset condition, the power of the walking electric motor 42 is limited through the power limiting unit 79, thereby ensuring that the difference between the rotational speeds of the first walking electric motor 42L and the second walking electric motor 42R is within a certain range and ensuring the traveling safety of the outdoor traveling device 100.

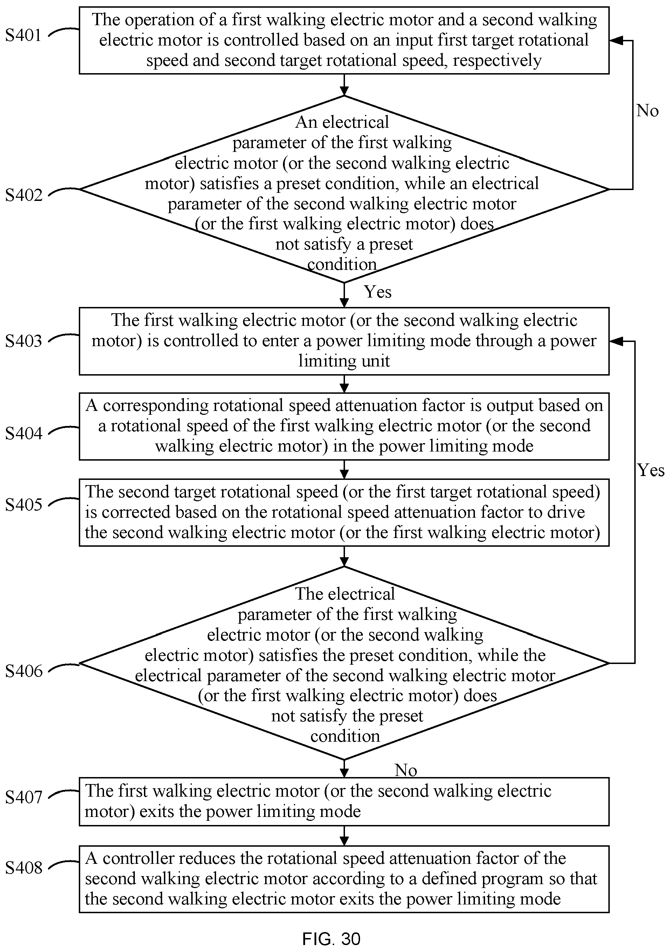

As shown in FIG. 30, another control method of the outdoor traveling device 100 is disclosed. The control method of the outdoor traveling device includes the steps below.

In S401, the operation of the first walking electric motor and the second walking electric motor is controlled based on the input first target rotational speed and second target rotational speed, respectively.

In S402, the electrical parameter of the first walking electric motor (or the second walking electric motor) satisfies the preset condition, while the electrical parameter of the second walking electric motor (or the first walking electric motor) does not satisfy the preset condition. If so, S403 is performed. If not, S401 is performed.

In S403, the first walking electric motor (or the second walking electric motor) is controlled to enter the power limiting mode through the power limiting unit.

In S404, the corresponding rotational speed attenuation factor is output based on the rotational speed of the first walking electric motor (or the second walking electric motor) in the power limiting mode.

In S405, the second target rotational speed (or the first target rotational speed) is corrected based on the rotational speed attenuation factor to drive the second walking electric motor (or the first walking electric motor).

In S406, the electrical parameter of the first walking electric motor (or the second walking electric motor) still satisfies the preset condition, while the electrical parameter of the second walking electric motor (or the first walking electric motor) does not satisfy the preset condition. If so, S403 is performed. If not, S407 is performed.

In S407, the first walking electric motor (or the second walking electric motor) exits the power limiting mode.

In S408, the controller reduces the rotational speed attenuation factor of the second walking electric motor according to the defined program so that the second walking electric motor exits the power limiting mode.

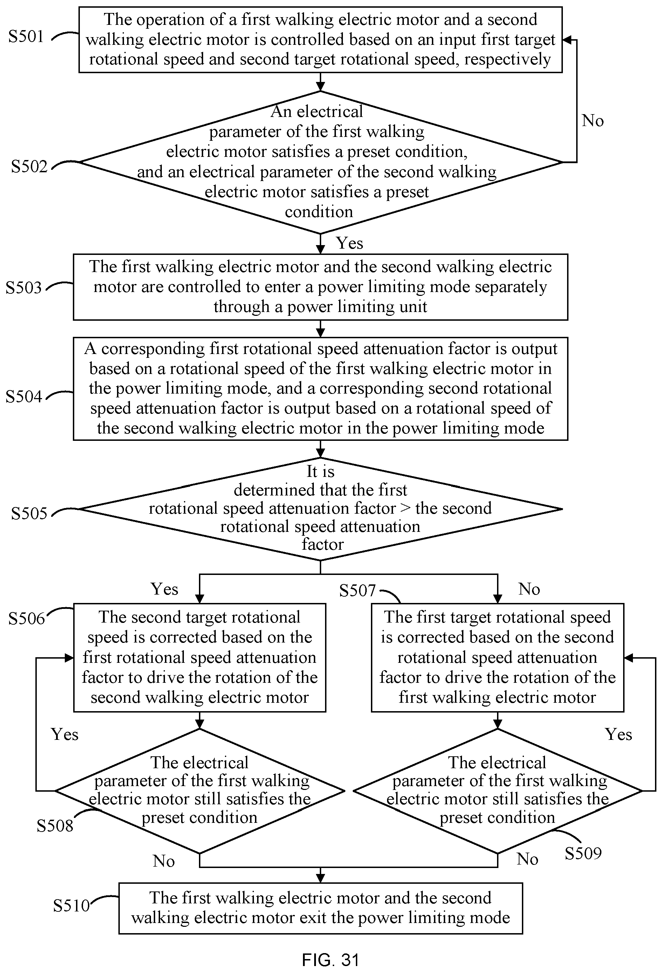

As shown in FIG. 31, another control method of the outdoor traveling device 100 is disclosed, where the electrical parameters of the first walking electric motor 42L and the second walking electric motor 42R both satisfy the preset conditions. The control method of the outdoor traveling device 100 includes the steps below.

In S501, the operation of the first walking electric motor and the second walking electric motor is controlled based on the input first target rotational speed and second target rotational speed, respectively.

In S502, the electrical parameter of the first walking electric motor satisfies the preset condition, and the electrical parameter of the second walking electric motor satisfies the preset condition. If so, S503 is performed. If not, S501 is performed.

In S503, the first walking electric motor and the second walking electric motor are controlled to enter the power limiting mode separately through the power limiting unit.

In S504, the corresponding first rotational speed attenuation factor is output based on the rotational speed of the first walking electric motor in the power limiting mode, and the corresponding second rotational speed attenuation factor is output based on the rotational speed of the second walking electric motor in the power limiting mode.

In S505, it is determined that the first rotational speed attenuation factor is greater than the second rotational speed attenuation factor. If so, S506 is performed. If not, S507 is performed.

In S506, the second target rotational speed is corrected based on the first rotational speed attenuation factor to drive the rotation of the second walking electric motor.

In S507, the first target rotational speed is corrected based on the second rotational speed attenuation factor to drive the rotation of the first walking electric motor.

In S508, the electrical parameter of the first walking electric motor still satisfies the preset condition. If so, S506 is performed. If not, S510 is performed.

In S509, the electrical parameter of the second walking electric motor still satisfies the preset condition. If so, S507 is performed. If not, S510 is performed.

In S510, the first walking electric motor and the second walking electric motor exit the power limiting mode.

As shown in FIGS. 1 to 4 and 32, an outdoor traveling device 100 of the present application includes a power supply mechanism 20, a walking mechanism 40, and a control mechanism 70. The power supply mechanism 20 includes a battery pack 21. For example, the power supply mechanism 20 includes at least one battery pack 21. The walking mechanism 40 includes walking wheels and a walking motor 42 that drives a walking wheel to rotate. The walking motor 42 is configured to be an electric motor. The battery pack 21 supplies power to at least the electric motor. In this example, with a brushless inrunner as an example, the electric motor is used hereinafter instead of the motor, which is not intended to limit the present application.

Optionally, one, two, three, or four walking electric motors 42 may be provided. In this example, two walking electric motors 42 are provided, and the two walking electric motors 42 drive a left rear walking wheel 411L and a right rear walking wheel 411R, respectively so that the outdoor traveling device 100 can turn in other directions deviating from a front and rear direction. For ease of reference, the walking electric motor 42 for driving the left rear walking wheel 411L is set as a first walking electric motor 42L, and the walking electric motor 42 for driving the right rear walking wheel 411R is set as a second walking electric motor 42R.

With the first walking electric motor 42L as an example, the first walking electric motor 42L includes a stator 421 and a rotor 422. In some examples, the first walking electric motor 42L is a three-phase brushless electric motor and includes the rotor 422 with a permanent magnet and three-phase windings U, V, and W of the stator 421 that are electronically commutated. In some examples, the three-phase windings U, V, and W of the stator 421 adopt a star connection. In some other examples, the three-phase windings U, V, and W of the stator 421 adopt a delta connection. However, it is to be understood that other types of brushless motors are also within the scope of the present disclosure. The brushless electric motor may include fewer than or more than three phases.

The first walking electric motor 42L is mainly controlled by using an FOC strategy. In the FOC control strategy, to ensure the normal operation of the electric motor, a position of the rotor 422 of the electric motor needs to be detected. In the related art, the position of the rotor 422 of the electric motor is generally detected by a method with or without a position sensor. The method without the position sensor uses a counter-electromotive force. The method with the position sensor uses various sensors to directly or indirectly detect the position of the rotor 422. In actual product applications, one of the method with the position sensor and the method without the position sensor is usually selected to detect the position of the rotor.

In this example, the control mechanism 70 further includes a position sensor 77. The position sensor 77 is configured to detect a rotational position of the rotor 422 based on a change of an electric field related to the rotation of the rotor 422. The control mechanism 70 further includes a position estimation unit 78a. The position estimation unit 78a is configured to estimate the rotational position of the rotor 422 based on a current-related parameter of the first walking electric motor 42L.

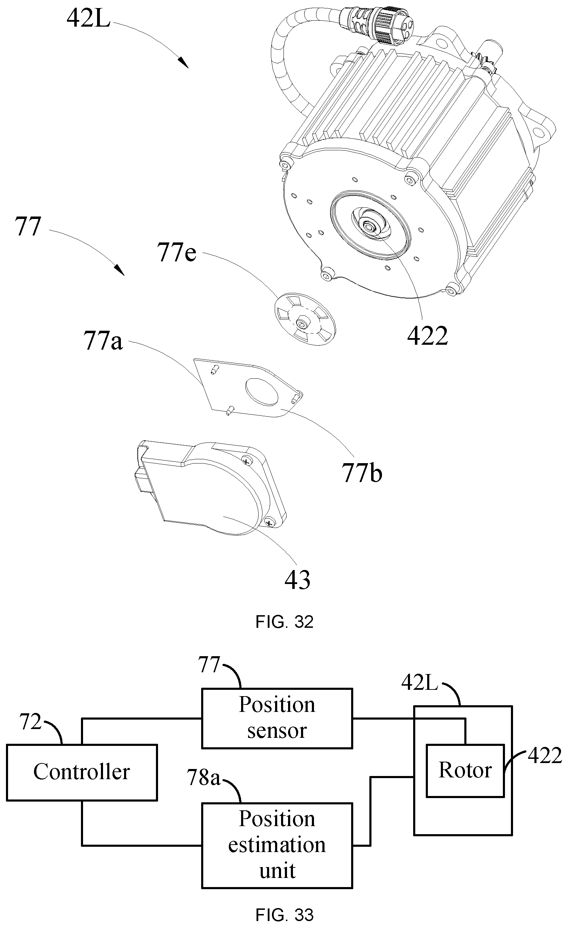

As shown in FIG. 33, a controller 72 is configured to detect a difference between a first rotational position obtained by the position sensor 77 and a second rotational position obtained by the position estimation unit 78a during rotation of the first walking electric motor 42L and calculate a correction value based on the difference to correct the first rotational position obtained by the position sensor 77. In this example, the position sensor 77 includes an eddy current sensor. For example, the controller 72 adopts a dedicated control chip, for example, a single-chip microcomputer or an MCU. The position of the rotor of the electric motor is detected by the eddy current sensor based on the change of the electric field instead of an electromagnetic sensor based on a change of a magnetic field, where the eddy current sensor has a strong anti-interference ability. Meanwhile, the position estimation unit 78a performs sensorless detection on the position of the rotor 422 of the electric motor using the current-related parameter so that a position detection value of the eddy current sensor is corrected with the accuracy of sensorless detection, further ensuring the accuracy and anti-interference degree of the rotational position of the rotor 422 detected by the position sensor 77. In this example, the "difference" includes a difference between values of the first rotational position and the second rotational position and also includes an average or calculated value of the difference between the first rotational position and the second rotational position, for example, a difference obtained through a unary or binary calculation on the first rotational position and the second rotational position.

In this example, the controller 72 is further configured to acquire the first rotational position based on the position sensor 77 and control the operation of the electric motor based on a first corrected position corrected according to the correction value. The accurate first corrected position corrected according to the correction value is used to control the operation of the electric motor, thereby achieving more accurate control of the electric motor, timelier feedback to the electric motor, and further improving motor efficiency.

In this example, the position sensor 77 includes a signal transceiving element 77a and an induction assembly 77e. The induction assembly 77e and the signal transceiving element 77a are spaced apart, which are not prone to a wear failure and have an increased service life. The signal transceiving element 77a can emit an alternating excitation signal and generate an alternating electromagnetic signal field, the induction assembly 77e can respond to the alternating electromagnetic signal field and generate a secondary electromagnetic signal field, and the signal transceiving element 77a can output a signal corresponding to a current position of the rotor 422 of the electric motor in response to the secondary electromagnetic signal field. For example, the eddy current sensor includes a transmitting coil and a receiving coil, where the transmitting coil emits the alternating excitation signal to generate an alternating magnetic field during the operation of the walking electric motor 42, and the receiving coil receives an electrical signal generated due to the movement of the induction assembly 77e in the alternating magnetic field and detects position information of the induction assembly 77e according to the electrical signal. For example, the transmitting coil can emit the alternating excitation signal, the alternating excitation signal generates an alternating electromagnetic field in space, and the receiving coil can receive a signal generated by the alternating electromagnetic field. The induction assembly 77e induces an eddy current under the action of the alternating electromagnetic field, and the eddy current generates the secondary electromagnetic signal field. When the eddy current sensor and the induction assembly 77e move relative to each other, the signal received by the receiving coil of the eddy current sensor changes. By demodulating and processing the received signal, the eddy current sensor can acquire a relative position between the eddy current sensor and the induction assembly 77e, that is, acquire the position information of the induction assembly 77e. In this case, the eddy current sensor outputs a corresponding signal, and the controller 72 outputs information about the first rotational position based on the signal provided by the eddy current sensor.

For example, the control mechanism 70 further includes a first circuit board. The transmitting coil and the receiving coil of the eddy current sensor are disposed on a first circuit board 77b. The first circuit board 77b is fixed to the stator 421 or a motor housing 43. The induction assembly 77e includes a target member fixed to the rotor 422 of the walking electric motor 42. For example, the target member includes a metal member. The eddy current sensor and the target member are spaced apart, which are not prone to the wear failure and have the increased service life. "Spaced apart" means that the eddy current sensor does not need to be in stress contact with the target member.

For example, the alternating excitation signal emitted by the transmitting coil is a sinusoidal signal, and the electrical signal received by the receiving coil is a cosine signal. The eddy current sensor determines the position information of the target member according to the sinusoidal signal and the cosine signal. In some examples, the eddy current sensor may output two demodulated sine and cosine signals or may choose to output four complementary sine and cosine signals. To avoid the interference of a common mode signal, the four complementary sine and cosine signals are used as the input of a differential amplifier of the controller and subjected to differential amplification into the required two sine and cosine signals, and the sine and cosine signals are subjected to arctangent processing to obtain a periodic signal with an electrical frequency of the rotor. In the related art, the periodic signal with the electrical frequency of the rotor is directly modulated or converted into a signal characterizing the position of the rotor of the electric motor. However, in a process of using the high-current and high-power walking electric motor of the outdoor traveling device in a use environment, the applicant has found that a deviation tending to be a fixed value exists between actual position information of the rotor and the periodic signal with the electrical frequency of the rotor, which is measured by the eddy current sensor. Therefore, in the use environment of the walking electric motor of the outdoor traveling device 100, the periodic signal with the electrical frequency of the rotor, which is measured by the eddy current sensor, needs to be calibrated so that the accurate position information of the rotor can be obtained. In this example, the position estimation unit 78a estimates the rotational position of the rotor 422 based on the current-related parameter of the first walking electric motor 42L, the difference between the first rotational position obtained by the position sensor 77 and the second rotational position obtained by the position estimation unit 78a during rotation of the first walking electric motor 42L is detected, and the correction value is calculated based on the difference to correct the first rotational position obtained by the position sensor 77.

The deviation of each electric motor is random. For example, the process of detection and calibration of the position of the rotor of the electric motor by the controller occurs before the outdoor traveling device 100 enters the use environment of the user or in a factory environment. In a manufacturing process of the factory, the position sensor 77, that is, the eddy current sensor, detects the change of the electric field related to the rotation of the rotor 422 to detect the rotational position of the rotor 422, that is, the first rotational position, the position estimation unit 78a obtains the second rotational position using the current-related parameter, and the controller 72 calculates the difference between the first rotational position and the second rotational position. To ensure accuracy, detection is performed multiple times or in multiple motor cycles, and then discrete values of the difference are fitted or averaged to obtain the deviation tending to be a fixed value, that is, the correction value for the first rotational position. During the subsequent use out of factory, the position sensor 77, that is, the eddy current sensor, is only used to detect the first rotational position, and the first rotational position is corrected by the correction value to characterize the position of the rotor of the electric motor and control the operation of the electric motor. For example, the process of detection and calibration of the position of the rotor of the electric motor by the controller occurs after the outdoor traveling device 100 enters the use environment of the user or in a post-factory environment. In a fixed period, the position estimation unit 78a obtains the second rotational position using the current-related parameter, and the controller 72 calculates the difference between the first rotational position and the second rotational position and fits or averages the discrete values of the difference to obtain the deviation tending to be a fixed value, that is, the correction value for the first rotational position. In the subsequent working process, the position sensor 77, that is, the eddy current sensor, is only used to detect the first rotational position, and the first rotational position is corrected by the correction value to characterize the position of the rotor of the electric motor and control the operation of the electric motor. The correction value is regularly updated, ensuring that the position of the rotor can be accurately obtained even if the electric motor is aging or has a loss during use. For example, the process of detection and calibration of the position of the rotor of the electric motor by the controller may occur before the outdoor traveling device 100 enters the use environment of the user or after the outdoor traveling device 100 enters the use environment of the user.

The eddy current sensor detects motion state information of the rotor 422 of the electric motor so that the interference of the current on the magnetic field can be avoided, a problem caused by the fact that the walking electric motor 42 is prone to the interference of the current under a high current can be solved, and the motor can be more accurately controlled, helping to improve the user experience. In this example, an operating temperature of the eddy current sensor ranges from -40 °C to 160 °C, solving the problem of low motor control efficiency caused by the inaccurate detection of the position of the rotor 422 due to an extremely high temperature of the walking electric motor 42. Data of the eddy current sensor is calibrated through the position estimation unit 78a so that very accurate data can be provided even in a harsh environment. Meanwhile, compared with the motor control using the position of the rotor provided by the position estimation unit 78a, the motor control herein requires a simple control algorithm and a small computational volume, reducing a requirement on the controller.

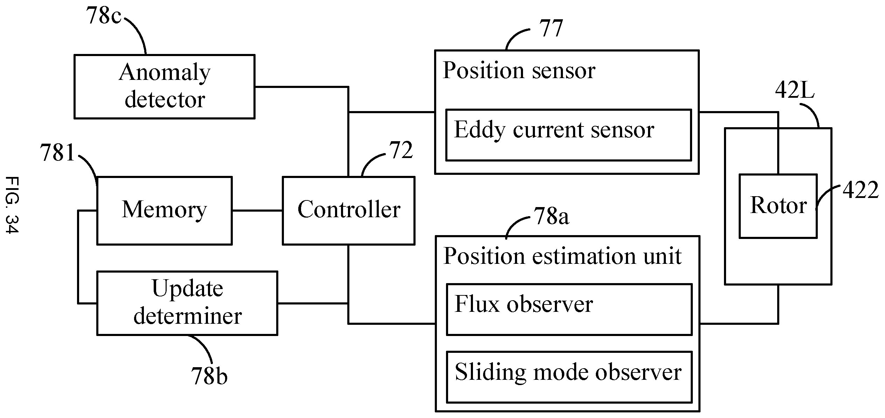

As shown in FIG. 34, in this example, the position estimation unit 78a includes a flux observer and a sliding mode observer. The position estimation unit 78a estimates the rotational position of the rotor 422 based on the current-related parameter of the brushless electric motor. The current-related parameter is obtained by performing logical processing on the detected current, for example, calculating a rate of change, calculating an integral value, or calculating an integral value of the rate of change. The estimation of the position information by the flux observer and the sliding mode observer has been fully disclosed in the related art and thus is omitted here for clarity of description.

The control mechanism 70 further includes a memory 781 connected to the controller 72, where the memory 781 stores the correction value calculated based on the difference between the first rotational position obtained by the position sensor 77 and the second rotational position obtained by the position estimation unit 78a.

To ensure the accuracy of the correction value, the control mechanism 70 updates the correction value according to a certain rule.

In some examples, the controller 72 is configured to recalculate the correction value when a rotational speed of the brushless electric motor is lower than a first threshold or higher than a second threshold. When the brushless electric motor operates at a low speed or a high speed, a size of the correction value needs to be reconsidered to ensure the correction accuracy.

In some examples, the control mechanism 70 further includes an update determiner 78b. The update determiner 78b is configured to compare the correction value in the memory 781 with a correction value newly calculated by the controller 72 and determine whether the correction value in the memory 781 is to be updated. A processor of the memory 781 is configured to update the correction value in the memory 781 to the newly calculated correction value if the update determiner 78b determines that the correction value in the memory 781 is to be updated. In some examples, the control mechanism 70 further includes an anomaly detector 78c. The anomaly detector 78c determines whether the correction value calculated by the controller 72 is normal based on whether the correction value is within a specified range and when determining the calculated correction value to be abnormal, warns the user of an anomaly. For example, anomaly alarm information is sent to the user through a display interface 61a.

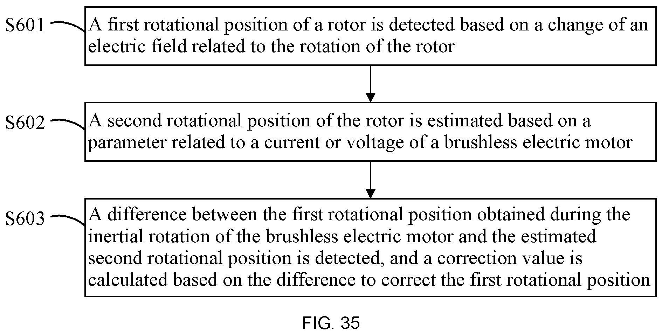

As shown in FIG. 35, the present application further provides a method for detecting the rotational position of the rotor of the brushless electric motor in the outdoor traveling device 100. The method includes the steps below.

In S601, the first rotational position of the rotor is detected based on the change of the electric field related to the rotation of the rotor.

In this example, the first rotational position is detected by the position sensor 77 that detects the change of the electric field. For example, the position sensor 77 is the eddy current sensor. The eddy current sensor detects the motion state information of the rotor 422 of the electric motor so that very accurate data can be provided even in the harsh environment, the interference of the current on the magnetic field can be avoided, the problem caused by the fact that the walking electric motor 42 is prone to the interference of the current under a high current can be solved, and the motor can be more accurately controlled, helping to improve the user experience. In this example, the operating temperature of the eddy current sensor ranges from -40 °C to 160 °C, solving the problem of low motor control efficiency caused by the inaccurate detection of the position of the rotor 422 due to an extremely high temperature of the walking electric motor 42.

In S602, the second rotational position of the rotor is estimated based on a parameter related to a current or voltage of the brushless electric motor.

In this example, the position estimation unit 78a is disposed, and the position estimation unit 78a includes the flux observer and the sliding mode observer.

In S603, the difference between the first rotational position obtained during the inertial rotation of the brushless electric motor and the estimated second rotational position is detected, and the correction value is calculated based on the difference to correct the first rotational position.

The position detection value of the eddy current sensor is corrected with the accuracy of sensorless detection, further ensuring the accuracy and anti-interference degree of the rotational position of the rotor detected by the position sensor.

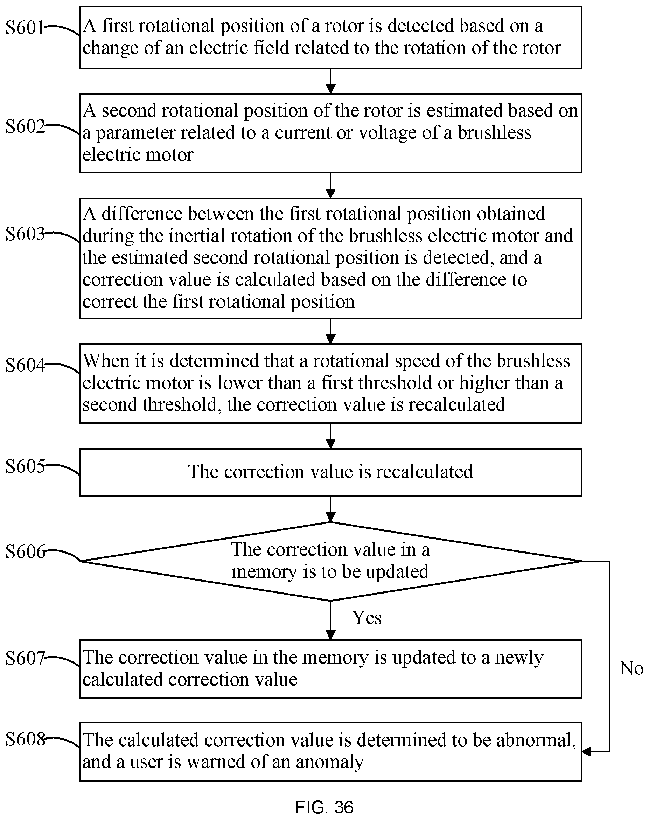

As shown in FIG. 36, in this example, to ensure the accuracy of the correction value, the method further includes updating the correction value, which includes the steps below.

In S604, when it is determined that the rotational speed of the brushless electric motor is lower than the first threshold or higher than the second threshold, the correction value is recalculated.

In S605, the correction value is recalculated.

In S606, the correction value in the memory is to be updated. If so, S607 is performed. If not, S608 is performed.

The control mechanism 70 further includes the update determiner 78b. The update determiner 78b is configured to compare the correction value in the memory 781 with the correction value newly calculated by the controller 72 and determine whether the correction value in the memory 781 is to be updated.

In S607, the correction value in the memory is updated to the newly calculated correction value.

The processor of the memory 781 is configured to update the correction value in the memory 781 to the newly calculated correction value if the update determiner 78b determines that the correction value in the memory 781 is to be updated.

In S608, the calculated correction value is determined to be abnormal, and the user is warned of the anomaly.

The control mechanism 70 further includes the anomaly detector 78c. The anomaly detector 78c determines whether the correction value calculated by the controller 72 is normal based on whether the correction value is within the specified range and when determining the calculated correction value to be abnormal, warns the user of the anomaly.

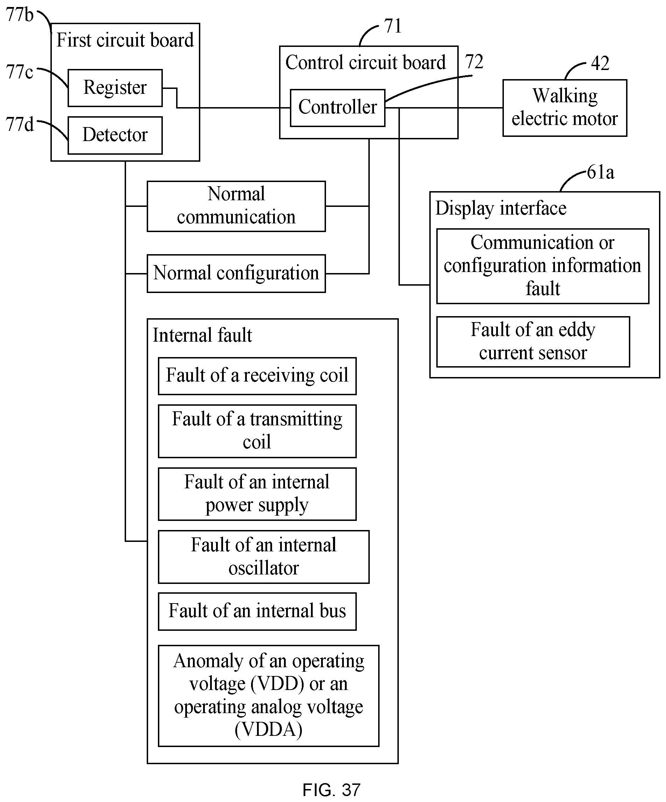

As shown in FIG. 37, the first circuit board 77b where the eddy current sensor is located is communicatively connected to a control circuit board 71 where the controller 72 is located. The eddy current sensor outputs the sine and cosine signals to the controller 72, and the controller 72 controls the operation of the walking electric motor 42. The eddy current sensor includes a register 77c and a detector 77d, and the detector 77d initiates detection in real time or at a certain frequency and registers detection data in the register 77c. In a process of communication between the eddy current sensor and the controller 72, the controller 72 acquires the detection data in the register 77c, identifies a fault, and issues a signal of an anomaly. For example, the fault includes an internal fault of the eddy current sensor, such as a fault of the receiving coil, a fault of the transmitting coil, a fault of an internal power supply, a fault of an internal oscillator, a fault of an internal bus, an anomaly of an operating voltage (VDD), or undervoltage of an operating analog voltage (VDDA). When the controller 72 acquires a change of an amplitude of the sine and cosine output signals that exceeds a preset range, the controller 72 determines that the eddy current sensor is faulty. The controller 72 sends a shutdown signal and a set signal to the walking electric motor 42, and the outdoor traveling device 100 stops traveling. Optionally, a parking brake mechanism 44 is activated to brake the walking mechanism 40 so that the outdoor traveling device 100 comes to a stable stop. The controller 72 sends a fault code of the fault of the eddy current sensor to a display screen 61 and expressly prompts the user of the fault of the eddy current sensor on the display interface 61a so that the user can quickly and accurately identify fault information and perform targeted maintenance. For example, the fault includes a communication or configuration anomaly between the eddy current sensor and the controller 72, such as a disconnection of a harness for signal output, a signal-to-ground short circuit, or a signal-to-operating voltage (VDD) short circuit. Thus, the controller 72 identifies that a communication frequency between the eddy current sensor and the controller is not within a set range of a communication protocol, a configuration of a parameter such as a voltage of a communication signal between the eddy current sensor and the controller exceeds a range, or configuration information does not conform to a setting of the communication protocol, and the controller 72 determines that communication or configuration information between the eddy current sensor and the controller 72 is faulty. The controller 72 sends the shutdown signal and the set signal to the walking electric motor 42, and the outdoor traveling device 100 stops traveling. Optionally, the parking brake mechanism 44 is activated to brake the walking mechanism 40 so that the outdoor traveling device 100 comes to a stable stop. The controller 72 sends a fault code of a communication or configuration fault between the eddy current sensor and the controller 72 to the display screen 61 and expressly prompts the user of the communication or configuration fault between the eddy current sensor and the controller 72 on the display interface 61a so that the user can quickly and accurately identify fault information and perform targeted maintenance.

It is to be understood that in this example, the second walking electric motor 42R has the same structure and control method as the first walking electric motor 42L, and in this example, the position of the rotor 422 of the second walking electric motor 42R is detected by the same control method with the same position sensor 77 and position estimation unit 78a.

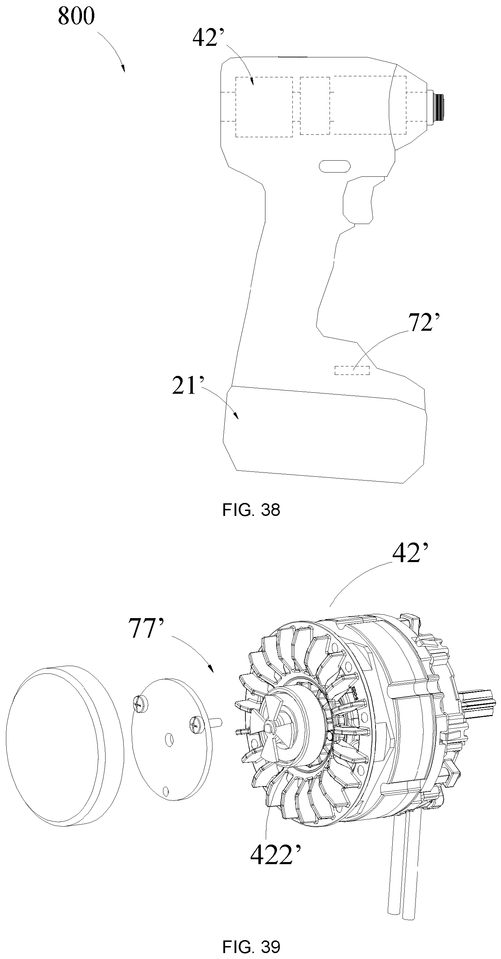

As shown in FIGS. 38 and 39, a power tool 800 of the present application includes an electric motor 42' configured to drive an attachment to work, where the electric motor is a brushless electric motor; a power supply including at least one battery pack 21' to supply power to the electric motor 42'; an eddy current sensor 77' configured to detect a rotational position of a rotor 422' based on a change of an electric field related to the rotation of the rotor 422'; and a position estimation unit configured to estimate the rotational position of the rotor 422' based on a related parameter of the brushless electric motor during operation.

The power tool 800 further includes a controller 72' configured to detect a difference between a first rotational position obtained by the eddy current sensor 77' and a second rotational position obtained by the position estimation unit during inertial rotation of the electric motor 42' and calculate a correction value based on the difference to correct the first rotational position obtained by the eddy current sensor.

The power tool 800 includes not only an outdoor traveling device but also a garden tool such as a string trimmer, a blower, a chainsaw, or a washer. Alternatively, the power tool 800 may be a decoration tool such as a screwdriver/drill/wrench, an electric hammer, a nail gun, or a sander. Alternatively, the power tool 800 may be a sawing tool such as a reciprocating saw, a jigsaw, or a circular saw. Alternatively, the power tool 800 may be a table tool such as a table saw, a metal cutter, or a router. Alternatively, the power tool 800 may be a sanding tool such as an angle grinder or a sander. Alternatively, the power tool 800 may be another power tool such as a fan. Alternatively, the power tool may be a smart walking power tool that is driven by the electric motor or an electric motor assembly to walk and implement a work function, such as a smart mower. Any power tool driven by the electric motor can adopt the technical solutions disclosed in this example. For example, the power tool 800 may be a powerhead, and the powerhead includes the electric motor. The powerhead is configured to be adapted to some work attachments to implement functions of the tool.

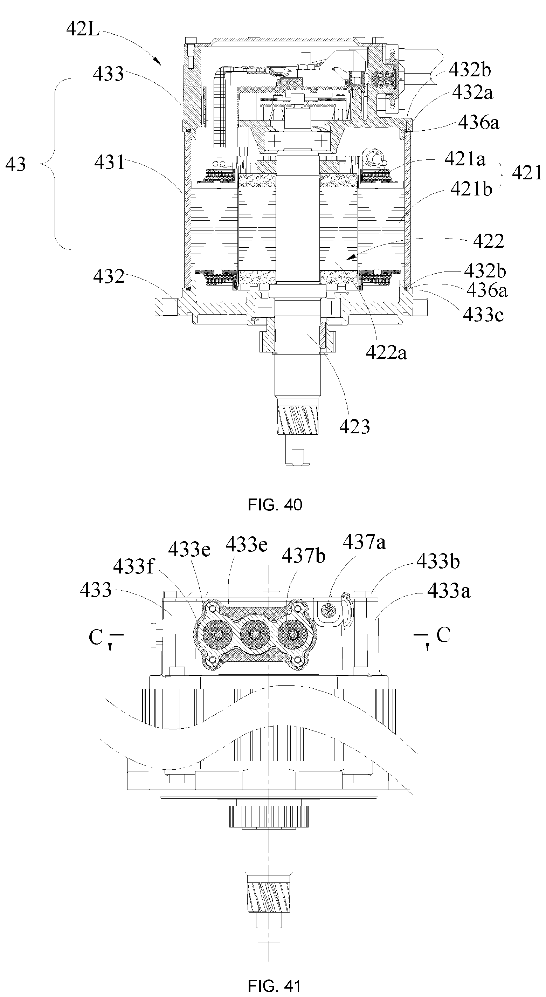

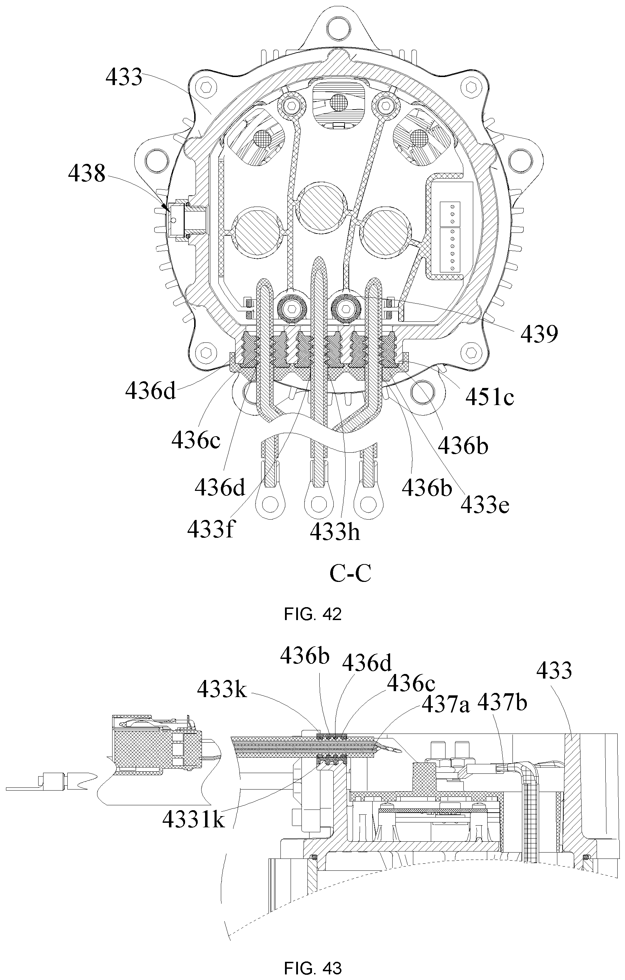

As shown in FIGS. 40 to 45, as for the structure of a walking electric motor 42, a first walking electric motor 42L is still used as an example. The first walking electric motor 42L is a brushless inrunner. The first walking electric motor 42L includes a stator 421 and a rotor 422, where the stator 421 includes a stator core 421a and coil windings 421b. The core of the stator 421 is provided with multiple stator teeth extending radially, multiple coil windings 421b are wound around the multiple stator teeth, and the coil windings are configured to be windings of a conductive metal, such as copper windings. The rotor 422 is rotatable relative to the stator 421, and an output shaft 423 is formed on or connected to the rotor 422. The rotor 422 includes a rotor core 422a and permanent magnets, multiple permanent magnets are provided and arranged at intervals along a circumferential direction of the rotor core, and the permanent magnets are configured to generate magnetic fields.

As shown in FIG. 40, a motor housing 43 includes a motor housing body 431 and a first end cover 432 and a second end cover 433 that are disposed on two sides of the motor housing body 431. The motor housing 43 includes the motor housing body 431 with an opening at one end and the first end cover 432 for sealing the motor housing body 431. The motor housing body 431 is sealingly connected to the first end cover 432, and the output shaft 423 extends out of the motor housing 43 through the first end cover 432. A sealed space is formed between the first end cover 432 and a body of a gearbox 451 (as described above). The second end cover 433 is disposed on the motor housing body 431 and opposite to the first end cover 432, and a cable such as a signal line 437a or a power line 437b is introduced into the motor housing 43 through the second end cover 433. A first groove 432a is provided at a connection between the first end cover 432 and the motor housing body 431. The first groove 432a accommodates a wall thickness of the motor housing body 431, or the first groove 432a accommodates a protrusion portion 432b protruding from an edge of the motor housing body 431. A second groove 433c is provided at a connection between the second end cover 433 and the motor housing body 431. The second groove 433c accommodates the wall thickness of the motor housing body 431, or the second groove 433c accommodates a protrusion portion 432b protruding from an edge of the motor housing body 431. To ensure the sealing effect of the motor housing 43, an O-ring 436a is provided in the first groove 432a. When the motor housing body 431 is inserted into the first groove 432a, the O-ring 436a is compressed to fill a gap between the motor housing body 431 and the first groove 432a so that the first end cover 432 is sealingly connected to the motor housing body 431. Optionally, the width of the first groove 432a is greater than the wire diameter of the O-ring 436a. Optionally, the width of the first groove 432a is 2.6 mm, and the wire diameter of the O-ring 436a is 2.0 mm. To ensure the sealing effect of the motor housing 43, the O-ring 436a is provided in the second groove 433c. When the motor housing body 431 is inserted into the second groove 433c, the O-ring 436a is compressed to fill a gap between the motor housing body 431 and the second groove 433c so that the second end cover 433 is sealingly connected to the motor housing body 431. Optionally, the width of the second groove 433c is greater than the wire diameter of the O-ring 436a. Optionally, the width of the second groove 433c is 2.6 mm, and the wire diameter of the O-ring 436a is 2.0 mm. In this example, the motor housing body 431 is statically sealed to the first end cover 432 and the second end cover 433 separately, achieving a waterproof rating of IPX6.

As shown in FIGS. 41 to 43, the first walking electric motor 42L includes three-phase power lines 437b and the signal line 437a. The second end cover 433 is formed with first through holes 451c allowing the three-phase power lines 437b to penetrate through, the three-phase power lines 437b are mounted to a fixing member 439, and the fixing member 439 is fixed in the second end cover 433 in a screw fastening manner and located in an accommodation space. In this example, the fixing member 439 fixes positions of the three-phase power lines 437b relative to the electric motor, so as to prevent the three-phase power lines 437b from being loose due to the pulling of the three-phase power lines 437b.

A sealing gasket 436b is provided between a first through hole 451c and each phase of cable of the three-phase power lines 437b to fill a gap between the first through hole 451c and the cable. The sealing gasket 436b is a tubular sealing gasket 436b having a certain thickness and a certain length. An inner hole 436c of the sealing gasket 436b is provided with corrugated protrusions 436d so that the cable is sealingly connected to at least one protrusion when penetrating through the inner hole 436c. The outer circumference of the sealing gasket 436b is provided with corrugated protrusions 436d so that when the sealing gasket 436b extends into the first through hole 451c, the first through hole 451c is sealingly connected to at least one protrusion. Since the positions of the three-phase power lines 437b are fixed by the fixing member 439, the cable can be located at the center of the sealing gasket 436b, thereby ensuring a good sealing effect. The first walking electric motor 42L further includes a motor fixing plate 433e connected to the outer ends of the first through holes 451c. For example, the motor fixing plate 433e is connected to the second end cover 433 and abuts against the sealing gasket 436b. The stably fixed motor fixing plate 433e compresses the sealing gasket 436b so that the sealing gasket 436b is compressed and deformed in a length direction to better seal the gap between the cable and the first through hole 451c. The motor fixing plate 433e is provided with a first accommodation portion 433f substantially corresponding to an outer contour of the sealing gasket 436b. For example, the motor fixing plate 433e is provided with three first accommodation portions 433f, and a cable through hole 433g is provided at the center of each first accommodation portion 433f for the corresponding cable to penetrate through. A positioning flange 433h is provided on the outer circumference of the cable through hole 433g, and the cable through hole 433g and the positioning flange 433h ensure that an exit position of the cable is the inner hole 436c of the sealing gasket 436b, ensuring good sealing performance. In this example, the waterproof rating reaches IPX6.

The second end cover 433 is further formed with a second through hole 433k allowing the signal line 437a to penetrate through to extend out of the second end cover 433. The sealing gasket 436b is provided between the second through hole 433k and the signal line 437a to fill a gap between the second through hole 433k and the signal line 437a. The sealing gasket 436b is a tubular sealing gasket 436b having a certain thickness and a certain length. The inner hole 436c of the sealing gasket 436b is provided with the corrugated protrusions 436d so that the cable is sealingly connected to at least one protrusion when penetrating through the inner hole 436c. The outer circumference of the sealing gasket 436b is provided with the corrugated protrusions 436d so that when the sealing gasket 436b extends into the second through hole 433k, the second through hole 433k is sealingly connected to at least one protrusion. Protrusion portions 4331k radially extend in the second through hole 433k, a protrusion portion 4331k is interposed between two corrugated protrusions 436d of the sealing gasket 436b, and the height of the protrusion portion 4331k ensures that the signal line 437a is located at the center of the inner hole 436c of the sealing gasket 436b.

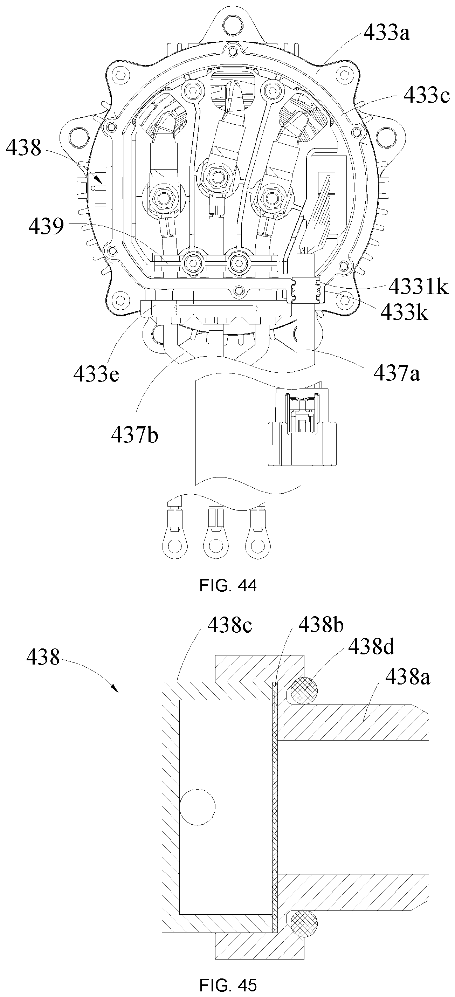

As shown in FIGS. 41 and 44, due to the structure and functional arrangement of the second end cover 433, the second end cover 433 includes a cover body 433a and a cover plate 433b. The cover body 433a and the cover plate 433b are connected by fasteners or fastening structures. The cover plate 433b is in the shape of a flat plate, the cover body 433a has openings on two sides, the cover plate 433b seals an opening on a first side of the cover body 433a, and an opening on a second side of the cover body 433a is sealingly connected to the motor housing body 431. A sealant is evenly applied along a circumferential direction of the opening 433c on the first side of the cover body 433a, to achieve a face seal. The sealant is not interrupted. When the cover plate 433b is pressed onto the cover body 433a, the sealant overflows and fills an interface gap between the cover body 433a and the cover plate 433b that are threadedly connected.

The walking electric motor 42 has a good water wading capability due to the better overall sealability of the motor housing 43. To reduce a pressure difference between the inside and the outside of the motor housing 43, the first walking electric motor 42L is provided with a waterproof vent valve 438, which ensures that the pressure inside and outside the electric motor is consistent when the electric motor wades or works in the water, thereby preventing a possibility that water is sucked into the electric motor since a pressure difference is generated between the inside and the outside of the motor housing 43 due to the cooling of the electric motor. As shown in FIG. 45, the waterproof vent valve 438 is disposed on the second end cover 433. For example, the second end cover 433 is provided with a third through hole connecting the inside and the outside of the motor housing 43. The waterproof vent valve 438 includes a valve body 438a, a hydrophobic breathable membrane 438b, a protective layer 438c, and a sealing ring 438d. The hydrophobic breathable membrane 438b is embedded into the valve body 438a, and the protective layer 438c is disposed on a side of the hydrophobic breathable membrane 438b facing the outside of the motor housing 43. The sealing ring 438d fills a gap between the valve body 438a and the third through hole. In this example, two waterproof vent valves 438 in opposite directions are arranged to achieve an effect of air convection.

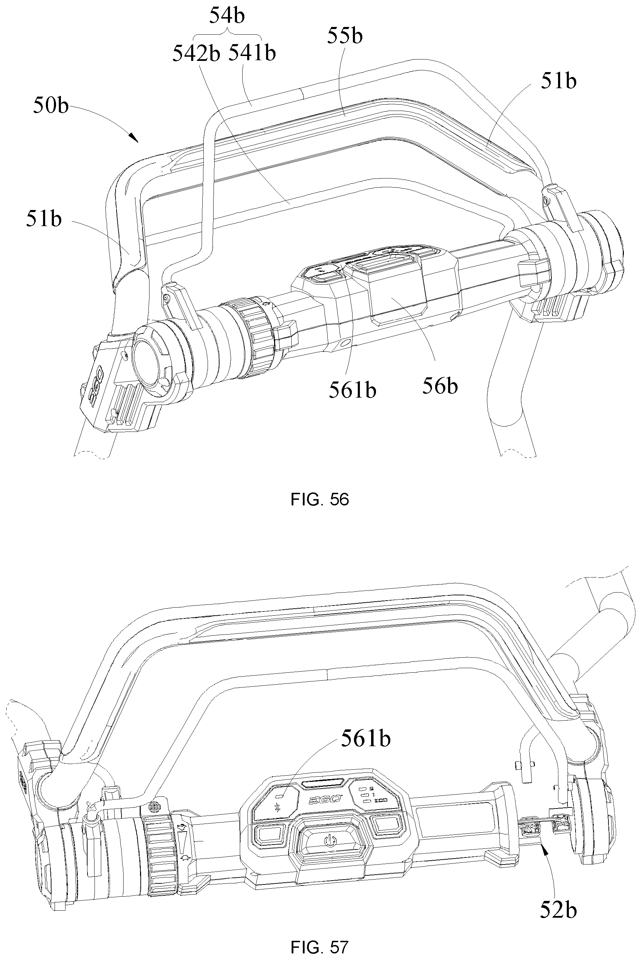

As shown in FIGS. 1 to 3, 46 to 50, and 56, when an outdoor traveling device 100 is specifically an electric mower 200, the electric mower 200 includes a mowing assembly 80 including a mowing blade 81 and a mowing motor 82 for driving the mowing blade 81. The electric mower 200 disclosed in the present application includes a push or walk-behind mower, a manned mower 200a, or a robotic mower.

In this example, the electric mower 200 is the manned mower 200a, for example. The manned mower 200a includes a vehicle body 10, a power supply mechanism 20, the mowing assembly 80, a walking mechanism 40, an operation mechanism 50, and a support mechanism 90. The vehicle body 10 includes a frame 11 extending substantially along a front and rear direction and used for mounting the mowing assembly 80, the walking mechanism 40, the operation mechanism 50, and the support mechanism 90. The mowing assembly 80 includes the mowing blade 81 and the mowing motor 82 for driving the mowing blade 81. The operation mechanism 50 includes an operating member 511. The operating member 511 is operated by a user to control the manned mower 200a to move forward or backward and turn. For example, the operating member 511 is an operating lever. In some examples, the operation mechanism 50 may further include a steering wheel assembly. The support mechanism 90 is configured to support an operator, and the support mechanism 90 is mounted to the vehicle body 10. Optionally, the support mechanism 90 includes a seat 91. The seat 91 is mounted to the frame 11 and used for the user to sit on. In other alternative examples, the support mechanism 90 further includes a platform for the user to stand on. The power supply mechanism 20 is configured to supply energy to the mowing assembly 80, the walking mechanism 40, and the like so that the manned mower 200a can be used as a power tool capable of carrying a person. The electric manned mower 200a is more environmentally friendly and more energy-efficient than a fuel-based manned mower 200a. In some examples, the manned mower 200a further includes a grass collecting unit for collecting grass clippings cut by the mowing assembly 80. The grass collecting unit includes a grass collecting basket assembly detachably mounted behind the seat 91.

The walking mechanism 40 includes a walking wheel group 41 and a walking electric motor 42. The walking wheel group 41 includes rear walking wheels 411 and front walking wheels 412. The rear walking wheels 411 include a left rear walking wheel 411L and a right rear walking wheel 411R. The front walking wheels 412 include a left front walking wheel 412L and a right front walking wheel 412R. The walking electric motor 42 drives the rear walking wheels 411 or the front walking wheels 412 to rotate, so as to implement a walking function of the manned mower 200a. Optionally, one, two, three, or four walking electric motors 42 may be provided. In this example, two walking electric motors 42 are provided, and the two walking electric motors 42 drive the left rear walking wheel 411L and the right rear walking wheel 411R, respectively so that the manned mower 200a can turn in other directions deviating from the front and rear direction. For ease of reference, the walking electric motor 42 for driving the left rear walking wheel 411L is set as a first walking electric motor 42L, and the walking electric motor 42 for driving the right rear walking wheel 411R is set as a second walking electric motor 42R.

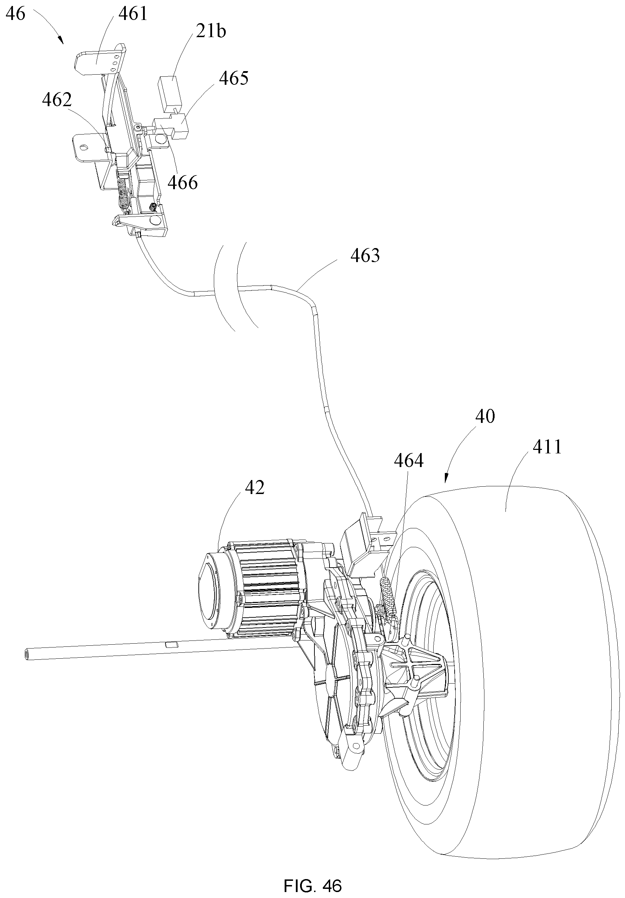

As shown in FIG. 46, the manned mower 200a further includes a brake mechanism 46 configured to perform a braking action to brake the walking mechanism 40. The brake mechanism 46 includes a braking state for braking the walking mechanism and a release state for releasing the walking mechanism. The brake mechanism 46 enters the braking state or the release state in response to a trigger instruction of the user. When an operating speed of the manned mower 200a needs to be adjusted due to a road condition or a working condition in the walking process of the manned mower 200a, for example, when the speed is relatively fast and needs to be reduced through a brake in a downhill process, or a short stop is required in an uphill process, the user outputs the trigger instruction representing the brake so that the brake mechanism 46 enters the braking state, and the brake mechanism 46 causes the walking mechanism 40 to decelerate to a predetermined position and finally stay at the position. The trigger instruction representing the brake includes a deceleration brake and a stop brake according to a degree of trigger by the user during the execution of the brake mechanism 46.

The brake mechanism 46 includes a pedal 461, a pull cord 463 connected to the pedal 461, and a brake 464. In this example, the brake 464 is configured to be a brake drum. The brake drum is connected to the walking mechanism 40 to reduce a rotational speed of the walking mechanism 40. The pull cord 463 is connected to the pedal 461 and the brake drum. For example, when the pedal 461 is operated by the operator, for example, stepped to rotate about a pedal spindle 462 or pushed or rotated to rotate about the pedal spindle 462, the pull cord 463 is driven, and thus the pull cord 463 drives the brake drum to brake the walking mechanism 40. In this example, the brake drum is connected to a rear walking wheel 411, and the working principle of the brake drum belongs to the existing art and is not repeated here. The brake 464 may also be a disc brake, a band brake, a floating brake 4, or the like.

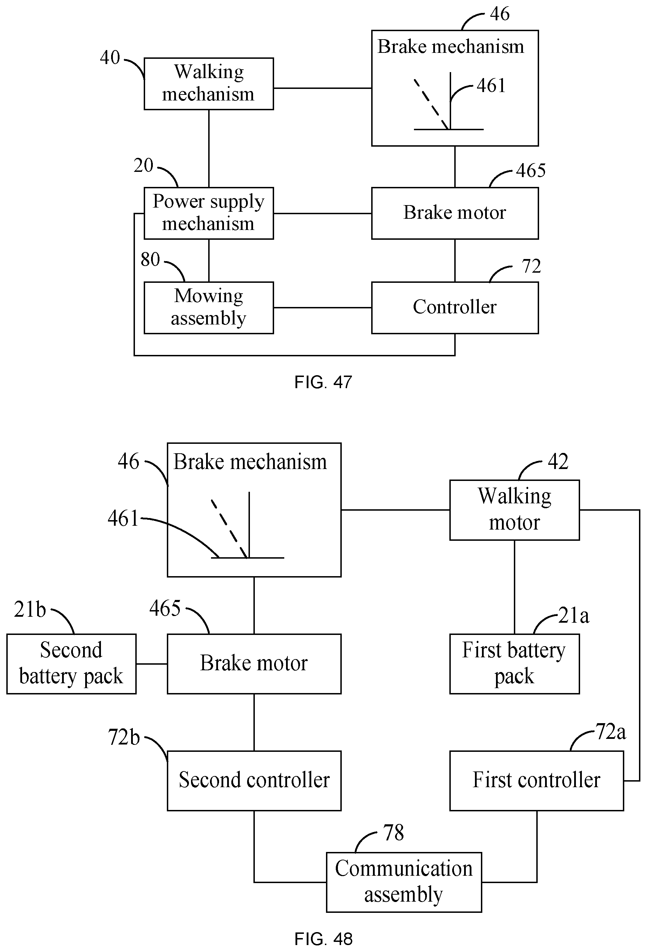

The manned mower 200a further includes a brake motor 465 connected to the brake mechanism 46. The brake motor 465 drives the brake mechanism 46 to switch between the braking state and the release state. The manned mower 200a further includes a control mechanism 70 configured to control the operation of the manned mower 200a. The control mechanism 70 includes a controller 72 and a detection assembly 74. In this example, the controller 72 controls at least the operation of the walking mechanism 40 and the mowing assembly 80. As shown in FIG. 47, the controller 72 is configured to, when receiving an anomaly signal, control the brake motor 465 to operate to drive the brake mechanism 46 to switch from the release state (a position of the pedal 461 indicated by a solid line) to the braking state (a position of the pedal 461 indicated by a dashed line). The anomaly signal indicates an anomaly of at least one of the walking mechanism 40, the mowing assembly 80, the power supply mechanism 20, or the control mechanism 70. For example, the controller 72 adopts a dedicated control chip, for example, a single-chip microcomputer or an MCU.

In this example, the controller 72 may be configured to control the brake motor 465 to drive the brake mechanism 46 to switch between the braking state and the release state so that the manned mower 200a can automatically brake under certain conditions, thereby avoiding the problem of untimely braking due to some special working conditions or a level reason of the operator and reducing damages to the operator. Meanwhile, in this example, when identifying the anomaly of at least one of the walking mechanism 40, the mowing assembly 80, the power supply mechanism 20, or the control mechanism 70, the controller 72 may control the brake motor 465 to drive the brake mechanism 46 to brake the walking mechanism 40, thereby ensuring the braking reliability of the brake mechanism 46, preventing a brake failure due to the anomaly, and ensuring the traveling safety of the manned mower 200a through a double guarantee of electronic control and mechanical operation.

In this example, a transmission assembly 466 is provided between the brake motor 465 and the pedal 461. The brake motor 465 is connected to the brake mechanism 46 to drive the pedal 461 to rotate about the pedal spindle 462 by a preset angle, thereby driving the pull cord 463 to drive the brake drum to brake the walking mechanism 40. The brake mechanism 46 is mechanically driven by the brake motor 465 to achieve automatic braking and more stable braking control.

As shown in FIG. 48, in some examples, to reduce a computational volume of the controller 72 to reduce a computational load of the controller 72, dual controllers 72 are used for control. For example, the controller 72 adopts dual MCUs. The controller 72 includes a first controller 72a configured to control the operation of the walking motor 42 or the mowing motor 82 and a second controller 72b configured to control the operation of the brake motor 465. It is to be understood that the first controller 72a and the second controller 72b may be disposed on the same control circuit board, or the first controller 72a and the second controller 72b may be separately disposed on two control circuit boards.

The control mechanism 70 further includes a communication assembly 78 for enabling communication between the first controller 72a and the second controller 72b, such as asynchronous serial communication, serial bus communication, or parallel communication. The above communication protocols do not affect the substantive content of the present application.

As shown in FIG. 48, in some examples, to ensure the reliability and interference resistance of automatic braking control, the power supply mechanism 20 includes an independent power supply that independently supplies power to the brake motor 465. For ease of reference, the power supply mechanism 20 includes at least a first battery pack 21a and a second battery pack 21b, where the first battery pack 21a supplies power to at least the walking motor 42 and the second battery pack 21b supplies power to at least the brake motor 465. The first battery pack 21a is different from the second battery pack 21b. For example, the first battery pack 21a and the second battery pack 21b are not the same battery pack 21 or the same battery pack group. For example, the first battery pack 21a and the second battery pack 21b have different nominal voltages, different nominal capacities, or different discharge capabilities. For example, cells in the first battery pack 21a and the second battery pack 21b are made of different materials or are of different types. For example, the first battery pack 21a and the second battery pack 21b have different energy. The first battery pack 21a has greater energy than the second battery pack 21b. The energy of the first battery pack 21a is greater than or equal to 1.5 kWh. In some examples, the energy of the first battery pack 21a is greater than or equal to 3 kWh. In some examples, the energy of the first battery pack 21a is greater than or equal to 4 kWh. In some examples, the energy of the second battery pack 21b is greater than or equal to 0.1 kWh. In some examples, the energy of the second battery pack 21b is greater than or equal to 0.4 kWh. In some examples, the energy of the second battery pack 21b is greater than or equal to 0.6 kWh. Of course, the first battery pack 21a and the second battery pack 21b may have the same energy or different energy. In this example, the first battery pack 21a has lithium iron phosphate cells, and the second battery pack 21b has lithium cells, is a nickel-cadmium battery, or is made of graphene or other materials, so as to achieve different combinations of battery characteristics. In some examples, the first battery pack 21a may be a supercapacitor, also referred to as an electrochemical capacitor. In some examples, the first battery pack 21a and the second battery pack 21b each have a rated voltage greater than or equal to 40 V and less than or equal to 80 V. The first battery pack 21a can supply electrical energy to the second battery pack 21b to charge the second battery pack 21b. The first battery pack 21a in a discharged state can charge the second battery pack 21b.

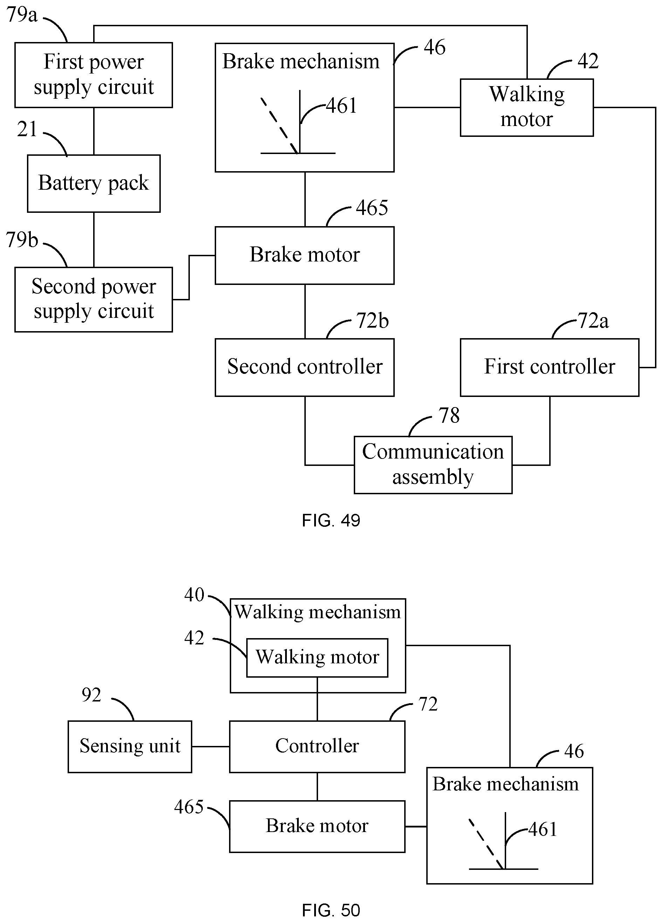

As shown in FIG. 49, in some examples, the walking motor 42 and the brake motor 465 use the same battery pack 21 but different power supply circuits. For example, the walking motor 42 is powered by a first power supply circuit 79a and the brake motor 465 is powered by a second power supply circuit 79b. The first power supply circuit 79a is different from the second power supply circuit 79b. In some examples, the walking motor 42 and the brake motor 465 are powered by different battery packs and different power supply circuits. For example, the first battery pack 21a supplies power to the walking motor 42 through the first power supply circuit 79a, and the second battery pack 21b supplies power to the brake motor 465 through the second power supply circuit 79b. The brake motor 465 is powered by the independent power supply so that even if the walking motor 42 or the mowing motor 82 are abnormally powered off, the brake motor 465 is not hindered from providing a drive force for the brake mechanism 46.

In this example, an anomaly signal of the control mechanism 70 includes an anomaly in the control of the walking electric motor 42, such as an overtemperature, overvoltage, or overcurrent of the first walking electric motor 42L and/or the second walking electric motor 42R, or an anomaly signal of the detection assembly 74. The anomaly signal further includes other signals indicating a braking need, such as a switch release of the support mechanism 90 such as the seat 91.

An anomaly of the power supply mechanism 20 includes no discharge, an extremely low or high discharge voltage, or an extremely low or high discharge current of the power supply mechanism 20. In some examples, the anomaly of the power supply mechanism 20 further includes that the power supply mechanism 20 is disconnected from a current loop, such as a power-off according to an instruction of the operator, or that the power supply mechanism 20 enters a protection program and is disconnected by the control mechanism 70 from the current loop, such as overcurrent protection, overvoltage protection, or overtemperature protection.

As shown in FIG. 50, in some examples, the manned mower 200a further includes a sensing unit 92 configured to sense an obstacle in a traveling direction of the manned mower 200a and communicatively connected to the controller 72. The controller 72 is configured to change an operating state of the walking motor 42 based on a feedback signal from the sensing unit 92 to change the manned mower 200a to a turn or to control the operation of the brake motor 465 based on a feedback signal from the sensing unit 92 to drive the brake mechanism 46 to switch from the release state to the braking state. The sensing unit 92 is provided, and the brake motor 465 is controlled according to the signal from the sensing unit 92. When sensing the obstacle in the traveling direction, the sensing unit 92 feeds back a signal to the controller 72, and the controller 72 controls the walking motor 42 and the brake motor 465 according to the feedback signal, where the control manner may be selected according to an actual situation. If the obstacle is in a stationary state and the manned mower 200a is in a traveling state, the controller 72 controls the brake motor 465 of the manned mower 200a to stepwise brake the walking mechanism 40, and the walking mechanism 40 decelerates, thereby achieving a stop before colliding with the obstacle and avoiding a crash, or the controller 72 controls the walking motor 42 of the manned mower 200a to turn, thereby achieving a turn before colliding with the obstacle and avoiding a crash. If the obstacle is in a traveling state, the controller 72 controls the manned mower 200a to turn, thereby avoiding the crash and achieving automatic obstacle avoidance. Thus, the problem of a collision accident due to a failure of the user to operate in time to avoid the obstacle is solved. The sensing unit 92 may be an infrared sensor that can sense the obstacle or a ranging sensor that can sense the distance from the obstacle.

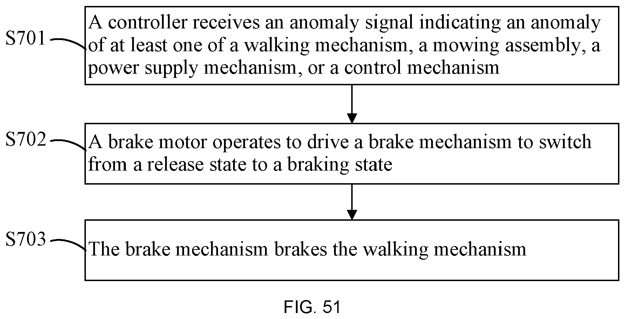

As shown in FIG. 51, based on the same concept, the present application further provides a control method of the manned mower 200a. The method includes the steps below.

In S701, the controller receives the anomaly signal indicating the anomaly of at least one of the walking mechanism, the mowing assembly, the power supply mechanism, or the control mechanism.

In S702, the brake motor operates to drive the brake mechanism to switch from the release state to the braking state.

In S703, the brake mechanism brakes the walking mechanism.

In this example, when the controller 72 acquires a start permission signal of the walking motor 42 after the brake motor 465 drives the brake mechanism 46 to be in the braking state, the controller 72 is further configured to control the brake motor 465 to rotate to release a force applied to the brake mechanism 46 and release the automatic braking control so that the brake mechanism 46 is switched from the braking state to the release state.

In this example, the controller 72 issues the start permission signal of the walking motor 42 when the controller 72 determines that none of the following components has abnormal output, including the case where neither of the first walking electric motor 42L and the second walking electric motor 42R has an anomaly, the operating member 511 is in a start permission state, the seat 91 is in a start permission state, a switch assembly 61b (startup switch or key) is in a start permission state, and a parking brake mechanism 44 is in an unlocking state. The controller 72 issues the start permission signal. That is to say, when all the above conditions are satisfied, the controller 72 issues the start permission signal, and the controller 72, when receiving a startup signal, drives the walking electric motor 42 or/and the mowing electric motor to start.

In this example, the manned mower 200a further includes a display device 60a. The display device 60a may be, for example, an audible indicator, an LCD, an LED display, an OLED display, or an organic EL display. A display screen 61 reflects a working state of the manned mower 200a on a display interface 61a. At least a power-on situation of the brake motor 465, a working state of the brake mechanism 46, and an anomaly reminder of the brake motor 465, such as a brake anomaly reminder and a release anomaly reminder, are fed back on the display interface 61a.

In some examples, when the controller 72 acquires a drive signal for the walking motor 42 after the brake motor 465 drives the brake mechanism 46 to be in the braking state, the controller 72 is further configured to control the brake motor 465 to rotate to release the force applied to the brake mechanism 46. In some examples, when the walking motor 42 receives the drive signal, the walking motor 42 starts to rotate, and the brake motor 465 automatically releases the force applied to the brake mechanism 46 to release the automatic braking.

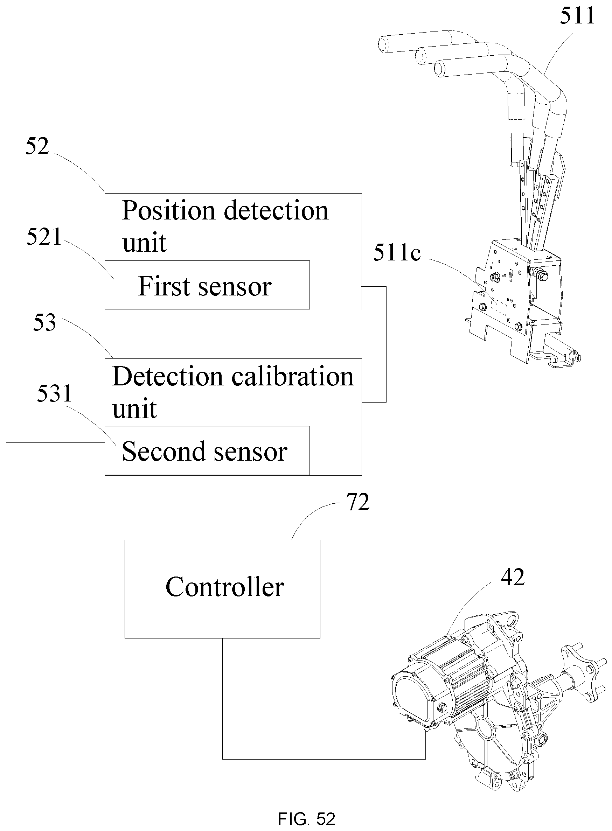

As shown in FIGS. 1 to 4 and 52 to 55, the manned mower 200a of the present application is provided with two left and right operating lever assemblies, and the steering and straight-traveling speed of the vehicle are controlled according to tilt angles of the left and right operating lever assemblies 51.

In this example, the walking wheel group 41 includes left walking wheels (referring to the left front walking wheel 412L and the left rear walking wheel 411L shown in FIG. 4) and right walking wheels (referring to the right front walking wheel 412R and the right rear walking wheel 411R shown in FIG. 4); and the walking motor 42 includes the first walking electric motor 42L and the second walking electric motor 42R for driving a left walking wheel and a right walking wheel, respectively.

The operating lever assemblies include a left operating member 511L and a right operating member 511R that can be gripped by the user, and the first walking electric motor 42L and the second walking electric motor 42R are independently controlled through corresponding operations on the left operating member 511L and the right operating member 511R. In this example, the right operating member 511R is used as an example, and subsequently, the right operating member 511R is referred to as the operating member 511, which is not intended to limit the present application.

The manned mower 200a further includes a position detection unit 52. The position detection unit 52 includes a first sensor 521 configured to detect a position of the operating member 511. The first sensor 521 sends a first output signal. A detection calibration unit 53 is further included. The detection calibration unit 53 includes a second sensor 531 configured to detect the position of the operating member 511 and send a second output signal. The controller 72 is configured to control the operation of the walking motor 42 based on the first output signal to change at least a speed and a direction of the manned mower 200a and when a proportional relationship between the first output signal and the second output signal exceeds a preset range, control the walking motor 42 to stop or enter a speed limiting mode. In this example, for the operating member 511 on one side, the position detection unit 52 and the detection calibration unit 53 are used to detect the position of the operating member 511 and calibrate detection data. When a difference between the detection data and calibration data exceeds a preset value, it indicates an anomaly of the detection data, and the controller 72 controls the walking motor 42 to stop or enter the speed limiting mode. The anomaly detection method is robust, safe, and reliable. It is to be explained that the proportional relationship includes the ratio of the first output signal to the second output signal, a relative magnitude relationship between the first output signal and the second output signal, or a difference relationship between the first output signal and the second output signal. For example, the controller 72 adopts the dedicated control chip, for example, the single-chip microcomputer or the MCU.

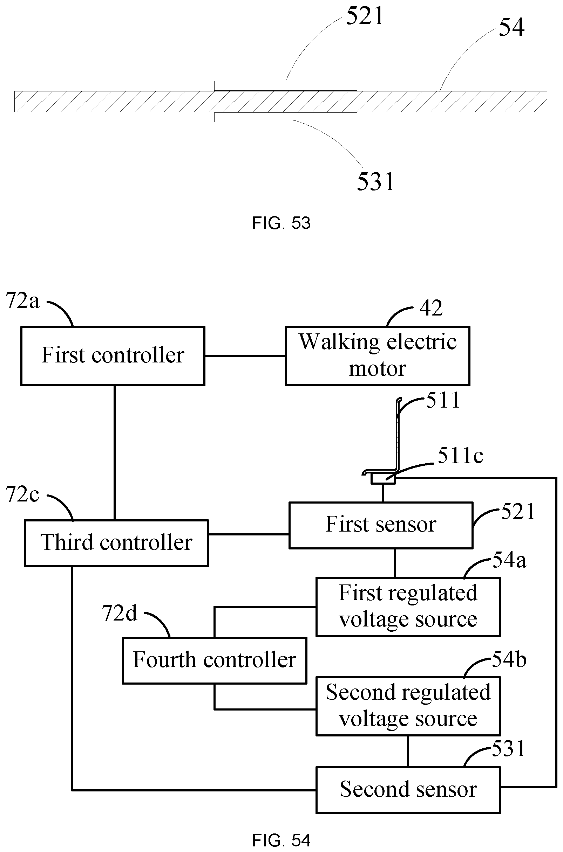

As shown in FIG. 53, the control mechanism 70 of the manned mower 200a includes an operating circuit board 54, where the first sensor 521 and the second sensor 531 are separately mounted on two sides of the operating circuit board 54 and are opposite to each other. In this example, the operating circuit board 54 includes a PCB and an FPC. The first sensor 521 includes a non-contact sensor such as a Hall sensor. A first magnet 511c detected by a magnetic sensor is disposed on the operating member 511. The first sensor 521 detects a change of a magnetic field of the first magnet 511c and sends the first output signal for characterizing the position of the operating member 511 to the controller 72. The second sensor 531 includes a non-contact sensor such as a Hall sensor. The second sensor 531 detects the change of the magnetic field of the first magnet 511c. The second sensor 531 detects the change of the magnetic field of the first magnet 511c and sends the second output signal for characterizing the position of the operating member 511 to the controller 72. The controller 72 determines that the proportional relationship between the first output signal and the second output signal exceeds the preset range to determine that the detection of the first sensor 521 of the position detection unit 52 is abnormal, and the controller 72 controls the walking motor 42 to stop or operate at a limited speed. Another example sensor includes a potentiometer.

As shown in FIG. 54, in this example, the controller 72 includes a first regulated voltage source 54a that supplies power to the first sensor 521 and a second regulated voltage source 54b that supplies power to the second sensor 531. The first regulated voltage source 54a and the second regulated voltage source 54b are isolated from each other and from the remaining circuits of the controller 72. Redundantly regulated voltage sources are used so that one of the first regulated voltage source 54a and the second regulated voltage source 54b can fail, and the manned mower 200a can still operate in a safe mode.

In this example, the controller 72 includes multiple control chips, that is, the controller 72 adopts dual MCUs or multiple MCUs. For example, the controller 72 includes the first controller 72a for controlling the walking motor 42, a third controller 72c for calculating the proportional relationship between the first output signal and the second output signal and sending a signal with a result to the first controller 72a, and a fourth controller 72d for regulating the voltage sources. It is to be understood that multiple controllers 72 may be disposed on one circuit board or multiple circuit boards.

In this example, that the controller 72 controls the walking motor 42 to stop includes that the controller 72 directly sends control signals to the walking electric motor 42 to stop the walking electric motor 42 through on or off states of a driver circuit 73b, that the controller 72 controls the brake motor 465 and the brake mechanism 46 to brake the walking electric motor 42 through the brake mechanism 46, or that the parking brake mechanism 44 brakes an output shaft 423 of the walking electric motor 42 to brake the walking electric motor 42.

In the speed limiting mode, the controller 72 is configured to, when a target rotational speed indicated by the operating member 511 is greater than a first rotational speed, restrict a rotational speed of the walking motor 42 to being less than or equal to the first rotational speed. This ensures that the walking electric motor 42 walks at a low speed to go home or enter a maintenance station.

In this example, a human-machine interaction mechanism 60 is configured to output an alarm signal to the user when the proportional relationship between the first output signal and the second output signal exceeds the preset range. According to differences in the human-machine interaction mechanism 60, the alarm signal includes an audible prompt (including a beep, a warning tone, or a voice prompt), a photoelectric prompt (including flicking and a change in a special color), and displaying signs and special codes.

In this example, the right operating member 511R and the left operating member 511L have the same structure and control manner, ensuring the robustness of detection data of the operation mechanism 50.

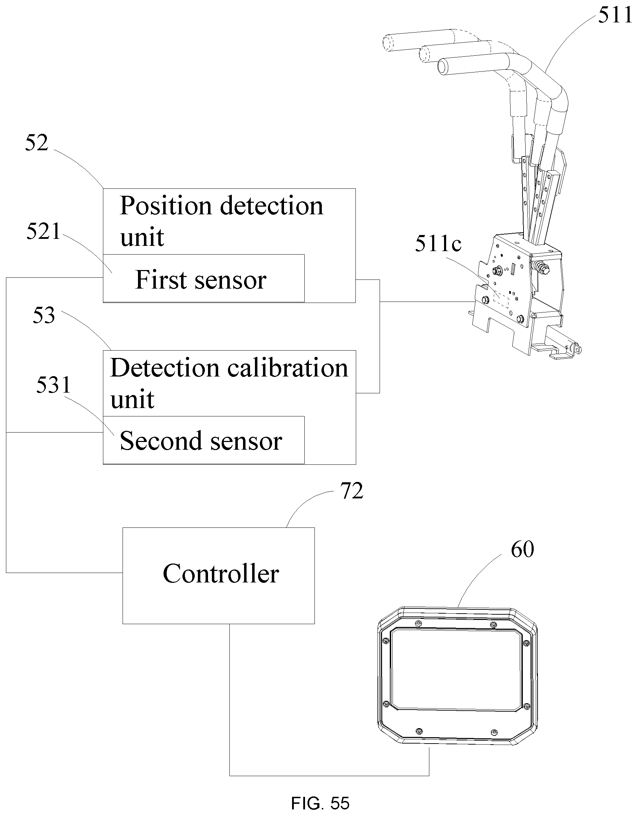

As shown in FIG. 55, the present application further discloses an outdoor traveling device 100 including a work attachment for implementing a function of the outdoor traveling device 100. The outdoor traveling device 100 further includes the position detection unit 52. The position detection unit 52 includes the first sensor 521 configured to detect the position of the operating member 511. The first sensor 521 sends the first output signal. The outdoor traveling device further includes the detection calibration unit 53 configured to detect the position of the operating member 511 and send the second output signal. The controller 72 is configured to control the operation of the walking motor 42 based on the first output signal to change a speed or a direction of the outdoor traveling device 100 and output the alarm signal to the user in response to at least one of an anomaly of the first output signal, an anomaly of the second output signal, or an anomaly of the proportional relationship between the first output signal and the second output signal. Thus, the user can find an anomaly of a detection component or an anomaly of the detection data in time and perform corresponding operations in time, ensuring the traveling safety. In this example, the work attachment includes the mowing assembly 80 including the mowing blade 81 and the mowing motor 82 for driving the mowing blade 81. As shown in FIG. 3, in some examples, the work attachment includes a snow shoveling mechanism 80d, and the outdoor traveling device 100 is a snow thrower 100d.

In this example, when the controller 72 determines that any one of the first sensor 521 and the second sensor 531 sends an anomaly signal, the other sensor operates instead of the abnormal sensor, and a detection result is sent in the form of a signal.

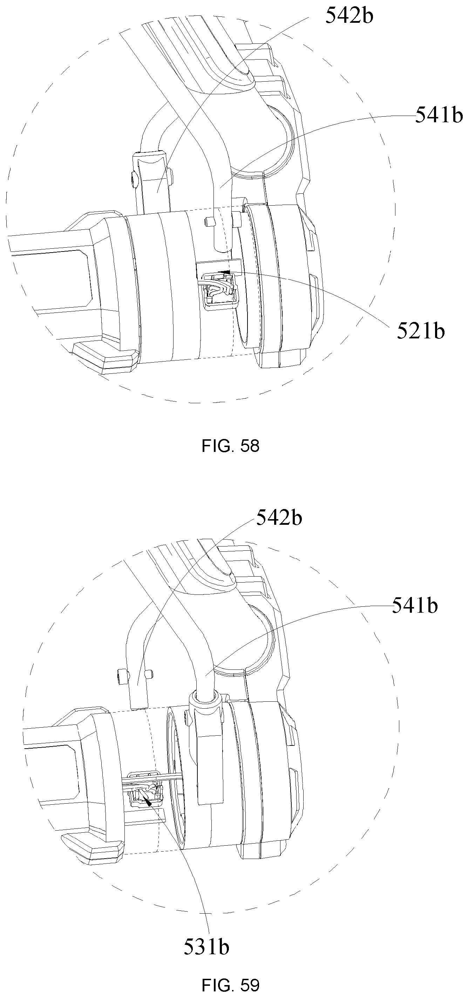

As shown in FIG. 1 and FIGS. 56 to 59, in some examples, the outdoor traveling device 100 is the electric mower 200, and the outdoor traveling device 100 is a rear-walking power tool, such as a push mower 200b. In some other examples, the rear-walking power tool may be other rear-walking devices such as a cart. Taking the push mower 200b as an example, the push mower 200b includes a main body 10b and a handle device 50b, and the main body 10b includes at least a mowing assembly 80 and a power supply. In some examples, the main body 10b includes a walking assembly, and the walking assembly includes walking wheels. The walking assembly also includes walking motors that provide assistance for the user to push the push mower 200b to walk.

The handle device 50b is connected to the main body 10b through connecting rods, and the handle device 50b includes gripping portions 51b, and the gripping portions 51b are provided with two, which are convenient for the user to hold with both hands. In some examples, the handle device 50b further includes a gripping rod 55b, and the two gripping portions 51b are connected by the gripping rod 55b, so that the part of the handle device 50b for the user to grip is a U-shaped structure. When operating the push mower 200b, the user can not only hold the gripping portions 51b, but also hold the gripping rod 55b.

The handle device 50b includes a switch box 56b, or a part of the structure of the handle device 50b is configured as the switch box 56b, and the switch box 56b is provided with an interactive assembly 561b for feedback and/or setting an operating state of the main body 10b, and the interactive assembly 561b includes a control chip, such as a single chip microcomputer, or a microcontroller unit (MCU). In some examples, the switch box 56b is configured with a control element for controlling the operating state of the main body 10b, such as a printed circuit board (PCB) and a flexible printed circuit (FPC).

The handle device 50b includes a trigger switch 54b, which at least controls the push mower 200b to mow. The trigger switch 54b is operated to cause displacement or state change, so that the trigger switch 54b is activated or deactivated.

The handle device 50b also includes a position detection device 52b, which includes a first sensor 521b configured to detect a position of the trigger switch 54b. The first sensor 521b sends a first output signal. The position detection device 52b also includes a second sensor 531b, which is configured to detect a position of the trigger switch 54b and send a second output signal. When the first output signal and the second output signal respectively meet preset values, the push mower 200b performs a preset action. For example, when the first output signal and the second output signal respectively indicate that the trigger switch 54b is activated, the push mower 200b performs a mowing operation. In this example, the trigger switch 54b includes a first trigger switch 541b and a second trigger switch 542b, the first sensor 521b detects the first trigger switch 541b, and the second sensor 531b detects the second trigger switch 542b. A high-safety dual trigger switch design is adopted, each trigger switch 54b is independently configured with a sensor, and a dual detection mechanism is used to enable the push mower 200b to start working only when two sensors simultaneously detect a valid trigger signal. This design has significant safety advantages over a traditional single sensor solution, and can effectively avoid the risk of accidental startup caused by a single sensor failure or false triggering.

The first sensor 521b includes a non-contact sensor, such as a Hall sensor. The second sensor 531b includes a non-contact sensor, such as a Hall sensor. As a non-contact magnetic induction element, the Hall sensor outputs a corresponding electrical signal by detecting the displacement change of a magnet in the trigger switch 54b, and has higher working stability and anti-interference ability.

When the user operates the push mower 200b, the two trigger switches 54b (the first trigger switch 541b and the second trigger switch 542b) must be correctly pressed at the same time, so that the two Hall sensors (the first sensor 521b and the second sensor 531b) both output high-level signals, and the control system will determine it as a valid operation instruction. This "and" logical relationship design ensures that even if one of the sensors fails or is interfered with, the control system can still maintain a safe locked state. This redundant safety design can adapt to various complex outdoor working environments and effectively prevent misoperation caused by factors such as rain, dust or vibration.

When a proportional relationship between the first output signal and the second output signal exceeds a preset range, the push mower 200b is controlled to stop or enter a speed limit mode. It should be explained that the proportional relationship includes a ratio of the first output signal to the second output signal, or a relative magnitude relationship between the first output signal and the second output signal, or a difference relationship between the first output signal and the second output signal.

In this example, the interactive assembly 561b is configured to output an alarm signal to the user when the proportional relationship between the first output signal and the second output signal exceeds the preset range. Depending on the interactive assembly 561b, the alarm signal includes a sound prompt (including a buzzer, a warning sound or a voice prompt), a photoelectric prompt (including flashing and a special color change), and a mark and a special code display.

In some examples, a power tool includes a handle device 50b. The handle device 50b also includes a trigger switch 54b, and the trigger switch 54b is used to control the power tool to mow the lawn. The trigger switch 54b is operated to cause displacement or state change, so that the trigger switch 54b is activated or deactivated.

The handle device 50b also includes a position detection device 52b including a first sensor 521b, which is configured to detect the position of the trigger switch 54b. The first sensor 521b sends a first output signal. The position detection device 52b also includes a second sensor 531b, which is configured to detect the position of the trigger switch 54b and send a second output signal. When the first output signal and the second output signal respectively meet the preset values, the power tool performs a preset action. For example, when the first output signal and the second output signal respectively represent that the trigger switch 54b is activated, the power tool starts working. In this example, the trigger switch 54b includes a first trigger switch 541b and a second trigger switch 542b, the first sensor 521b detects the first trigger switch 541b, and the second sensor 531b detects the second trigger switch 542b. A high-safety dual trigger switch design is adopted, and each trigger switch 54b is independently configured with a sensor. The dual detection mechanism ensures that the power tool will only start working when two sensors detect a valid trigger signal at the same time. This design has significant safety advantages over a traditional single sensor solution, and can effectively avoid the risk of accidental startup caused by a single sensor failure or false triggering.

The first sensor 521b includes a non-contact sensor, such as a Hall sensor. The second sensor 531b includes a non-contact sensor, such as a Hall sensor. As a non-contact magnetic induction element, the Hall sensor outputs a corresponding electrical signal by detecting the displacement change of a magnet in the trigger switch 54b, and its working stability and anti-interference ability are higher than those of a mechanical switch. Exemplarily, the power tool includes outdoor gardening tools such as a hedge trimmer, a blower, a grass trimmer, and a chain saw.

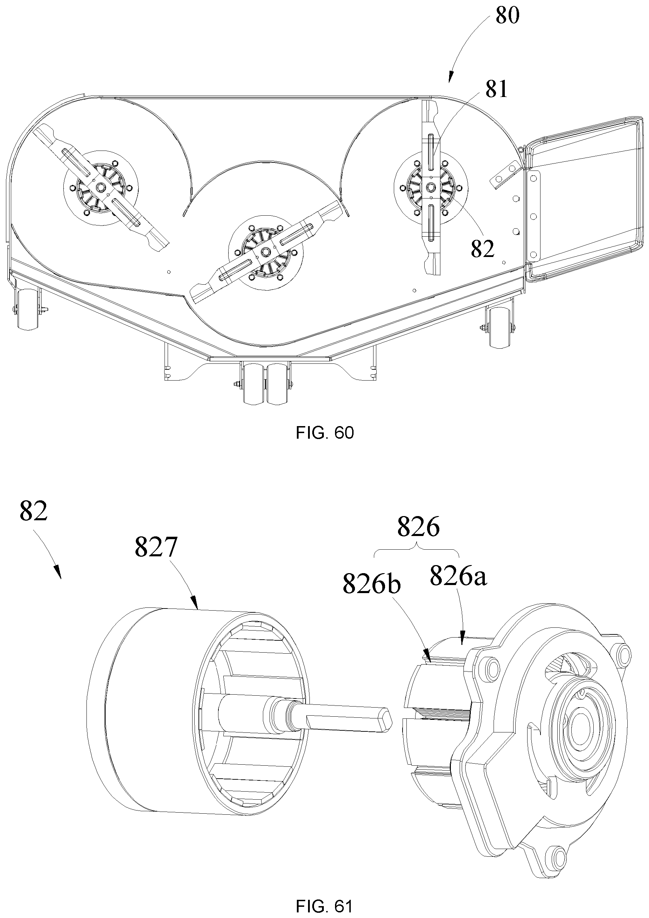

As shown in FIG. 60, for the structure of the mowing assembly 80 and a control method of the mowing assembly 80, the present application discloses the electric mower 200. The electric mower 200 disclosed in the present application includes the push or walk-behind mower, the manned mower 200a, or the robotic mower.

As shown in FIGS. 60 to 62, the electric mower 200 includes the mowing assembly 80 including the mowing blade 81 and the mowing motor 82 for driving the mowing blade 81. The power supply mechanism 20 supplies power to at least the mowing motor 82. In this example, the mowing motor 82 is configured to be an electric motor, such as a brushless electric motor. A mowing electric motor is used hereinafter instead of the mowing motor 82, which is not intended to limit the present application. The mowing electric motor 82 is a three-phase brushless electric motor and includes a stator 826 and a rotor 827. The stator 826 includes a stator core 826a and coil windings 826b. The mowing electric motor 82 includes three-phase stator windings U, V, and W that are electronically commutated. In some examples, the three-phase stator windings U, V, and W adopt a star connection. In some other examples, the three-phase stator windings U, V, and W adopt a delta connection. However, it is to be understood that other types of brushless motors are also within the scope of the present disclosure. The brushless electric motor may include fewer than or more than three phases.

The electric mower 200 further includes the control mechanism 70 including a driver circuit and a controller. For convenience of distinction, portions for controlling the mowing electric motor 82 are referred to as a mowing driver circuit 73c and a mowing controller 72e. The mowing controller 72e is configured to control the operation of the mowing electric motor 82. For example, the mowing controller 72e adopts a dedicated control chip, for example, a single-chip microcomputer or an MCU. The mowing driver circuit 73c is connected to the mowing controller 72e. The mowing driver circuit 73c is configured to supply power from the power supply mechanism 20 to the mowing electric motor 82. For example, the mowing driver circuit 73c includes multiple power tubes (such as Q1, Q2, Q3, Q4, Q5, and Q6), and the power tubes change their on states according to control signals output from the mowing controller 72e to change states of a voltage and/or a current applied to the mowing electric motor 82 by the power supply mechanism 20 (battery pack 21), so as to control the operation of the mowing electric motor 82. The mowing driver circuit 73c may be a three-phase bridge driver circuit including six controllable semiconductor power devices (such as FETs, BJTs, or IGBTs). It is to be understood that the above switching elements may be any other types of solid-state switches, such as IGBTs or BJTs.

In this example, the mowing controller 72e is configured to receive at least one signal related to a phase current of the mowing electric motor 82, determine an angular position of the rotor 827 based on the phase current of the mowing electric motor 82, and output, based on the angular position of the rotor 827, drive signals applied to the mowing driver circuit 73c to control the operation of the mowing electric motor 82. In a startup stage of the mowing electric motor 82, the controller 72 acquires an initial sector where the rotor 827 is located among multiple sector positions by a pulse injection method and acquires a position of the rotor 827 in the initial sector by a high-frequency signal injection method to control a startup state of the mowing electric motor 82, where a high-frequency signal includes a periodic signal with different amplitudes in a positive half-cycle of the periodic signal and a negative half-cycle of the signal.

Optionally, a current detection assembly 84e is further included to detect phase currents of the windings of the stator 826 in the electric motor in real time. The mowing controller 72e may calculate a rotational speed of the electric motor according to the phase current. For example, the rotational speed of the electric motor may be estimated according to a parameter related to the phase current, such as a frequency.

In a mowing process of the electric mower 200, a process from a stop state of the mowing electric motor 82 to when the speed of the mowing electric motor 82 reaches a required rotational speed is the startup stage, where the speed of the mowing electric motor 82 is zero or substantially zero in the stop state of the mowing electric motor 82, and the required rotational speed of the mowing electric motor 82 is a mowing rotational speed preset for the mowing electric motor 82 or a mowing rotational speed set by the user. In some examples, the rotational speed of the mowing electric motor 82 is a set fixed value, that is, the operator cannot set or select the rotational speed or a rotational speed range of the mowing electric motor 82, and the required rotational speed of the mowing electric motor 82 is the set fixed value. Optionally, the required rotational speed of the mowing electric motor 82 is the rated rotational speed of the mowing electric motor 82 to ensure the efficient and safe operation of the mowing electric motor 82. In some examples, the rotational speed of the mowing electric motor 82 is a rotational speed or a rotational speed range that can be set by the user. For example, the mowing electric motor 82 includes a high gear and a low gear, the high gear corresponds to a first rated rotational speed under a first load, and the low gear corresponds to a second rated rotational speed under a second load.

In this example, the rotational speed of the mowing electric motor 82 is the set fixed value for example, and the startup stage of the mowing electric motor 82 is a process from the stop state to when the speed of the mowing electric motor 82 reaches the rated rotational speed. If the rotational speed of the mowing electric motor 82 is directly increased to the rated rotational speed in the startup stage, in response to a relatively large amount of grass to be mowed, a startup load of the mowing electric motor 82 exceeds a preset value, easily resulting in an extremely high current of the mowing electric motor 82 or a startup failure of the mowing electric motor 82.

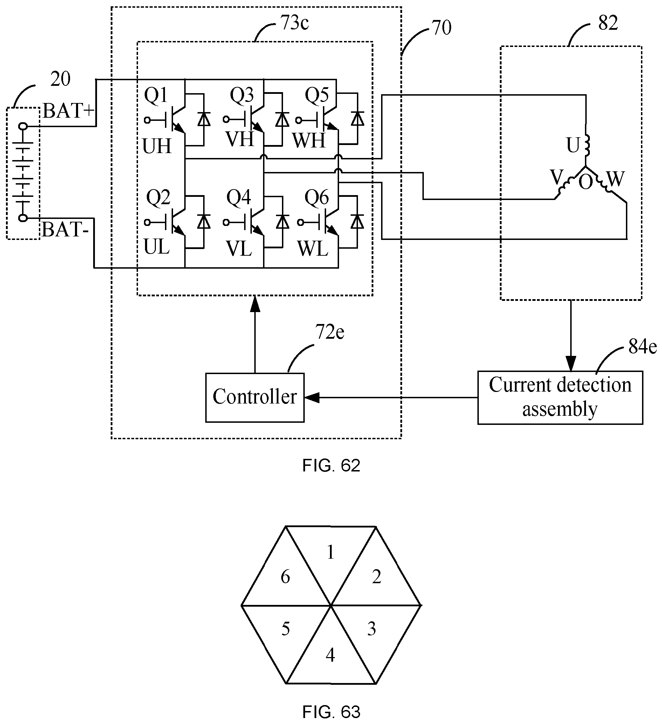

The startup stage includes an initial stage and an acceleration stage. In the initial stage, the speed of the mowing electric motor 82 remains low to drive the grass to be mowed and a mowing element to have a rotational tendency. In this example, the mowing electric motor 82 adopts sensorless control, and the mowing controller 72e detects the angular position of the rotor 827 based on at least one signal related to the phase current of the mowing electric motor 82. In this example, the mowing electric motor 82 is the three-phase brushless electric motor, and the mowing driver circuit 73c is a three-phase inverter bridge driver circuit including three high-side FETs and three low-side FETs. Gates of the high-side FETs are driven by drive signals UH, VH, and WH, and gates of the low-side FETs are driven by drive signals UL, VL, and WL. Drains of the high-side FETs are coupled to sources of the low-side FETs to output power signals PU, PV, and PW for driving the mowing electric motor 82. As shown in FIG. 63, the mowing electric motor 82 is divided into six sectors in a circumferential direction of the stator 826 according to an electrical angle of π/3, that is to say, a commutation action is performed each time the electric motor rotates by an electrical angle of π/3. In other words, the 360° rotation of the rotor 827 of the mowing electric motor 82 may be divided into six sectors, and each sector is 60°, with only one high-side switch and one low-side switch active in each sector.

In this example, in the initial stage of the startup stage, the mowing controller 72e acquires the initial sector where the rotor 827 is located among the multiple sector positions by the pulse injection method. Optionally, the mowing controller 72e sequentially injects a series of voltage pulses into all the sectors of the electric motor in an initial position detection (IPD) period. After each voltage pulse is injected, the mowing controller 72e measures a current flowing through a preset resistor. A maximum induced current is generated in the sector corresponding to the position of the rotor 827 in response to the voltage pulse. Therefore, a sector corresponding to a relatively large current measured is identified by the mowing controller 72e as an initial position of the rotor 827. For example, according to the rated parameters of different electric motors, the width of the voltage pulse and a position of the preset resistor are preset, which are not specifically limited according to different examples.

After determining the initial sector of the rotor 827 of the mowing electric motor 82, the mowing controller 72e acquires the angular position of the rotor 827 in the initial sector by the high-frequency signal injection method. The high-frequency signal includes the periodic signal with different amplitudes in the positive half-cycle of the periodic signal and the negative half-cycle of the signal. The saliency ratio of the rotor 827 of the mowing electric motor 82 is increased. During high-frequency signal injection, a direct current bias is injected in the positive half-cycle of the periodic signal of the phase current or the negative half-cycle of the signal so that the amplitude of the signal in the positive half-cycle or the negative half-cycle in which the direct current bias is injected is greater than or equal to 10% of a bus voltage and less than or equal to 20% of the bus voltage, increasing the ratio of a quadrature-axis component iq to a direct-axis component id of the current of the rotor 827 of the mowing electric motor 82.

In this example, position information of the rotor 827 can be accurately acquired in a low-speed or stationary state of the electric motor by the high-frequency signal injection method. The mowing controller 72e outputs a high-frequency electrical signal, loads the high-frequency electrical signal to the three-phase windings of the stator 826 of the electric motor, and acquires a response signal output by the windings of the stator 826 based on the high-frequency electrical signal, where the response signal may be a high-frequency phase current signal with a high-frequency amplitude. Optionally, the controller 72 may estimate the position of the rotor 827 according to a relative relationship between the response signal and a preset position of the rotor 827. For example, the controller 72 may estimate the position of the rotor 827 according to a relative relationship between the high-frequency amplitude of the response signal and the preset position of the rotor 827. It is to be noted that since a quadrature-axis component iq of the high-frequency response signal is correlated to a position error of the rotor 827, in the case where the amplitude of the high-frequency response signal converges to zero, the corresponding preset position of the rotor 827 also converges to obtain a real position of the rotor 827. In the present application, a direction of the position of the rotor 827 is defined as a direct axis (d-axis), and a direction perpendicular to the direct axis is defined as a quadrature axis (q-axis).

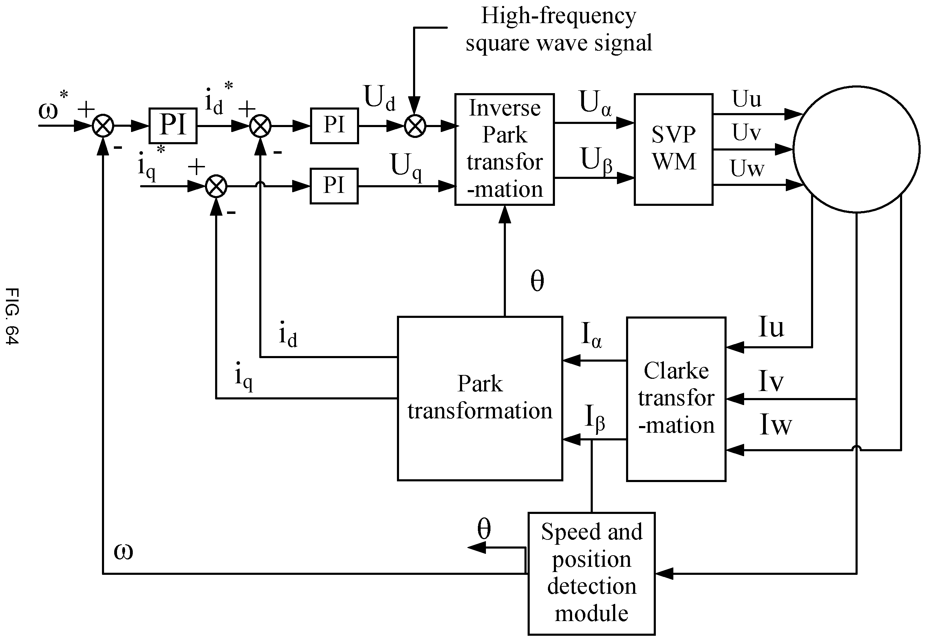

As shown in FIG. 64, in this example, the operation of the mowing motor 82 is controlled in an FOC mode. The FOC mode includes a current loop and a speed loop. The mowing controller is configured to obtain three-phase currents (such as Iu, Iv, and Iw) of the mowing motor 82 in a three-phase stationary coordinate system (where current vectors of two phases of three-phase coils may be sampled, and a current vector of the last phase may be calculated according to the Kirchhoff's current law). The three-phase currents are subjected to Clarke transformation to obtain two orthogonal time-varying current vectors I_{α} and I_{β}. The current vectors are subjected to Park transformation so that two-phase direct currents, a q-axis current iq and a d-axis current id, can be obtained, where the q-axis current iq and the d-axis current id are perpendicular to each other. An actual current of the mowing motor 82 is decoupled to obtain a q-axis target current iq* and a d-axis target current id*. A deviation between the q-axis current iq and the q-axis target current iq* and a deviation between the d-axis current id and the d-axis target current id* are adjusted in a proportional-integral (PI) adjustment manner to output voltage vectors, that is, a q-axis target voltage Uq and a d-axis target voltage Ud. Further, the voltage vectors obtained above are subjected to inverse Park transformation to a two-phase stationary coordinate system to obtain two-phase alternating current voltages U_{α} and U_{β}. The two-phase alternating current voltages are converted into three-phase alternating current voltages (Uu, Uv, and Uw) by using space vector pulse-width modulation (PWM) technology. The three-phase alternating current voltages are target voltages applied to the mowing motor 82. The controller may generate PWM signals according to the acquired target voltages to control on or off states of switching elements in the driver circuit so that the mowing motor 82 operates in a set control mode. In this example, a PI controller is integrated, and the PI controller has a proportional term P and an integral term I. The proportional term P of the PI controller may be adjusted in the set control mode. In the speed loop, a speed and position detection module is used to acquire a speed feedback value ω and rotor angle feedback θ.

As shown in FIG. 64, a high-frequency square wave voltage signal is injected on a d-axis of a synchronously rotating d-q coordinate system. Optionally, the frequency of the injected high-frequency square wave signal is typically an integer multiple of a PWM switching frequency. For example, a positive square wave voltage is injected in the positive half-cycle of the d-axis, and a negative square wave voltage is injected in the negative half-cycle of the d-axis. The amplitude of the injected square wave voltage signal is greater than or equal to 7% of the bus voltage and less than or equal to 15% of the bus voltage. Since the position of the rotor 827 is observed according to a saliency characteristic when the electric motor is at a low speed or stationary, the saliency of the electric motor needs to be amplified to improve the accuracy with which the position of the rotor 827 is observed. A salient-pole electric motor has non-uniform air gaps, that is, effective air gaps along the direct axis (d-axis) and the quadrature axis (q-axis) are different. An effect of d-q axis armature reaction reactance on motor performance is referred to as a saliency effect. The saliency ratio is typically expressed as the ratio of q-axis inductance Lq to d-axis inductance Ld. In this example, during high-frequency signal injection, the direct current bias is injected in the positive half-cycle of the periodic signal of the phase current or the negative half-cycle of the signal so that the amplitude of the signal in the positive half-cycle or the negative half-cycle in which a direct current bias voltage is injected is greater than or equal to 10% of the bus voltage and less than or equal to 20% of the bus voltage, enhancing the saliency effect of the electric motor and increasing the saliency ratio. Optionally, the amplitude of the signal with the direct current bias injected is greater than or equal to 0 and less than or equal to 10% of the bus voltage. In this example, the amplitude of the periodic signal in the positive half-cycle is set to a sum of the amplitude in the negative half-cycle and a preset direct current bias.

In this example, the controller 72 is further configured to calculate the position and the rotational speed of the rotor 827 of the mowing electric motor 82 using a flux observer and when the rotational speed is greater than or equal to a rotational speed threshold and a startup time is greater than or equal to a time threshold, control, according to the position of the rotor 827 estimated using the flux observer, the commutation of the mowing electric motor 82 to enter the acceleration stage. The mowing controller 72e acquires the angular position of the rotor 827 in the initial sector by the high-frequency signal injection method, estimates the position of the rotor 827 and the rotational speed of the rotor 827 using the flux observer, and determines whether the electric motor can enter the acceleration stage based on the rotational speed of the rotor 827 and the time, to further increase the rotational speed to or approximately to the rated rotational speed. In this example, the speed and position detection module calculates the angle feedback θ and the speed feedback value ω of the rotor 827 of the mowing electric motor 82 by using the flux observer.

Optionally, the rotational speed threshold is greater than or equal to 9% of the rated rotational speed. Optionally, the rotational speed threshold is greater than or equal to 10% of the rated rotational speed. Optionally, the rotational speed threshold is greater than or equal to 11 % of the rated rotational speed. Optionally, the rotational speed threshold is greater than or equal to 12% of the rated rotational speed. Optionally, the rotational speed threshold is greater than or equal to 13% of the rated rotational speed. Optionally, the rotational speed threshold is greater than or equal to 14% of the rated rotational speed. Optionally, the rotational speed threshold is greater than or equal to 15% of the rated rotational speed. Optionally, the time threshold is greater than or equal to 500 ms. Optionally, the time threshold is greater than or equal to 400 ms. Optionally, the time threshold is greater than or equal to 300 ms. Optionally, the time threshold is greater than or equal to 200 ms. Optionally, the time threshold is greater than or equal to 100 ms. Optionally, the time threshold is greater than or equal to 50 ms. In this example, in the startup stage of the mowing electric motor 82, the mowing controller 72e calculates the position and the rotational speed of the rotor 827 of the mowing electric motor 82 using the flux observer and when the rotational speed is greater than or equal to 9% of the rated rotational speed and the startup time is greater than or equal to 500 ms, controls, according to the position of the rotor 827 estimated using the flux observer, the commutation of the mowing electric motor 82 to enter the acceleration stage so that the rotational speed of the mowing electric motor 82 is increased to or approximately to the rated rotational speed.

Optionally, the controller 72 is further configured to, when the rotational speed of the mowing electric motor 82 calculated using the flux observer is less than or equal to 0.5% of the rated rotational speed and the startup time is greater than or equal to 2.5s, control the mowing electric motor 82 to enter a locked-rotor protection mode. Optionally, the controller 72 is further configured to, when the rotational speed of the mowing electric motor 82 calculated using the flux observer is less than or equal to 3% of the rated rotational speed and the startup time is greater than or equal to 5s, control the mowing electric motor 82 to enter the locked-rotor protection mode. When the startup load of the mowing electric motor 82 exceeds the preset value in response to a relatively large amount of grass to be mowed, the mowing electric motor 82 cannot reach a preset rotational speed within a preset startup time, and the controller 72 determines that the load of the mowing electric motor 82 is too large. If the mowing electric motor 82 is forced to accelerate, the current of the mowing electric motor 82 is too large and the mowing electric motor 82 is damaged. To protect the mowing electric motor 82, after the rotational speed of the mowing electric motor 82 obtained using the flux observer and the startup time are determined to satisfy locked-rotor conditions of the electric motor, the mowing controller 72e controls the mowing electric motor 82 to enter the locked-rotor protection mode. Optionally, the locked-rotor protection mode includes that the mowing controller 72e controls the mowing electric motor 82 to decelerate or stop or that the mowing controller 72econtrols the mowing electric motor 82 to intermittently stop and start.

Optionally, after determining based on the rotational speed of the rotor 827 and the time that the electric motor can enter the acceleration stage to further increase the rotational speed to or approximately to the rated rotational speed, the mowing controller 72e switches to the high-frequency signal injection method based on a change in the rotational speed of the mowing electric motor 82 to acquire the position of the rotor 827 and control the operation of the mowing electric motor 82 according to the position of the rotor 827.

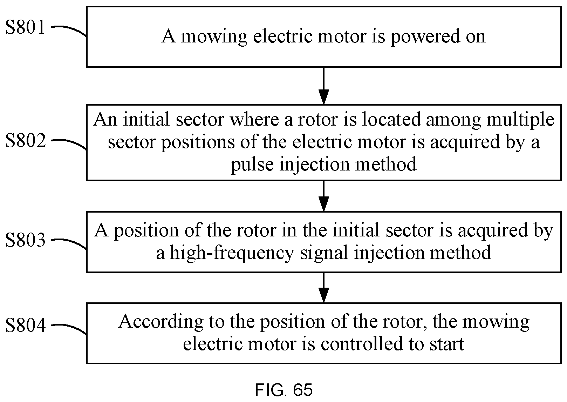

As shown in FIG. 65, the present application further provides a control method of the electric mower 200. The method includes the steps below.

In S801, the mowing electric motor is powered on.

In S802, the initial sector where the rotor is located among the multiple sector positions is acquired by the pulse injection method.

In S803, the position of the rotor in the initial sector is acquired by the high-frequency signal injection method.

The high-frequency signal includes the periodic signal with different amplitudes in the positive half-cycle of the periodic signal and the negative half-cycle of the signal. During high-frequency signal injection, the direct current bias is injected in the positive half-cycle of the periodic signal of the phase current or the negative half-cycle of the signal so that the amplitude of the signal in the positive half-cycle or the negative half-cycle in which the direct current bias is injected is greater than or equal to 10% of the bus voltage and less than or equal to 20% of the bus voltage. In S804, according to the position of the rotor, the mowing electric motor is controlled to start.

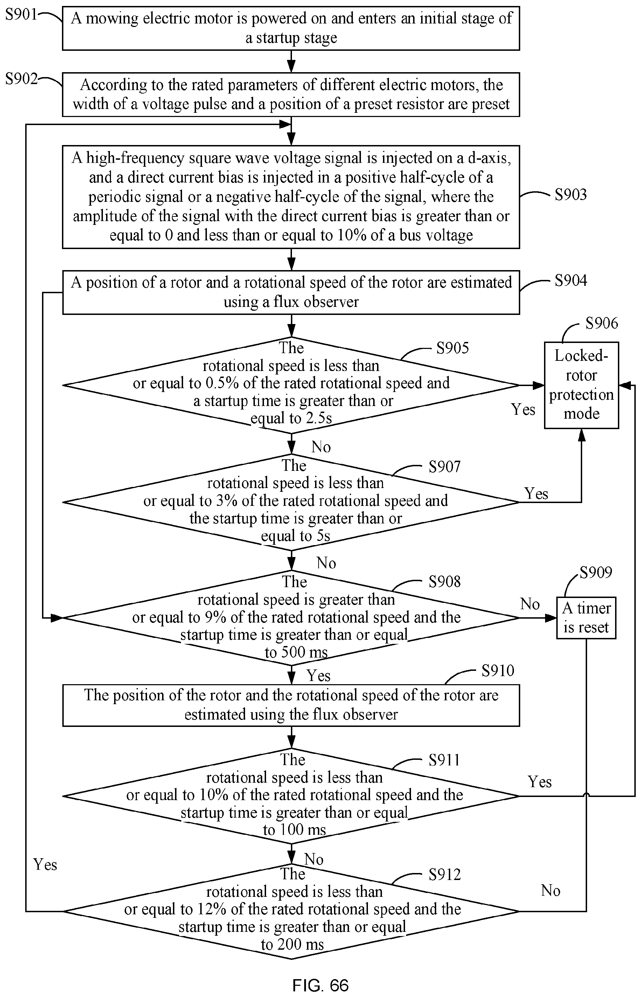

As shown in FIG. 66, the present application further provides another control method of the electric mower 200. The method includes the steps below.

In S901, the mowing electric motor is powered on and enters the initial stage of the startup stage.

In the mowing process of the electric mower 200, the process from the stop state of the mowing electric motor 82 to when the speed of the mowing electric motor 82 reaches the required rotational speed is the startup stage, where the speed of the mowing electric motor 82 is zero or substantially zero in the stop state of the mowing electric motor 82. The startup stage includes the initial stage and the acceleration stage. In the initial stage, the speed of the mowing electric motor 82 remains low to drive the grass to be mowed and the mowing element to have the rotational tendency.

In S902, according to the rated parameters of different electric motors, the width of the voltage pulse and the position of the preset resistor are preset.

In S903, the high-frequency square wave voltage signal is injected on the d-axis, and the direct current bias is injected in the positive half-cycled of the periodic signal or the negative half-cycle of the signal, where the amplitude of the signal with the direct current bias is greater than or equal to 0 and less than or equal to 10% of the bus voltage.

The mowing controller 72e acquires the initial sector where the rotor 827 is located among the multiple sector positions by the pulse injection method. Optionally, the mowing controller 72e sequentially injects a series of voltage pulses into all the sectors of the electric motor in the IPD period. After each voltage pulse is injected, the mowing controller 72e measures the current flowing through the preset resistor. The maximum induced current is generated in the sector corresponding to the position of the rotor 827 in response to the voltage pulse. Therefore, the sector corresponding to a relatively large current measured is identified by the mowing controller 72e as the initial position of the rotor 827.

The position information of the rotor 827 can be accurately acquired in the low-speed or stationary state of the electric motor by the high-frequency signal injection method. During high-frequency signal injection, the direct current bias is injected in the positive half-cycle of the periodic signal of the phase current or the negative half-cycle of the signal so that the amplitude of the signal in the positive half-cycle or the negative half-cycle in which the direct current bias voltage is injected is greater than or equal to 10% of the bus voltage and less than or equal to 20% of the bus voltage, enhancing the saliency effect of the electric motor and increasing the saliency ratio. Optionally, the amplitude of the signal with the direct current bias injected is greater than or equal to 0 and less than or equal to 10% of the bus voltage.

In S904, the position of the rotor and the rotational speed of the rotor are estimated using the flux observer.

The mowing controller 72e acquires the angular position of the rotor 827 in the initial sector by the high-frequency signal injection method, estimates the position of the rotor 827 and the rotational speed of the rotor 827 using the flux observer, and determines whether the electric motor can enter the acceleration stage based on the rotational speed of the rotor 827 and the time, to further increase the rotational speed to or approximately to the rated rotational speed.

In S905, the rotational speed is less than or equal to 0.5% of the rated rotational speed and the startup time is greater than or equal to 2.5s. If so, S906 is performed. If not, S907 is performed.

In S906, the mowing electric motor enters the locked-rotor protection mode.

The locked-rotor protection mode includes that the mowing controller 72e controls the mowing electric motor 82 to decelerate or stop or that the mowing controller 72e (controller 72) controls the mowing electric motor 82 to intermittently stop and start.

In S907, the rotational speed is less than or equal to 3% of the rated rotational speed and the startup time is greater than or equal to 5s. If so, S906 is performed. If not, S908 is performed.

When the startup load of the mowing electric motor 82 exceeds the preset value in response to a relatively large amount of grass to be mowed, the mowing electric motor 82 cannot reach the preset rotational speed within the preset startup time, and the controller 72 determines that the load of the mowing electric motor 82 is too large. If the mowing electric motor 82 is forced to accelerate, the current of the mowing electric motor 82 is too large and the mowing electric motor 82 is damaged. To protect the mowing electric motor 82, after the rotational speed of the mowing electric motor 82 obtained using the flux observer and the startup time are determined to satisfy the locked-rotor conditions of the electric motor, the mowing controller 72e controls the mowing electric motor 82 to enter the locked-rotor protection mode.

In S908, the rotational speed is greater than or equal to 9% of the rated rotational speed and the startup time is greater than or equal to 500 ms. If so, S910 is performed. If not, S909 is performed.

In S909, a timer is reset.

In S910, the position of the rotor and the rotational speed of the rotor are estimated using the flux observer.

According to the position of the rotor 827 estimated using the flux observer, the commutation of the mowing electric motor 82 is controlled to enter the acceleration stage so that the rotational speed of the mowing electric motor 82 is increased to or approximately to the rated rotational speed.

In S911, the rotational speed is less than or equal to 10% of the rated rotational speed and the startup time is greater than or equal to 100 ms. If so, S906 is performed. If not, S912 is performed.

In S912, the rotational speed is less than or equal to 12% of the rated rotational speed and the startup time is greater than or equal to 200 ms. If so, S904 is performed. If not, S909 is performed.

In this example, as mentioned above, the mowing controller 72e controls the mowing electric motor 82 through FOC. The FOC mode includes the current loop and the speed loop. For example, the current loop includes a bus current loop and a phase current loop. A loop refers to closed-loop feedback.

In this example, after the speed of the mowing electric motor 82 reaches the rated rotational speed or at least approaches the rated rotational speed, it is determined that the mowing electric motor 82 has been started and the mowing electric motor 82 enters an operating state. Optionally, according to an operating time of the mowing electric motor 82 and the speed of the mowing electric motor 82, it is determined that the electric motor has been started and the mowing electric motor 82 enters the operating state. Optionally, according to output torque of the mowing electric motor 82 and related parameters, it is determined that the electric motor has been started and the mowing electric motor 82 enters the operating state.

After determining that the mowing electric motor 82 has been started, the mowing controller 72e determines that the load of the mowing electric motor 82 exceeds a preset load threshold based on the current loop exceeding a preset threshold, and the controller 72 enters an overcurrent protection program. In this example, after the mowing controller 72e determines that the phase current and a bus current of the mowing electric motor 82 exceed a phase current threshold and a bus current threshold respectively, the mowing controller 72e controls the mowing electric motor 82 to undergo three-phase short-circuit braking. Optionally, when the phase current is greater than or equal to a hardware overcurrent threshold for more than 4 µs, the mowing controller 72e controls the mowing electric motor 82 to undergo the three-phase short-circuit braking. Optionally, when the bus current is greater than or equal to a software overcurrent threshold for more than 3s, the mowing controller 72e controls the mowing electric motor 82 to undergo the three-phase short-circuit braking. Optionally, when the startup time of the mowing electric motor 82 is greater than or equal to 5s and the rotational speed is less than 3% of the rated rotational speed or when the startup time of the mowing electric motor 82 is greater than or equal to 2.5s and the rotational speed is less than 0.5% of the rated rotational speed, the mowing controller 72e controls the mowing electric motor 82 to undergo the three-phase short-circuit braking.

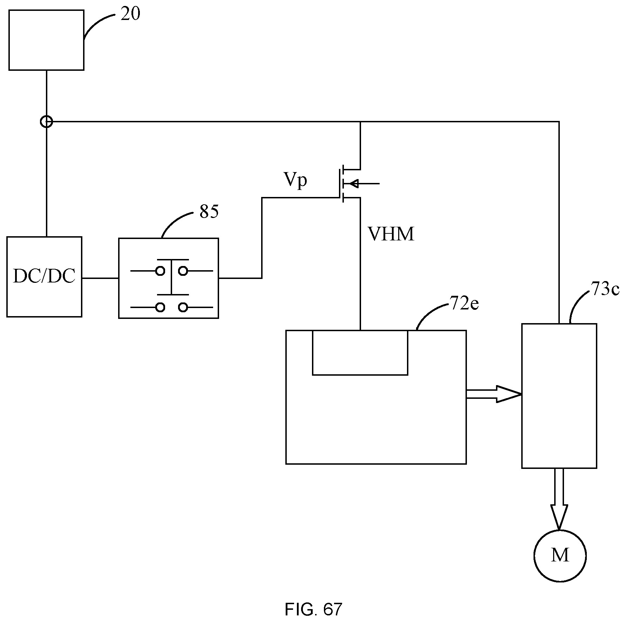

As shown in FIG. 67, a power takeoff (PTO) switch 85 is provided on a power supply branch of the mowing controller 72e, where the PTO switch 85 is a switch for controlling an auxiliary power output device. The mowing controller 72e is configured to, when the PTO switch 85 is turned on, be powered on and apply the drive signals to the driver circuit 73c to control the operation of the mowing electric motor 82. A first terminal of the PTO switch 85 is electrically connected to the power supply mechanism 20 via a direct current (DC)/DC voltage conversion module, a second terminal of the PTO switch 85 is used for controlling a Vp power supply to be powered on, and the power supply mechanism 20 outputs VHM via a switch tube to supply power to the driver circuit 73c and the mowing controller 72e on a control board. The PTO switch is configured to control the mowing controller 72e to be powered on and started without detecting a switching signal of the control board.

In this example, after the mowing controller 72e determines that the phase current and the bus current of the mowing electric motor 82 exceed the phase current threshold and the bus current threshold respectively, the mowing controller 72e initiates the overcurrent protection program and controls the mowing electric motor 82 to undergo the three-phase short-circuit braking until the mowing electric motor 82 stops, and the PTO is operated to an off position to exit the overcurrent protection program. Optionally, when a speed regulating switch is operated, an overcurrent protection state cannot be ended.

For example, the phase current threshold is less than or equal to 203 A, and when the phase current value is greater than the phase current threshold, the mowing controller 72e limits the output torque of the mowing electric motor 82, and the rotational speed of the mowing electric motor 82 is reduced. Optionally, when the mowing controller 72e determines that the load of the mowing electric motor 82 is greater than the output torque of the mower, the mowing controller 72e controls the mowing electric motor 82 to decelerate; and when the mowing controller 72e determines that the load of the mowing electric motor 82 is less than or equal to the output torque of the mower, the mowing controller 72e controls the mowing electric motor 82 to accelerate.

For example, when the bus current is greater than the bus current threshold, the mowing controller 72e actively reduces a target rotational speed of the mowing electric motor 82. The better the bus current exceeds the bus current threshold, the lower the given target rotational speed. When the bus current is less than or equal to the bus current threshold, the target rotational speed input by the user is maintained. The bus current loop is added to a control strategy of the speed loop, and the target rotational speed of the mowing electric motor 82 is jointly determined according to the bus current and the user input.

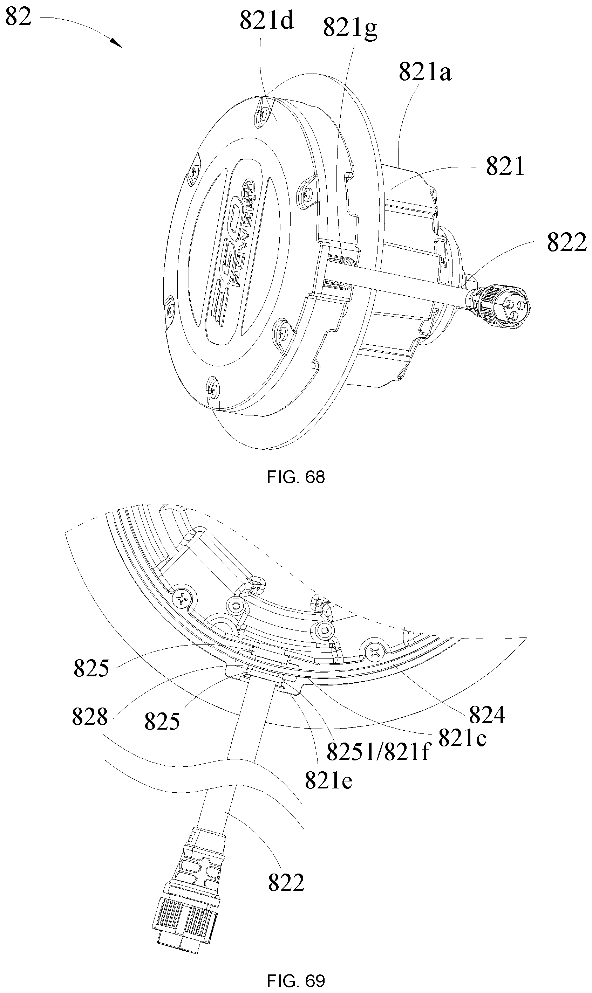

As shown in FIGS. 68 and 69, the mowing electric motor 82 includes a motor housing 821 and a cable 822. The motor housing 821 includes a motor housing body 821a and a motor housing cover 821d. The electric motor is formed with a harness hole 821g that allows the cable 822 to penetrate through. In this example, the motor housing body 821a includes a support portion 821e for accommodating the cable 822, and the support portion 821e formed on the motor housing body 821a is provided with an opening on a side surface from which the cable 822 extends out, so as to facilitate mold manufacturing.

The harness hole 821g is disposed on the support portion 821e, and the support portion 821e has a certain length in an axial direction along which the harness extends out. A waterproof sleeve 825 is sleeved on the cable 822. For example, two waterproof sleeves 825 disposed on the cable 822 are separately fitted with two ends of the support portion 821e, that is, one waterproof sleeve 825 is disposed on a side of the support portion 821e facing the inside of the motor housing 821, and one waterproof sleeve 825 is disposed on a side of the support portion 821e facing the outside. A fitting structure mating with the support portion 821e is provided on the outer periphery of the waterproof sleeve 825. Optionally, a flange 8251 is provided on the outer periphery of the waterproof sleeve 825, and a groove 821f is provided opposite the flange 8251 and on the inner side of the support portion 821e.

The motor housing body 821a and the motor housing cover 821d are connected by fasteners or fastening structures. The motor housing cover 821d is plate-shaped, and the motor housing body 821a is provided with an opening on one side, which needs to be covered and sealed by the motor housing cover. A sealing groove 821c is provided along a circumferential direction of the opening of the motor housing body 821a, and an O-ring 824 is embedded into the sealing groove 821c. After the motor housing cover is pressed against the O-ring 824, the O-ring 824 fills the sealing groove 821c to achieve the waterproof sealing effect between the motor housing cover and the motor housing body 821a.

The O-ring 824 extends partially into the support portion 821e, and the O-ring 824 extends between the two waterproof sleeves 825. To ensure the waterproof effect, a waterproof sealant 828 is injected between the two waterproof sleeves 825, and the multi-layer waterproof design ensures the waterproof effect of the mowing electric motor 82.

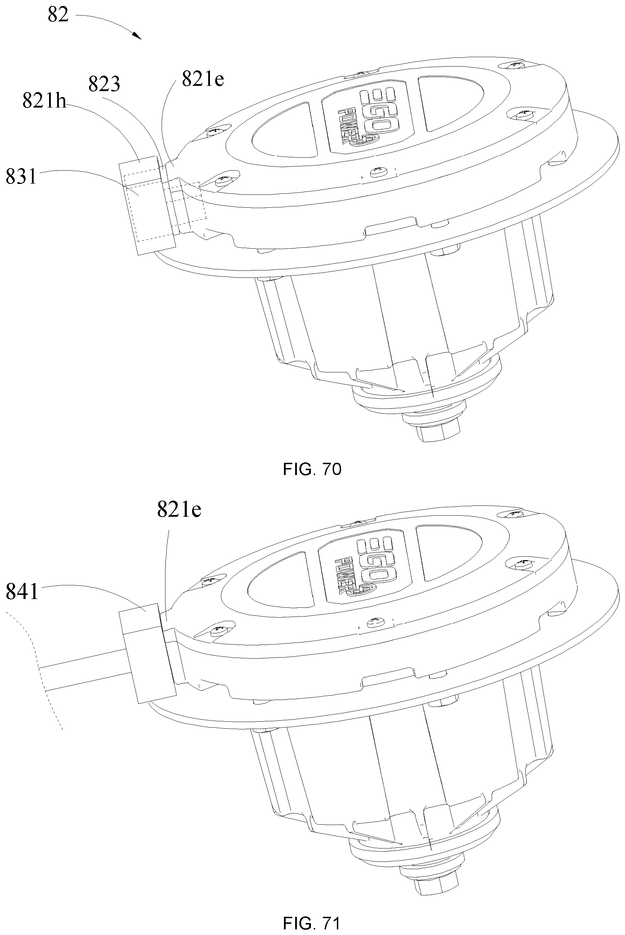

As shown in FIG. 70, another sealing manner of the cable of the mowing electric motor 82 is provided. A cover plate 821h is provided on the opening of the support portion 821e on the motor housing 821, the cover plate 821h is configured to cover the opening, and the harness hole 821g is formed on the cover plate 821h. A sealing gasket 823 is provided between the cover plate 821h and the support portion 821e.

In this example, a bidirectional terminal assembly 831 is formed on or connected to the cover plate 821h, and the bidirectional terminal assembly 831 includes a male connector and a female connector. A sealed space is formed between the cover plate 821h, the sealing gasket 823, and the motor housing body 821a, a connector at one end of the bidirectional terminal assembly 831 is disposed in the motor housing body 821a, and the other end of the bidirectional terminal assembly 831 is disposed outside and connected to the mowing controller 72e. The connector of the bidirectional terminal assembly 831 disposed in the motor housing body 821a is connected to the cable of the electric motor.

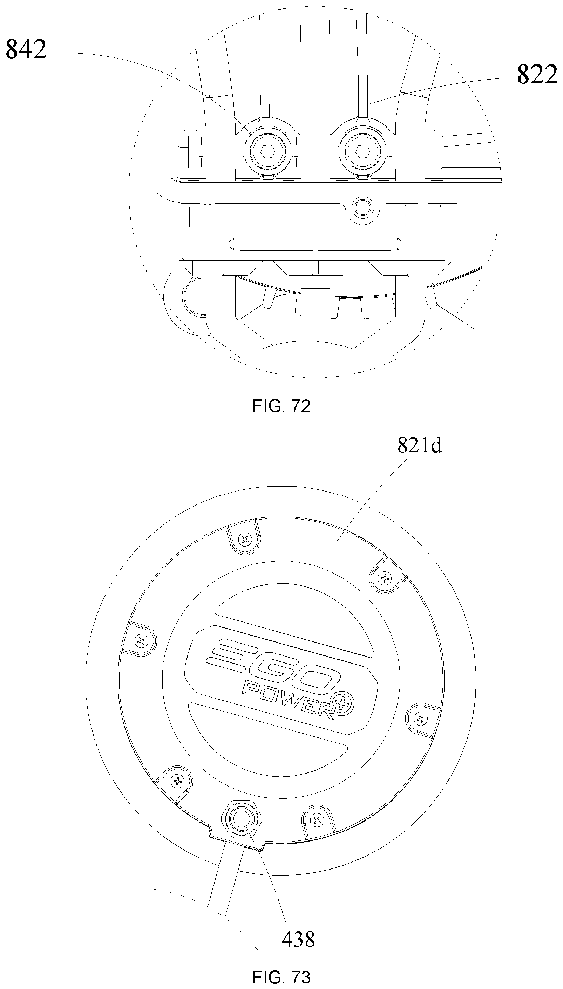

As shown in FIGS. 71 and 72, another sealing manner of the cable of the mowing electric motor 82 is provided. The harness hole 821g that allows an external cable to penetrate through is disposed on the support portion 821e on the motor housing 821, a waterproof cable gland 841 is sleeved on the external cable, and the cable gland 841 is sealingly connected to the harness hole 821g. The external cable and the cable 822 in the electric motor are fixedly mounted to a terminal block 842, and the terminal block 842 is fixed in the motor housing body 821a in a screw fastening manner and located in an accommodation space. The terminal block 842 is provided with terminal posts, and the external cable and the internal cable 822 are fixed to the terminal posts by nuts to be electrically connected.

As shown in FIG. 73, the motor housing cover 821d is provided with a waterproof vent valve 438. The specific structure is similar to the connection manner of the walking electric motor 42, which is not described in detail here.

As shown in FIG. 60, in this example, the mowing assembly 80 includes multiple mowing blades 81 and respective mowing electric motors 82 for driving the mowing blades 81. That is to say, multiple mowing electric motors 82 are disposed. In some examples, the multiple mowing electric motors 82 have the same structure. The same mowing controller 72e performs circuit control on the multiple mowing electric motors 82. In some examples, an independent mowing controller 72e performs circuit control on each of the multiple mowing electric motors 82, that is, multiple MCUs are used and placed on different control circuit boards 71.

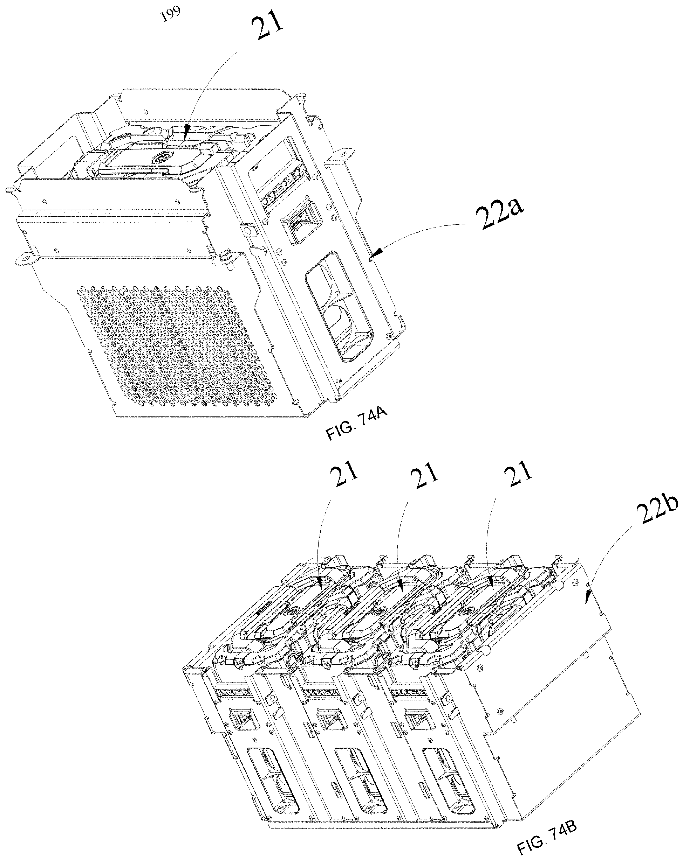

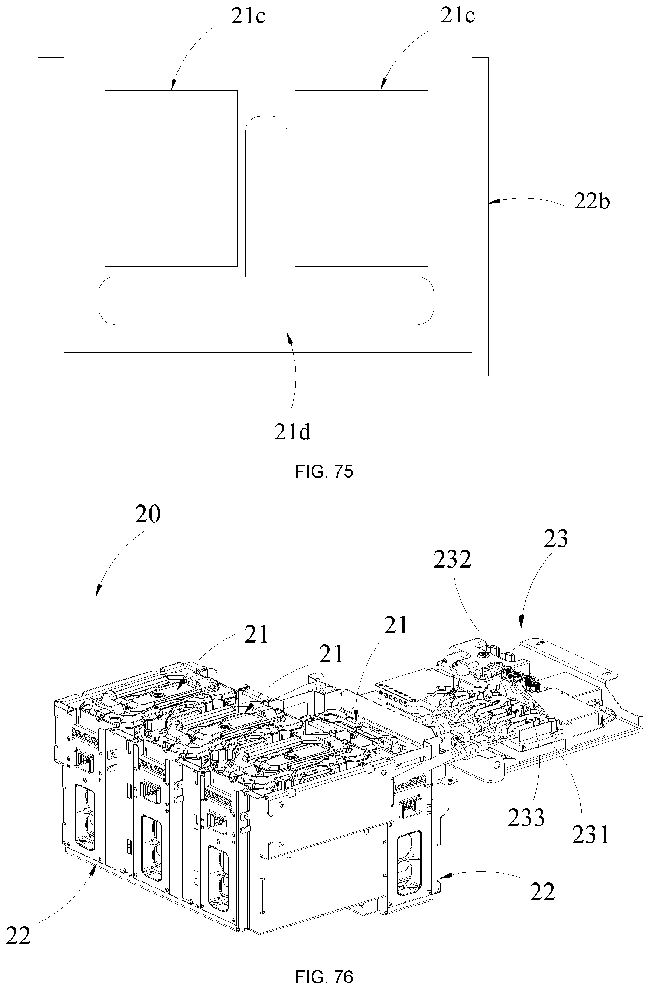

As shown in FIGS. 74A, 74B, and 76, in some examples, the connector of the power supply mechanism 20 includes a first connector 22a and a second connector 22b having different features in appearance. Specifically, the first connector 22a is configured to be electrically connected to one battery pack 21, and the second connector 22b is configured to be electrically connected to at least two battery packs 21. An external dimension of the second connector 22b is greater than an external dimension of the first connector 22a. In this manner, connectors 22 with different external dimensions and for mounting the battery packs 21 are provided to satisfy power requirements of different outdoor traveling devices 100. For example, for a push mower or snow thrower 100d, the power supply mechanism 20 may use the first connector 22a for mounting the battery pack. For a UTV 100c, multiple first connectors 22a each mounted with the battery pack 21 may be used, one or more second connectors 22b each mounted with at least two battery packs 21 may be used, or a combination of the first connector 22a and the second connector 22b may be used. In this manner, the connectors for mounting the battery packs are reasonably selected and arranged in conjunction with the power requirement and spatial features of the outdoor traveling device 100, thereby improving the versatility of the power supply mechanism 20 among various powered devices, making the power supply mechanism 20 applied in more scenarios, and providing convenience for the user.

In some examples, the connector 22 may be a battery compartment having an accommodation space and a coupling portion or another type of structure for mounting the battery pack 21 to the manned mower 200a. The battery compartment 22 is used hereinafter instead of the connector 22. Of course, the connector may have other features in appearance, for example, may be a base.

The whole battery pack 21 satisfies IPX7 waterproof and dustproof requirements, and the battery compartment satisfies an IPX5 waterproof requirement. An average discharge current of the battery pack 21 is greater than or equal to 30 A, which may be, for example, 30 A, 35 A, or 40 A. Optionally, the battery pack 21 may output a rated current greater than or equal to 120 A or an instantaneous peak current of about 350 A.

In this example, the weight of the battery pack 21 is greater than or equal to 9 kg. In an example, the weight of the battery pack 21 is greater than or equal to 10 kg, 11 kg, 12 kg, 13 kg, 14 kg, or 15 kg. For example, the weight of the battery pack 21 is 9 kg, 10 kg, 15 kg, or the like. The nominal voltage of the battery pack 21 is about 56 V, which may be, for example, 54 V or 58 V. In an example, the nominal voltage of the battery pack 21 is greater than or equal to 56 V, 50 V, 48 V, or 40 V. The capacity of the battery pack 21 is greater than or equal to 20 Ah. In an example, the capacity of the battery pack 21 is greater than or equal to 30 Ah, 40 Ah, or 50 Ah. For example, the capacity of the battery pack 21 may be 20 Ah, 30 Ah, 40 Ah, or 50 Ah. The ratio of the capacity to the weight of the battery pack 21 is greater than or equal to 2 Ah/kg, for example, 2 Ah/kg, 4 Ah/kg, or 5 Ah/kg. Optionally, the energy of the battery pack 21 is greater than or equal to 2 kWh. In an example, the energy of the battery pack 21 is greater than or equal to 3 kWh, 4 kWh, or 5 kWh. For example, the energy of the battery pack 21 may be 2 kWh, 3 kWh, 4 kWh, or 5 kWh. In some examples, the battery pack 21 disclosed in the present application may include lithium iron phosphate cells. In some examples, the battery pack 21 may be a supercapacitor, also referred to as an electrochemical capacitor. In some examples, the battery pack 21 disclosed in the present application may be a single-tab battery, double-tab battery, multi-tab battery, or full-tab battery.

In some examples, as shown in FIG. 75, a second battery compartment 22b can also be adapted to a third battery pack 21c different from the battery pack 21. Specifically, two third battery packs 21c are mounted to an adapter 21d and electrically connected to the adapter 21d, and the adapter 21d is electrically connected to a coupling portion of the second battery compartment 22b. The energy of the third battery pack 21c is greater than or equal to 0.1 kWh and less than 2 kWh. Optionally, the energy of the third battery pack 21c is greater than or equal to 0.1 kWh. In some examples, the energy of the third battery pack 21c is greater than or equal to 0.4 kWh. In some examples, the energy of the third battery pack 21c is greater than or equal to 0.6 kWh. In this example, the third battery pack 21c has lithium cells, is a nickel-cadmium battery, or is made of graphene or other materials, so as to achieve different combinations of battery characteristics.

With continued reference to FIG. 76, the power supply mechanism 20 further includes a power management module 23, the power management module 23 includes a housing 231, and all signal interfaces 232 and high-current interfaces 233 are directly made on the housing 231 with no additional harness, which can ensure that the power management module 23 achieves a waterproof rating of IPX5. Specifically, a wire terminal cap is added to a wire end of a high-current interface 233, and a waterproof rubber sleeve is added to a terminal post.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An outdoor traveling device (100), comprising:
a walking mechanism (40) comprising walking wheels (411L, 411R) and a walking motor (42) for driving a walking wheel of the walking wheels to rotate, wherein the walking motor comprises an output shaft (423);
a reduction mechanism (45) configured to convert and transmit torque of the walking motor to the walking wheel;
a parking brake mechanism (44) configured to brake rotation of the walking mechanism, wherein at least part of the parking brake mechanism is located between the walking motor and the reduction mechanism in an extension direction of the output shaft;
a controller (72) configured to control the parking brake mechanism to switch between a braking state for braking the walking mechanism and an unlocking state for releasing the walking mechanism from braking; and
a power supply mechanism (20) for supplying power to at least the walking mechanism and the parking brake mechanism;
wherein the controller is further configured to, when receiving a braking instruction, control the parking brake mechanism to enter the braking state; and in the braking state, acquire a current-related parameter of the walking motor and output a control signal for reversely rotating the walking motor to a driver circuit based on the current-related parameter to control the walking motor.

2. The outdoor traveling device according to claim 1, wherein the current-related parameter comprises a phase current of the walking motor, and the control signal for reversely rotating the walking motor is output when the phase current is greater than a set current threshold.

3. The outdoor traveling device according to claim 2, wherein the current threshold is greater than or equal to 50 A.

4. The outdoor traveling device according to claim 2, wherein the control signal for reversely rotating the walking motor is a fixed signal or a signal dynamically set based on the phase current.

5. The outdoor traveling device according to claim 1, wherein the parking brake mechanism comprises an electromagnetic brake (441) which enters the braking state when de-energized.

6. The outdoor traveling device according to claim 5, wherein the electromagnetic brake is disposed at an end of the output shaft facing the walking wheel.

7. The outdoor traveling device according to claim 5, wherein the walking motor comprises a first end cover (432) disposed on a side of a stator (421), and the reduction mechanism and the first end cover enclose a substantially sealed accommodation space for accommodating the electromagnetic brake.

8. The outdoor traveling device according to claim 1, wherein the controller is configured to, when receiving the braking instruction, control the driver circuit to short-circuit three phases of the walking motor.

9. The outdoor traveling device according to claim 1, wherein the braking instruction is output from an operation unit operated by a user.

10. The outdoor traveling device according to claim 1, wherein the braking instruction is output from the controller when the controller determines that the outdoor traveling device is faulty.

11. The outdoor traveling device according to claim 1, further comprising a detection assembly (74) configured to detect a phase current of the walking motor and comprising a current sensing resistor.

12. The outdoor traveling device according to claim 1, wherein the walking mechanism comprises a first walking mechanism (40a) and a second walking mechanism (40b), the parking brake mechanism comprises a first parking brake mechanism (44a) and a second parking brake mechanism (44b), the first parking brake mechanism is configured to brake rotation of the first walking mechanism, and the second parking brake mechanism is configured to brake rotation of the second walking mechanism.

13. The outdoor traveling device according to claim 12, wherein in the braking state, current-related parameters of walking motors in the first walking mechanism and the second walking mechanism are acquired, and control signals for reversely rotating both the walking motors are output to driver circuits based on any one of the current-related parameters to control the walking motors.

14. The outdoor traveling device according to claim 1, further comprising a human-machine interaction mechanism (60) comprising a display device (60a) configured to provide feedback to a user, wherein when the current-related parameter of the walking motor is abnormal in the braking state, the display device displays an anomaly alarm prompt that a braking function of the parking brake mechanism is abnormal.

15. The outdoor traveling device according to claim 1, wherein the outdoor traveling device comprises an electric mower or a utility terrain vehicle.
